(19) Europäisches Patentamt
European Patent Office
Office européen des brevets

(11) EP 4 156 366 A1

(12) **EUROPEAN PATENT APPLICATION**
published in accordance with Art. 153(4) EPC

(43) Date of publication:
**29.03.2023 Bulletin 2023/13**

(21) Application number: **21807917.6**

(22) Date of filing: **19.05.2021**

(51) International Patent Classification (IPC):
***H01M 10/0567*** *(2010.01)* ***C07F 7/12*** *(2006.01)*
***H01M 4/36*** *(2006.01)* ***H01M 4/38*** *(2006.01)*
***H01M 4/48*** *(2006.01)* ***H01M 4/505*** *(2010.01)*
***H01M 4/525*** *(2010.01)* ***H01M 10/052*** *(2010.01)*
***H01M 10/0568*** *(2010.01)*

(52) Cooperative Patent Classification (CPC):
**C07F 7/12; H01M 4/36; H01M 4/38; H01M 4/48; H01M 4/505; H01M 4/525; H01M 10/052; H01M 10/0567; H01M 10/0568;** Y02E 60/10

(86) International application number:
**PCT/JP2021/019078**

(87) International publication number:
**WO 2021/235505 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2020 JP 2020087158**

(71) Applicants:
- **Mitsubishi Chemical Corporation**
**Chiyoda-ku**
**Tokyo 100-8251 (JP)**
- **MU Ionic Solutions Corporation**
**Tokyo 100-8251 (JP)**

(72) Inventors:
- **NAKAZAWA, Eiji**
**Tokyo 100-8251 (JP)**
- **TAMAI, Kaho**
**Tokyo 100-8251 (JP)**

(74) Representative: **Hoffmann Eitle**
**Patent- und Rechtsanwälte PartmbB**
**Arabellastraße 30**
**81925 München (DE)**

# (54) NONAQUEOUS ELECTROLYTIC SOLUTION AND NONAQUEOUS ELECTROLYTIC SOLUTION BATTERY

(57) Provided are: a nonaqueous electrolytic solution for a nonaqueous electrolytic solution battery including a positive electrode and a negative electrode that are capable of occluding and releasing metal ions, which nonaqueous electrolytic solution is characterized by containing a compound represented by Formula (1) along with an alkali metal salt and a nonaqueous solvent. In Formula (1), $R^1$ represents a hydrogen atom, a halogen atom, or a monovalent hydrocarbon group optionally having a substituent; $R^2$ represents a hydrogen atom, a monovalent hydrocarbon group optionally having a substituent, or an alkoxy group optionally having a substituent; $X^1$ represents a divalent hydrocarbon group optionally having a substituent; $n^1$ represents 2 or 3; $p^1$ represents an integer of 0 to 2, $q^1$ represents an integer of 1 to 3, and $p^1 + q^1 = 2$ or 3; two of $R^1$ (s) and $X^1$ (s) are optionally bound to each other to form a ring; and $A^1$ represents a divalent or trivalent atomic group represented by the following Formula (2-1), or a trivalent atomic group represented by the following Formula (3-1).

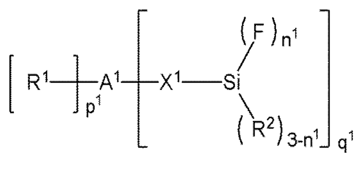

(1)

EP 4 156 366 A1

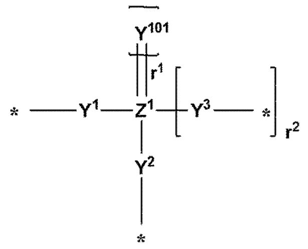

(2-1)

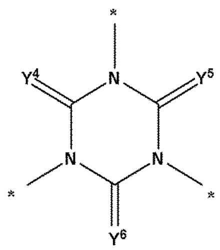

(3-1)

## Description

TECHNICAL FIELD

The present invention relates to a nonaqueous electrolytic solution and a nonaqueous electrolytic solution battery. More particularly, the present invention relates to: a nonaqueous electrolytic solution containing a specific compound in a specific amount; and a nonaqueous electrolytic solution battery using the same.

BACKGROUND ART

Nonaqueous electrolytic solution batteries such as lithium secondary batteries have been put into practical use in a wide range of applications including power sources for so-called consumer small hardware, for example, portable phones such as smartphones and laptop computers, as well as vehicle-mounted power sources for driving electric vehicles and the like.

As means for improving the properties of a nonaqueous electrolytic solution battery, numerous studies have been conducted in the fields of the active materials of positive and negative electrodes as well as the additives of nonaqueous electrolytic solutions.

For example, Patent Document 1 discloses a specific organosilicon compound containing an organic polar group, the use of which as a liquid electrolyte solvent can provide a lithium ion battery with effects of improved safety and the like attributed to an improvement in the thermal stability at high temperature and an increase in the electrolyte flash point.

Patent Document 2 discloses a study where the cycle characteristics and the resistance increase rate are improved by an addition of a monofluorosilane compound containing a specific organic group.

Patent Documents 3 and 4 disclose studies where the high-temperature cycle capacity retention rate is improved by an addition of a specific organosilicon compound, which has a structure containing an organic group such as a cyano group, an isocyanato group, or an isothiocyanato group, to a nonaqueous electrolytic solution.

Patent Document 5 discloses a study where the capacity retention rate and an increase in the resistance during a long-term use or high-temperature storage are improved by an addition of a specific fluorosilane compound to a nonaqueous electrolytic solution.

RELATED ART DOCUMENTS

PATENT DOCUMENTS

[Patent Document 1] Japanese Unexamined Patent Application Publication (Translation of PCT Application) No. 2017-538667
[Patent Document 2] WO 2018/220997
[Patent Document 3] Japanese Unexamined Patent Application Publication (Translation of PCT Application) No. 2016-520647
[Patent Document 4] Japanese Unexamined Patent Application Publication No. 2018-46021
[Patent Document 5] Japanese Unexamined Patent Application Publication No. 2009-004352

SUMMARY OF THE INVENTION

PROBLEMS TO BE SOLVED BY THE INVENTION

In recent years, improvement in the capacities of lithium batteries has been accelerated for, for example, power sources to be mounted on electric vehicles and power sources for portable phones such as smart phones, and the ratio of voids inside these batteries has been reduced as compared to before. Therefore, a large amount of gas generation during storage of a lithium battery in a high-temperature environment and extensive swelling of an electrode in repeated charging and discharging are crucial drawbacks.

A first problem of the present invention is to provide: a nonaqueous electrolytic solution that can reduce the amount of gas generation during high-temperature storage of a nonaqueous electrolytic solution battery; a nonaqueous electrolytic solution battery including the nonaqueous electrolytic solution; and a compound used in the nonaqueous electrolytic solution. The "amount of gas generation" means the amount of gas generated by decomposition of a solvent and additives, which are components of an electrolytic solution, on an electrode.

Further, a second problem of the present invention is to provide a nonaqueous electrolytic solution battery in which swelling is inhibited. Swelling of a battery is an index that reflects swelling of an active material itself during occlusion and release of $Li^+$ to and from the active material due to charging and discharging.

MEANS FOR SOLVING THE PROBLEMS

The present inventors intensively studied to solve the above-described first problem and consequently arrived at using a nonaqueous electrolytic solution containing a compound represented by Formula (1) to reduce the amount of gas generation during high-temperature storage of a nonaqueous electrolytic solution battery, thereby completing a first aspect of the present invention.

Further, the present inventors intensively studied to solve the above-described second problem and consequently arrived at using a nonaqueous electrolytic solution containing a compound represented by Formula (1) in combination with a negative electrode containing a specific negative electrode active material to inhibit swelling of a nonaqueous electrolytic solution battery, thereby completing a second aspect of the present invention.

That is, the first aspect of the present invention provides the following specific modes.

<A1> A nonaqueous electrolytic solution for a nonaqueous electrolytic solution battery including a positive electrode and a negative electrode that are capable of occluding and releasing metal ions,

wherein the nonaqueous electrolytic solution contains a compound represented by the following Formula (1) along with an alkali metal salt and a nonaqueous solvent:

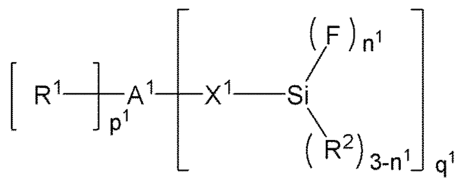

(1)

(wherein, $R^1$ represents a hydrogen atom, a halogen atom, or a monovalent hydrocarbon group optionally having a substituent; $R^2$ represents a hydrogen atom, a monovalent hydrocarbon group optionally having a substituent, or an alkoxy group optionally having a substituent; $X^1$ represents a divalent hydrocarbon group optionally having a substituent; $n^1$ represents 2 or 3; $p^1$ represents an integer of 0 to 2, $q^1$ represents an integer of 1 to 3, and $p^1 + q^1 = 2$ or 3; two of $R^1$ (s) and $X^1$ (s) are optionally bound to each other to form a ring; and $A^1$ represents a divalent or trivalent atomic group represented by the following Formula (2-1), or a trivalent atomic group represented by the following Formula (3-1))

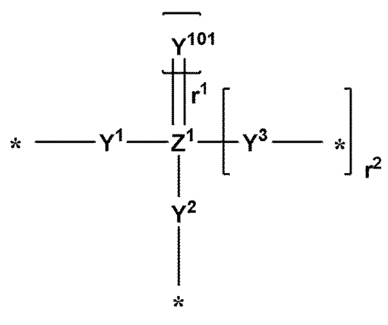

(2-1)

(wherein, $Z^1$ represents a carbon atom, a sulfur atom, a phosphorus atom, or a boron atom; $Y^{101}$ represents an oxygen atom or a sulfur atom; $Y^1$, $Y^2$, and $Y^3$ each independently represent a single bond, an oxygen atom, a sulfur atom, or $NR^{101}$; $R^{101}$ represents a hydrogen atom or a monovalent hydrocarbon group; when $R^{101}$ is a monovalent hydrocarbon group, this $R^{101}$ is optionally bound to one of $R^1$ and $X^1$ in Formula (1) to form a ring; $r^1$ is 1 when $Z^1$ is a carbon atom; 0, 1, or 2 when $Z^1$ is a sulfur atom; 0 or 1 when $Z^1$ is a phosphorus atom; or 0 when $Z^1$ is a boron atom;

$r^2$ is 0 when $Z^1$ is a carbon atom or a sulfur atom, or 1 when $Z^1$ is a phosphorus atom or a boron atom; and * represents a binding site with $R^1$ or $X^1$ in Formula (1),

with a proviso that, when $Z^1$ is a sulfur atom and $r^1$ is 2, $Y^1$ and $Y^2$ are not single bonds simultaneously)

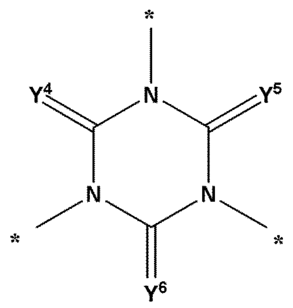

(3-1)

(wherein, $Y^4$, $Y^5$, and $Y^6$ each independently represent an oxygen atom, a sulfur atom, or $NR^{201}$; $R^{201}$ represents a hydrogen atom or a monovalent hydrocarbon group; and * represents a binding site with $R^1$ or $X^1$ in Formula (1)).

<A2> The nonaqueous electrolytic solution according to <A1>, wherein Formula (2-1) is the following Formula (2-2):

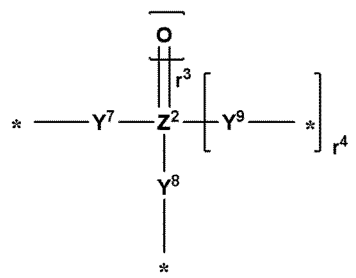

(2-2)

(wherein, $Z^2$ represents a carbon atom, a sulfur atom, or a phosphorus atom; $Y^7$, $Y^8$, and $Y^9$ each independently represent a single bond or an oxygen atom;
$r^3$ is 1 when $Z^2$ is a carbon atom; 0, 1, or 2 when $Z^2$ is a sulfur atom; or 0 or 1 when $Z^2$ is a phosphorus atom;
$r^4$ is 0 when $Z^2$ is a carbon atom or a sulfur atom, or 1 when $Z^2$ is a phosphorus atom; and
* represents a binding site with $R^1$ or $X^1$ in Formula (1),
with a proviso that, when $Z^2$ is a sulfur atom and $r^3$ is 2, $Y^7$ and $Y^8$ are not single bonds simultaneously).

<A3> The nonaqueous electrolytic solution according to <A1> or <A2>, wherein Formula (3-1) is the following Formula (3-2) :

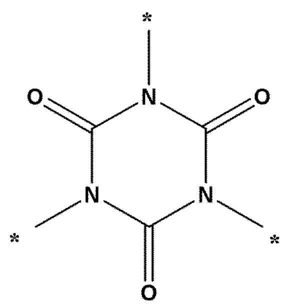

(3-2)

(wherein, * represents a binding site with $R^1$ or $X^1$ in Formula (1)).
<A4> The nonaqueous electrolytic solution according to any one of <A1> to <A3>, wherein the content of the compound represented by Formula (1) is 0.001 to 10% by mass with respect to a total amount of the nonaqueous electrolytic solution.
<A5> The nonaqueous electrolytic solution according to any one of <A1> to <A4>, further containing one or more compounds selected from the group consisting of fluorophosphates, salts having an $FSO_2$ skeleton, and oxalates, wherein a total content of the compounds is 0.001 to 5% by mass with respect to a total amount of the nonaqueous electrolytic solution.
<A6> A nonaqueous electrolytic solution battery, including: a positive electrode; a negative electrode; and a nonaqueous electrolytic solution,
wherein the nonaqueous electrolytic solution is the nonaqueous electrolytic solution according to any one of <A1>

to <A5>.
<A7> The nonaqueous electrolytic solution battery according to <A6>, wherein

the positive electrode contains a positive electrode active material, and
the positive electrode active material is a metal oxide represented by the following composition formula (13):

$$Li_{a1}Ni_{b1}M1_{c1}O_2 \qquad (13)$$

(wherein, a1, b1, and c1 represent numerical values satisfying $0.90 \le a1 \le 1.10$, $0.40 \le b1 \le 0.98$, and $0.00 \le c1 \le 0.50$, respectively, and satisfy $b1 + c1 = 1$; and M1 represents at least one element selected from the group consisting of Co, Mn, Al, Mg, Zr, Fe, Ti, and Er).

<A8> The nonaqueous electrolytic solution battery according to <A6> or <A7>, wherein

the negative electrode contains a negative electrode active material capable of occluding and releasing metal ions, and
the negative electrode active material contains a material containing a Li-alloyable metal element and/or metalloid element.

<A9> The nonaqueous electrolytic solution battery according to <A8>, wherein the material containing a Li-alloyable metal element and/or metalloid element is Si metal or Si oxide.
<A10> A compound represented by the following Formula (1-4) :

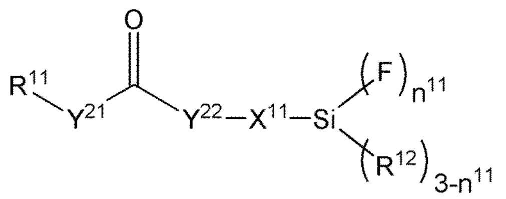

(1-4)

(wherein, $R^{11}$ represents a hydrogen atom, a halogen atom, or a monovalent hydrocarbon group optionally having a substituent; $R^{12}$ represents a hydrogen atom or a monovalent hydrocarbon group optionally having a substituent; $X^{11}$ represents a divalent hydrocarbon group having 3 or more carbon atoms and optionally having a substituent; $Y^{21}$ and $Y^{22}$ each independently represent a single bond, an oxygen atom, a sulfur atom, or $NR^{301}$; $R^{301}$ represents a hydrogen atom or a monovalent hydrocarbon group; when $R^{301}$ is a monovalent hydrocarbon group, this $R^{301}$ is optionally bound to one of $R^{11}$ and $X^{11}$ to form a ring; $n^{11}$ represents 2; and two of $R^1$ and $X^{11}$ are optionally bound to each other to form a ring, with a proviso that $n^{11}$ is optionally 3 when $Y^{21}$ and $Y^{22}$ are oxygen atoms and $R^{11}$ and $X^{11}$ are not bound to each other to form a ring).
<A11> The compound according to <A10>, which is a compound selected from the group consisting of the following Formulae (1-4-1) to (1-4-4):

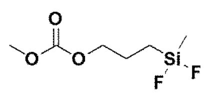

(1-4-1)

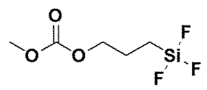

(1-4-2)

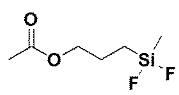

(1-4-3)

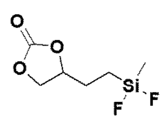

(1-4-4)

<A12> A compound represented by the following Formula (1-5) :

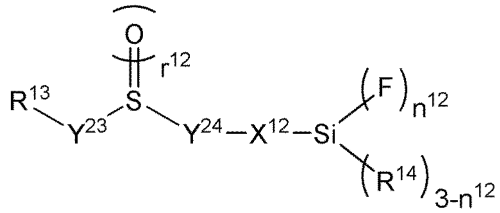

(1-5)

(wherein, $R^{13}$ represents a hydrogen atom, a halogen atom, or a monovalent hydrocarbon group optionally having a substituent; $R^{14}$ represents a hydrogen atom or a monovalent hydrocarbon group optionally having a substituent; $X^{12}$ represents a divalent hydrocarbon group having 3 or more carbon atoms and optionally having a substituent; $Y^{23}$ and $Y^{24}$ each independently represent a single bond, an oxygen atom, a sulfur atom, or $NR^{311}$; $R^{311}$ represents a hydrogen atom or a monovalent hydrocarbon group; when $R^{311}$ is a monovalent hydrocarbon group, this $R^{311}$ is optionally bound to one of $R^{13}$ and $X^{12}$ to form a ring; $r^{12}$ represents 0, 1, or 2; $n^{12}$ represents 2 or 3; and two of $R^{13}$ and $X^{12}$ are optionally bound to each other to form a ring).

<A13> The compound according to <A12>, which is a compound selected from the group consisting of the following Formulae (1-5-1) and (1-5-2):

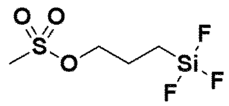

(1-5-1)

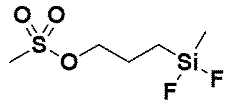

(1-5-2)

<A14> A compound represented by the following Formula (1-6) :

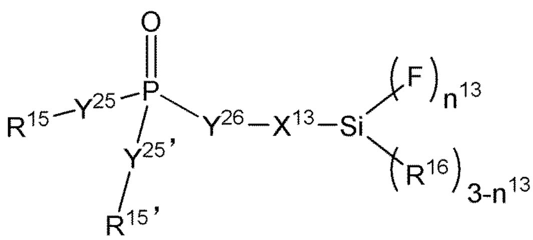

(1-6)

(wherein, $R^{15}$ and $R^{15'}$ each independently represent a hydrogen atom, a halogen atom, or a monovalent hydrocarbon group optionally having a substituent; $R^{16}$ represents a hydrogen atom or a monovalent hydrocarbon group optionally having a substituent; $X^{13}$ represents a divalent hydrocarbon group having 3 or more carbon atoms and optionally having a substituent; $Y^{25}$, $Y^{25'}$, and $Y^{26}$ each independently represent a single bond, an oxygen atom, a sulfur atom, or $NR^{321}$; $R^{321}$ represents a hydrogen atom or a monovalent hydrocarbon group; when $R^{321}$ is a monovalent hydrocarbon group, this $R^{321}$ is optionally bound to any one of $R^{15}$, $R^{15'}$, and $X^{13}$ to form a ring; $n^{13}$ represents 2 or 3; and two of $R^{15}$ and $X^{13}$ are optionally bound to each other to form a ring).

<17> The compound according to <16>, which is a compound selected from the group consisting of the following Formulae (1-6-1) to (1-6-3) :

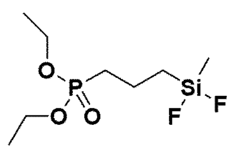

(1-6-1)

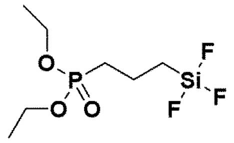

(1-6-2)

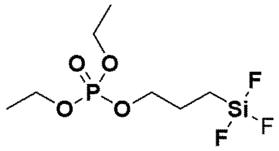

(1-6-3)

Further, the second aspect of the present invention provides the following specific modes.

<B1> A nonaqueous electrolytic solution battery, including: a positive electrode and a negative electrode that are capable of occluding and releasing metal ions; and a nonaqueous electrolytic solution,
wherein

a negative electrode active material contained in the negative electrode contains a material containing a Li-alloyable metal element and/or metalloid element, and
the nonaqueous electrolytic solution contains an alkali metal salt, a nonaqueous solvent, and a compound represented by the following Formula (4):

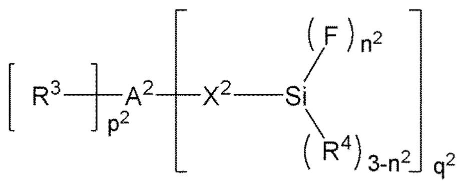

(4)

(wherein, $R^3$ represents a hydrogen atom, a halogen atom, or a monovalent hydrocarbon group optionally having a substituent; $R^4$ represents a hydrogen atom, a monovalent hydrocarbon group optionally having a substituent, or an alkoxy group optionally having a substituent; $X^2$ represents a divalent hydrocarbon group optionally having a substituent; $n^2$ represents an integer of 1 to 3; $p^2$ represents an integer of 0 to 2, $q^2$ represents an integer of 1 to 3, and $p^2 + q^2 = 2$ or 3; two of $R^3$ (s) and $X^2$ (s) are optionally bound to each other to form a ring; and $A^2$ represents a divalent or trivalent atomic group represented by the following Formula (5-1), or a trivalent atomic group represented by the following Formula (6-1))

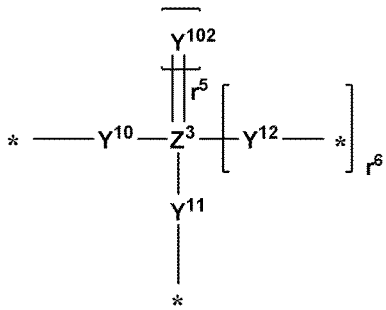

(5-1)

(wherein, $Z^3$ represents a carbon atom, a sulfur atom, or a phosphorus atom; $Y^{102}$ represents an oxygen atom or a sulfur atom; $Y^{10}$, $Y^{11}$, and $Y^{12}$ each independently represent a single bond, an oxygen atom, a sulfur atom, or $NR^{102}$; $R^{13}$ represents a hydrogen atom or a monovalent hydrocarbon group; when $R^{102}$ is a monovalent hydrocarbon group, this $R^{102}$ is optionally bound to one of $R^3$ and $X^2$ in Formula (2) to form a ring;
$r^5$ is 1 when $Z^3$ is a carbon atom; 0, 1, or 2 when $Z^3$ is a sulfur atom; or 0 or 1 when $Z^3$ is a phosphorus atom;
$r^6$ is 0 when $Z^3$ is a carbon atom or a sulfur atom, or 1 when $Z^3$ is a phosphorus atom; and
* represents a binding site with $R^3$ or $X^2$ in Formula (4),
with a proviso that, when $Z^1$ is a sulfur atom and $r^5$ is 2, $Y^{10}$ and $Y^{11}$ are not single bonds simultaneously)

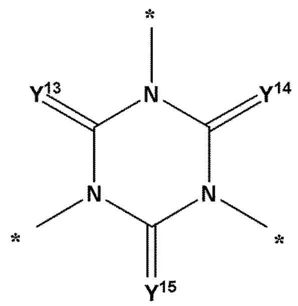

(6-1)

(wherein, $Y^{13}$, $Y^{14}$, and $Y^{15}$ each independently represent an oxygen atom, a sulfur atom, or $NR^{202}$; $R^{202}$ represents a hydrogen atom or a monovalent hydrocarbon group; and * represents a binding site with $R^3$ or $X^2$ in Formula (4)).

<B2> The nonaqueous electrolytic solution battery according to <B1>, wherein $n^2$ in Formula (4) is 2 or 3.

EFFECTS OF THE INVENTION

According to the first aspect of the present invention, the followings can be obtained: a nonaqueous electrolytic solution that is excellent in reducing the amount of gas generation during high-temperature storage of a nonaqueous electrolytic solution battery; a nonaqueous electrolytic solution battery including the nonaqueous electrolytic solution; and a compound used in the nonaqueous electrolytic solution.

Further, according to the second aspect of the present invention, a nonaqueous electrolytic solution battery in which swelling is inhibited can be obtained.

MODE FOR CARRYING OUT THE INVENTION

Embodiments of the present invention will now be described in detail. The below-described embodiments are merely examples (representative examples) of the present invention, and the present invention is not limited thereto. Further, modifications can be arbitrarily made to carry out the present invention, without departing from the gist of the present invention.

In the present specification, those ranges stated with "to" each denote a range that includes the numbers stated before and after "to".

Further, in the present specification, the term "independent", "independently" or the like used for describing two or more subjects together means that the two or more subjects may be the same or different from each other.

<A. First Embodiment>

<A1. Nonaqueous Electrolytic Solution>

The nonaqueous electrolytic solution according to the first aspect (embodiment) of the present invention contains the below-described compound represented by Formula (1).

The mechanism in which a reduction in the amount of gas generation during high-temperature storage of a nonaqueous electrolytic solution battery is enhanced by using the nonaqueous electrolytic solution containing the compound represented by Formula (1) is not clear; however, it is presumed as follows.

The compound represented by Formula (1) contains, in its molecule, a divalent or trivalent atomic group having at least one atom selected from an oxygen atom, a nitrogen atom, a sulfur atom, a phosphorus atom, and a boron atom. This atomic group is a polar group; therefore, the compound represented by Formula (1) tends to interact with carbon and the like on the surface of a negative electrode active material and be thereby localized in the vicinity of the surface of the negative electrode active material. In addition, the compound represented by Formula (1) has, in its molecule, a structure in which two or more fluorine (F) atoms are bound to a silicon (Si) atom. When two or more F atoms are bound to a Si atom, the electron density of the Si atom is markedly reduced as compared to a case where a single F atom is bound to the Si atom. Since this leads to an increase in the reaction activity of the Si atom of the compound represented by Formula (1), for example, electrochemical reduction and a reaction with a reductive decomposition product of an electrolytic solution readily proceed. As a result, an insulating coating film is formed on the negative electrode active material and, for example, the surface is modified in a preferred manner when Si is used in the negative electrode active material. In addition, it is presumed that the compound represented by Formula (1) is also concentrated on the surface

of a positive electrode and undergoes electrochemical oxidation and a reaction with an oxidative decomposition product of the electrolytic solution to form an insulating coating film in the same manner as on a negative electrode.

From the above, the present inventors believe that the compound represented by Formula (1) contributes to a reduction in the amount of gas generation during high-temperature storage.

<A1-1. Compound Represented by Formula (1)>

The nonaqueous electrolytic solution according to one embodiment of the present invention is characterized by containing a compound represented by the following Formula (1) .

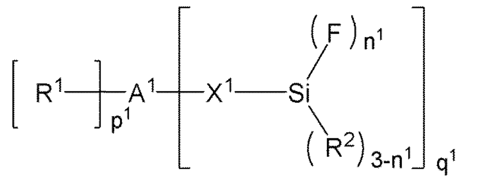

(1)

In Formula (1), $R^1$ represents a hydrogen atom, a halogen atom, or a monovalent hydrocarbon group optionally having a substituent; $R^2$ represents a hydrogen atom, a monovalent hydrocarbon group optionally having a substituent, or an alkoxy group optionally having a substituent; $X^1$ represents a divalent hydrocarbon group optionally having a substituent; $n^1$ represents 2 or 3; $p^1$ represents an integer of 0 to 2, $q^1$ represents an integer of 1 to 3, and $p^1 + q^1 = 2$ or 3; two of $R^1$(s) and $X^1$(s) are optionally bound to each other to form a ring; and $A^1$ represents a divalent or trivalent atomic group represented by the below-described Formula (2-1), or a trivalent atomic group represented by the below-described Formula (3-1).

($R^1$)

$R^1$ according to Formula (1) represents a hydrogen atom, a halogen atom, or a monovalent hydrocarbon group optionally having a substituent.

From the standpoint of the ease of industrially handling the compound represented by Formula (1) at the time of producing and storing the compound as well as at the time of producing an electrolytic solution, $R^1$ is preferably a monovalent hydrocarbon group having 1 to 12 carbon atoms and optionally having a substituent. It is noted here that, when the hydrocarbon group has a substituent, the number of carbon atoms contained in the substituent is not included in the number of carbon atoms of the hydrocarbon group.

Further, from the standpoint of forming the above-described insulating coating film in a preferred manner, $R^1$ is also preferably a halogen atom.

Specific examples of the halogen atom include a fluorine atom, a chlorine atom, a bromine atom, and an iodine atom, and the halogen atom is preferably a fluorine atom.

Specific examples of the monovalent hydrocarbon group include an alkyl group, an alkenyl group, an alkynyl group, an aryl group, and an aralkyl group. Thereamong, from the standpoint of inhibiting a side reaction of the compound represented by Formula (1) on an electrode, the monovalent hydrocarbon group is preferably an alkyl group, an alkenyl group, or an alkynyl group, more preferably an alkyl group or an alkenyl group, particularly preferably an alkyl group.

Examples of the alkyl group include linear alkyl groups, branched alkyl groups, and alkyl groups having a cyclic structure. Thereamong, linear alkyl groups are preferred from the standpoint of forming the above-described insulating coating film in a preferred manner.

Specific examples of the linear alkyl groups include linear alkyl groups having 1 to 12 carbon atoms, such as a methyl group, an ethyl group, an *n*-propyl group, an *n*-butyl group, an *n*-pentyl group, an *n*-hexyl group, an *n*-heptyl group, an *n*-octyl group, an *n*-nonyl group, an *n*-decyl group, an *n*-undecyl group, and an *n*-dodecyl group. Thereamong, linear alkyl groups having 1 to 6 carbon atoms are preferred, and linear alkyl groups having 1 to 4 carbon atoms are particularly preferred.

Specific examples of the branched alkyl groups include branched alkyl groups having 1 to 12 carbon atoms, such as a methylethyl group, a methylpropyl group, a methylbutyl group, a methylpentyl group, a methylhexyl group, a methylheptyl group, a methyloctyl group, a methylnonyl group, a methyldecyl group, a methylundecyl group, a dimethylethyl group (a tert-butyl group), a dimethylpropyl group, a dimethylbutyl group, a dimethylpentyl group, a dimethylhexyl group, a dimethylheptyl group, a dimethyloctyl group, a trimethylhexyl group, a trimethylheptyl group, an ethylpentyl group, an ethylhexyl group, an ethylheptyl group, an ethyloctyl group, a propylhexyl group, a propylheptyl group, and a butylhexyl group. Thereamong, branched alkyl groups having 1 to 6 carbon atoms, such as a methylethyl group, a methylpropyl group, a methylbutyl group, a methylpentyl group, a dimethylethyl group (a *tert*-butyl group), a dimethylpropyl

group, and a dimethylbutyl group are preferred, and branched alkyl groups having 1 to 4 carbon atoms, such as a methylethyl group, a methylpropyl group, and a dimethylethyl group (a *tert*-butyl group) are particularly preferred. It is noted here that, in the above-exemplified branched alkyl groups, the position of a branch is arbitrary.

Specific examples of the alkyl groups having a cyclic structure include alkyl groups having a cyclic structure having 3 to 12 carbon atoms, such as a cyclopropyl group, a cyclobutyl group, a cyclopentyl group, a cyclohexyl group, a cycloheptyl group, a cyclooctyl group, a cyclononyl group, a cyclodecyl group, a cyclohexylmethyl group, a cyclohexylethyl group, a methylcyclohexyl group, a dimethylcyclohexyl group, an ethylcyclohexyl group, and a methylcyclohexylmethyl group. Thereamong, alkyl groups having a cyclic structure having 3 to 8 carbon atoms, such as a cyclopropyl group, a cyclobutyl group, a cyclopentyl group, a cyclohexyl group, a cycloheptyl group, a cyclooctyl group, a cyclocyclohexylmethyl group, a cyclohexylethyl group, a methylcyclohexyl group, a dimethylcyclohexyl group, an ethylcyclohexyl group, and a methylcyclohexylmethyl group are preferred, and alkyl groups having a cyclic structure having 6 to 8 carbon atoms, such as a cyclohexyl group, a cyclohexylmethyl group, a cyclohexylethyl group, a methylcyclohexyl group, a dimethylcyclohexyl group, an ethylcyclohexyl group, and a methylcyclohexylmethyl group are particularly preferred.

Among the above-exemplified alkyl groups, a methyl group, an ethyl group, an n-propyl group, an n-butyl group, a tert-butyl group, an n-pentyl group, and an n-hexyl group are preferred, a methyl group, an ethyl group, an n-propyl group, an n-butyl group, and a *tert*-butyl group are more preferred, and a methyl group and an ethyl group are particularly preferred. When the monovalent hydrocarbon group is any of these alkyl groups, the compound represented by Formula (1) tends to be localized in the vicinity of the surface of a positive electrode active material and/or the vicinity of the surface of a negative electrode active material, which is preferred.

Specific examples of the alkenyl group include alkenyl groups having 2 to 12 carbon atoms, such as a vinyl group, an allyl group, an isopropenyl group, a methallyl group, a 2-butenyl group, a 3-methyl-2-butenyl group, a 3-butenyl group, and a 4-pentenyl group. Thereamong, the alkenyl group is preferably an alkenyl group having 2 to 6 carbon atoms, such as a vinyl group, an allyl group, a methallyl group, or a 2-butenyl group, more preferably an alkenyl group having 2 to 4 carbon atoms, such as a vinyl group, an allyl group, or a methallyl group, particularly preferably a vinyl group or an allyl group. When the monovalent hydrocarbon group is any of the above-exemplified alkenyl groups, the compound represented by Formula (1) forms an insulating coating film in a preferred manner on the surface of a positive electrode active material and/or the surface of a negative electrode active material, which is preferred.

Specific examples of the alkynyl group include alkynyl groups having 1 to 12 carbon atoms, such as an ethynyl group, a 2-propynyl group, a 2-butynyl group, a 3-butynyl group, a 4-pentynyl group, and a 5-hexynyl group. Thereamong, the alkynyl group is preferably an alkynyl group having 1 to 6 carbon atoms, such as an ethynyl group, a 2-propynyl group, a 2-butynyl group, or a 3-butynyl group, more preferably an alkynyl group having 2 to 4 carbon atoms, such as a 2-propynyl group or a 3-butynyl group, particularly preferably a 2-propynyl group. When the monovalent hydrocarbon group is any of the above-exemplified alkynyl groups, the compound represented by Formula (1) forms an insulating coating film in a preferred manner on the surface of a positive electrode active material and/or the surface of a negative electrode active material, which is preferred.

Specific examples of the aryl group include aryl groups having 6 to 12 carbon atoms, such as a phenyl group, a tolyl group, and a mesityl group. Thereamong, the aryl group is preferably an aryl group having 6 to 7 carbon atoms, such as a phenyl group or a tolyl group, particularly preferably a phenyl group, since this makes the compound represented by Formula (1) tend to be localized in the vicinity of the surface of a positive electrode active material and/or the vicinity of the surface of a negative electrode active material.

Examples of the aralkyl group include aralkyl groups having 7 to 12 carbon atoms, such as a phenylmethyl group (a benzyl group), a phenylethyl group (a phenethyl group), a phenylpropyl group, a phenylbutyl group, and a phenylisopropyl group. Thereamong, the aralkyl group is preferably an aralkyl group having 7 or 8 carbon atoms, such as a benzyl group or a phenethyl group, particularly preferably a benzyl group, since this makes the compound represented by Formula (1) tend to be localized in the vicinity of the surface of a positive electrode active material and/or the vicinity of the surface of a negative electrode active material.

Examples of the substituent optionally contained in the hydrocarbon group include a cyano group, an isocyanato group, a halogen atom, and a halogen atom-containing group. Thereamong, the substituent is preferably an isocyanato group, a halogen atom, or a halogen atom-containing group, particularly preferably a halogen atom or a halogen atom-containing group. Specific examples and preferred examples of the halogen atom are the same as those prescribed for $R^1$.

Specific examples of the halogen atom-containing group include a fluoromethyl group, a chloromethyl group, a bromomethyl group, an iodomethyl group, a trifluoromethyl group, a 2,2,2-trifluoroethyl group, a 2,2,3,3-tetrafluoropropyl group, and a 2-fluorophenyl group. Thereamong, from the standpoint of inhibiting an electrochemical side reaction, a fluoromethyl group, a trifluoromethyl group, or a 2,2,2-trifluoroethyl group is preferred, and a trifluoromethyl group is particularly preferred.

In the present specification, when $R^1$ in Formula (1) is a monovalent hydrocarbon group and two of $R^1$(s) and $X^1$(s) form a ring by binding to each other, the term "monovalent" is treated as the valence of the hydrocarbon group in a state where the bond is not formed. In other words, when a ring is formed, $R^1$ is a divalent hydrocarbon group; however,

a monovalent hydrocarbon group that is bound to $A^1$ in a state where the bond is not formed, i.e. the ring is not formed, is treated as $R^1$. Similarly, when the below-described $X^1$ is a divalent hydrocarbon and two of $R^1$(s) and $X^1$ (s) form a ring by binding to each other, the term "divalent" is treated as the valence of the hydrocarbon in a state where the bond is not formed. Such handling of "monovalent", "divalent" and the like is also the same in the modes other than Formula (1).

(R2)

$R^2$ according to Formula (1) represents a hydrogen atom, a monovalent hydrocarbon group optionally having a substituent, or an alkoxy group optionally having a substituent. Thereamong, from the standpoint of hardly causing a side reaction of the compound represented by Formula (1) on an active material, $R^2$ is preferably a monovalent hydrocarbon group optionally having a substituent or an alkoxy group optionally having a substituent, particularly preferably a monovalent hydrocarbon group optionally having a substituent.

The "hydrocarbon group" has the same definition as prescribed for $R^1$, and preferred hydrocarbon groups are also the same.

Specific examples of the alkoxy group include alkoxy groups having 1 to 12 carbon atoms, such as a methoxy group, an ethoxy group, a propoxy group, a butoxy group, a hexyloxy group, an octyloxy group, a decyloxy group, and a dodecyloxy group. Thereamong, alkoxy groups having 1 to 6 carbon atoms, such as a methoxy group, an ethoxy group, a propoxy group, and a butoxy group are preferred and, from the standpoint of allowing the compound represented by Formula (1) to have a limited steric hindrance and be concentrated on the active material surface in a preferred manner, the alkoxy group is particularly preferably a methoxy group or an ethoxy group.

The substituent optionally contained in the alkoxy group has the same definition as the substituent optionally contained in the hydrocarbon group prescribed for $R^1$.

(X1)

$X^1$ according to Formula (1) represents a divalent hydrocarbon group optionally having a substituent. The number of carbon atoms of the divalent hydrocarbon group is preferably 1 to 10, more preferably 1 to 6, particularly preferably 1 to 4. When the number of carbon atoms of the divalent hydrocarbon group is in this range, the compound represented by Formula (1) tends to be localized in the vicinity of the surface of a positive electrode active material and/or the vicinity of the surface of a negative electrode active material, which is preferred. It is noted here that, when the hydrocarbon group has a substituent, the number of carbon atoms contained in the substituent is not included in the number of carbon atoms of the hydrocarbon group.

The divalent hydrocarbon group is preferably a divalent aliphatic hydrocarbon group, and specific examples thereof include alkylene groups and alkenylene groups. Thereamong, alkylene groups are preferred. The substituent optionally contained in the divalent hydrocarbon group has the same definition as the substituent optionally contained in the hydrocarbon group prescribed for $R^1$.

Specific examples of the alkylene groups include linear alkylene groups, branched alkylene groups, and alkylene groups having a cyclic structure.

Specific examples of the linear alkylene groups include a methylene group, an ethylene group, a propylene group, a butylene group, a pentylene group, a hexylene group, a heptylene group, an octylene group, a nonylene group, and a decylene group.

Specific examples of the branched alkylene groups include a methylethylene group, a methylpropylene group, a methylbutylene group, a methylpentylene group, a methylhexylene group, a methylheptylene group, a methyloctylene group, a methylnonylene group, a dimethylethylene group, a dimethylpropylene group, a dimethylbutylene group, a dimethylpentylene group, a dimethylhexylene group, a dimethylheptylene group, a dimethyloctylene group, a trimethylhexylene group, a trimethylheptylene group, an ethylpentylene group, an ethylhexylene group, an ethylheptylene group, an ethyloctylene group, a propylhexylene group, a propylheptylene group, and a butylhexylene group. It is noted here that, in the above-exemplified branched alkyl groups, the position of a branch is arbitrary.

Specific examples of the alkylene groups having a cyclic structure include a cyclohexylene group.

Among the above-exemplified alkylene groups, a methylene group, an ethylene group, a propylene group, a butylene group, a pentylene group, a hexylene group, a methylethylene group, a methylpropylene group, a methylbutylene group, a methylpentylene group, and a cyclohexylene group are preferred, and a methylene group, an ethylene group, a propylene group, a butylene group, a methylethylene group, and a methylpropylene group are more preferred. When the divalent hydrocarbon group is any of these alkylene groups, the compound represented by Formula (1) tends to be localized in the vicinity of the surface of a positive electrode active material and/or the vicinity of the surface of a negative electrode active material, which is preferred.

Specific examples of the alkenylene groups include a vinylene group, a propenylene group, a 1-butenylene group, a 2-butenylene group, a butadienylene group, a pentenylene group, a hexenylene group, a heptenylene group,

an octenylene group.

($A^1$)

$A^1$ according to Formula (1) represents a divalent or trivalent atomic group represented by the following Formula (2-1) or the below-described Formula (3-1).

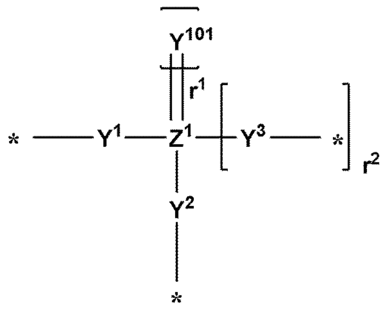

(2-1)

$Z^1$ represents a carbon atom, a sulfur atom, a phosphorus atom, or a boron atom; $Y^{101}$ represents an oxygen atom or a sulfur atom; $Y^1$, $Y^2$, and $Y^3$ each independently represent a single bond, an oxygen atom, a sulfur atom, or $NR^{101}$ (a $-NR^{101}-$ group) ; $R^{101}$ represents a hydrogen atom or a monovalent hydrocarbon group; when $R^{101}$ is a monovalent hydrocarbon group, this $R^{101}$ is optionally bound to one of $R^1$ and $X^1$ in Formula (1) to form a ring;

$r^1$ is 1 when $Z^1$ is a carbon atom; 0, 1, or 2 when $Z^1$ is a sulfur atom; 0 or 1 when $Z^1$ is a phosphorus atom; or 0 when $Z^1$ is a boron atom;
$r^2$ is 0 when $Z^1$ is a carbon atom or a sulfur atom, or 1 when $Z^1$ is a phosphorus atom or a boron atom; and
* represents a binding site with $R^1$ or $X^1$ in Formula (1),
with a proviso that, when $Z^1$ is a sulfur atom and $r^1$ is 2, $Y^1$ and $Y^2$ are not single bonds simultaneously.

($R^{101}$)

Each monovalent hydrocarbon group represented by the above-described $R^{101}$ independently has the same meaning as the monovalent hydrocarbon group prescribed for $R^1$.

The divalent atomic group represented by Formula (2-1) is, for example, an oxygen atom; a sulfur atom; a divalent atomic group formed of an oxygen atom, a carbon atom, and an oxygen atom, or a hydrogen atom, a carbon atom, and an oxygen atom; or a divalent atomic group formed of a sulfur atom, an oxygen atom, and a sulfur atom, a carbon atom, an oxygen atom, and a sulfur atom, or a hydrogen atom, a carbon atom, an oxygen atom, and a sulfur atom.

Specific examples of the divalent atomic group formed of an oxygen atom, a carbon atom, and an oxygen atom, or a hydrogen atom, a carbon atom, and an oxygen atom include divalent atomic groups having a ketone structure, a carboxylic acid ester structure, or a carbonate structure, particularly atomic groups in which $Z^1$ is a carbon atom, $Y^{101}$ is an oxygen atom, and $Y^1$, $Y^2$, and $Y^3$ are independently a single bond or an oxygen atom. Specific examples of a divalent group having a ketone structure include a -CO- group.

Specific examples of a divalent group having a carboxylic acid ester structure include a -COO- group.

Specific examples of a divalent group having a carbonate structure include a -OCOO- group.

Thereamong, from the standpoint of forming a coating film on the active material surface in a preferred manner with limited electrochemical side reaction, a -COO- group or a -OCOO- group is particularly preferred.

Specific examples of the divalent atomic group formed of a sulfur atom, an oxygen atom, and a sulfur atom, a carbon atom, an oxygen atom, and a sulfur atom, or a hydrogen atom, a carbon atom, an oxygen atom, and a sulfur atom include divalent groups having a sulfide structure, a sulfone structure, a sulfonic acid ester structure, a sulfuric acid ester structure, a sulfoxide structure, a sulfurous acid ester structure, a sulfinic acid ester structure, a thiocarbonyl structure, or a thioester structure, particularly: atomic groups in which $Z^1$ is a carbon atom, $Y^{101}$ is an oxygen atom, and $Y^1$, $Y^2$, and $Y^3$ are sulfur atoms; atomic groups in which $Z^1$ is a carbon atom, $Y^{101}$ is a sulfur atom, and $Y^1$, $Y^2$, and $Y^3$ are independently a single bond, an oxygen atom, or a sulfur atom; and atomic groups in which $Z^1$ is a sulfur atom, $Y^{101}$ is an oxygen atom or a sulfur atom, and $Y^1$, $Y^2$, and $Y^3$ are

independently a single bond, an oxygen atom, or an oxygen atom.

Specific examples of a divalent group having a sulfide structure include a -S- group.

Specific examples of a divalent group having a sulfonic acid ester structure include a $-SO_3-$ group.

Specific examples of a divalent group having a sulfuric acid ester structure include a $-OSO_3-$ group.

Specific examples of a divalent group having a sulfoxide structure include a -SO- group.

Specific examples of a divalent group having a sulfurous acid ester structure include a -OSOO- group.

Specific examples of a divalent group having a sulfinic acid ester structure include a -SOO- group.

Specific examples of a divalent group having a thiocarbonyl structure include a -OCSO- group and a -CSO- group.

Specific examples of a divalent group having a thioester structure include a -COS- group, a -OCOS- group, and a -SCOS-group. The divalent atomic group may also be a divalent group having a dithiocarboxylic acid ester structure, such as a -CSS-group, a -OCSS- group, or a -SCSS- group.

Thereamong, from the standpoint of forming a coating film on the active material surface in a preferred manner with limited electrochemical side reaction, a -$SO_3$- group, a -$OSO_3$- group, a -OSOO- group, or a -SOO- group is preferred, a -$SO_3$- group or a -$OSO_3$- group is more preferred, and a -$SO_3$- group is particularly preferred.

Specific examples of a trivalent atom or atomic group having at least one atom selected from an oxygen atom, a nitrogen atom, a sulfur atom, a phosphorus atom, and a boron atom include: a nitrogen atom; a phosphorus atom; a boron atom; a trivalent atomic group formed of a carbon atom, a nitrogen atom, and an oxygen atom, or a hydrogen atom, a carbon atom, a nitrogen atom, and an oxygen atom; a trivalent atomic group formed of a carbon atom, a nitrogen atom, and a sulfur atom, a nitrogen atom, an oxygen atom, and a sulfur atom, a hydrogen atom, a carbon atom, a nitrogen atom, and a sulfur atom, or a carbon atom, a nitrogen atom, an oxygen atom, and a sulfur atom; a trivalent atomic group formed of a phosphorus atom, an oxygen atom, and a phosphorus atom, or a hydrogen atom, a nitrogen atom, an oxygen atom, and a phosphorus atom; and a trivalent atomic group formed of a boron atom, or a boron atom and an oxygen atom, particularly atomic groups in which $Z^1$ is a carbon atom, $Y^{101}$ is an oxygen atom, and $Y^1$, $Y^2$, and $Y^3$ are independently $NR^{101}$.

Examples of the trivalent atomic group formed of a carbon atom, a nitrogen atom, and an oxygen atom, or a hydrogen atom, a carbon atom, a nitrogen atom, and an oxygen atom include trivalent groups having an amide structure, a urethane structure, or a urea structure. Specific examples of these trivalent groups include the following atomic groups.

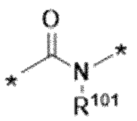 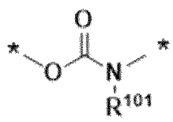 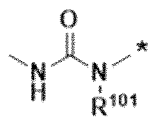

Examples of the trivalent atomic group formed of a carbon atom, a nitrogen atom, and a sulfur atom, a nitrogen atom, an oxygen atom, and a sulfur atom, a hydrogen atom, a carbon atom, a nitrogen atom, and a sulfur atom, or a carbon atom, a nitrogen atom, an oxygen atom, and a sulfur atom include trivalent groups having a thiocarbonyl structure, a thioester structure, or a sulfonamide structure. The trivalent atomic group may also be a trivalent group having a dithiocarboxylic acid ester structure. Specific examples of these trivalent groups include the following atomic groups, particularly atomic groups having a mode in which: $Z^1$ is a carbon atom, $Y^{101}$ is a sulfur atom, and $Y^1$, $Y^2$, and $Y^3$ are independently $NR^{101}$; or $Z^1$ is a carbon atom, $Y^{101}$ is an oxygen atom, and $Y^1$, $Y^2$, and $Y^3$ are independently $NR^{101}$.

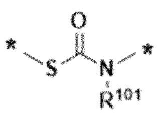 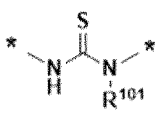 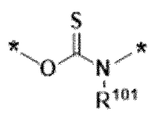 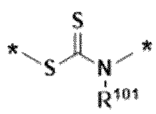

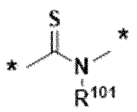 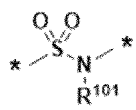

Specific examples of the trivalent atomic group formed of a phosphorus atom, an oxygen atom, and a phosphorus atom, or a hydrogen atom, a nitrogen atom, an oxygen atom, and a phosphorus atom include atomic groups in which $Z^1$ is a phosphorus atom, more specifically trivalent groups having a phosphine oxide structure, a phosphinic acid ester structure, a phosphonic acid ester structure, a phosphoric acid ester structure, a phosphoric acid amide structure, a phosphine structure, a phosphinous acid ester structure, a phosphonous acid ester structure, or a phosphorous acid ester structure. Specific examples of these trivalent groups include the following atomic groups.

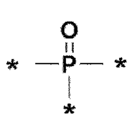 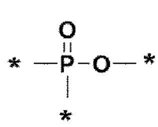 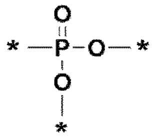 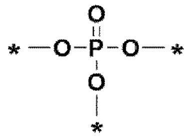 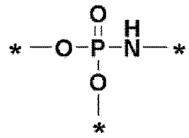

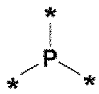 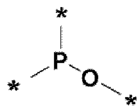 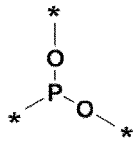 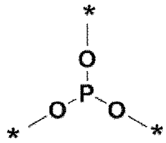

Thereamong, from the standpoint of forming a coating film on the active material surface in a preferred manner with limited electrochemical side reaction, the following atomic groups are preferred.

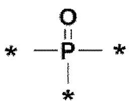 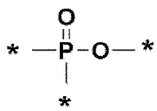 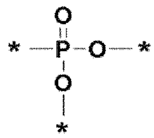 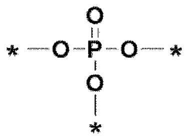

Thereamong, the following atomic groups are particularly preferred.

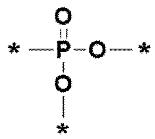 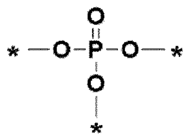

Specific examples of the trivalent atomic group formed of a boron atom, or a boron atom and an oxygen atom include atomic groups in which $Z^1$ is a boron atom, more specifically trivalent groups having a trialkylborane structure, a borinic acid ester structure, a boronic acid ester structure, or a boric acid ester structure. Specific examples of these trivalent groups include the following atomic groups.

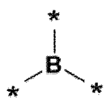 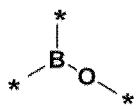 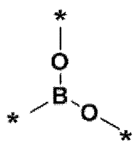 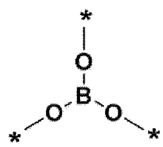

Particularly, from the standpoint of forming a coating film on the active material surface in a preferred manner with limited electrochemical side reaction, the divalent or trivalent atomic group represented by Formula (2-1) is preferably a divalent or trivalent atomic group represented by the following Formula (2-2) .

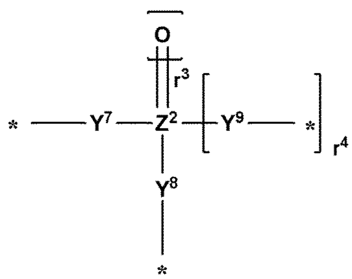

(2-2)

$Z^2$ represents a carbon atom, a sulfur atom, or a phosphorus atom; $Y^7$, $Y^8$, and $Y^9$ each independently represent a single bond or an oxygen atom;

$r^3$ is 1 when $Z^2$ is a carbon atom; 0, 1, or 2 when $Z^2$ is a sulfur atom; or 0 or 1 when $Z^2$ is a phosphorus atom;

$r^4$ is 0 when $Z^2$ is a carbon atom or a sulfur atom, or 1 when $Z^2$ is a phosphorus atom; and
* represents a binding site with $R^1$ or $X^1$ in Formula (1),
with a proviso that, when $Z^2$ is a sulfur atom and $r^3$ is 2, $Y^7$ and $Y^8$ are not single bonds simultaneously.

The conditions of $Z^1$, $Y^1$, $Y^2$, $Y^3$, $r^0$, and $r^1$ in the above-described Formula (2-1) can be applied to $Z^2$, $Y^7$, $Y^8$, $Y^9$, $r^2$, and $r^3$ in Formula (2-2), respectively, within an applicable range.
The trivalent atomic group represented by the following Formula (3-1) will now be described.

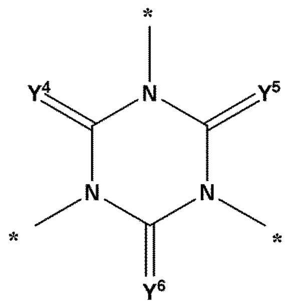

(3-1)

$Y^4$, $Y^5$, and $Y^6$ each independently represent an oxygen atom, a sulfur atom, or $NR^{201}$ (= a $NR^{201}$ group) ; $R^{201}$ represents a hydrogen atom or a monovalent hydrocarbon group; and * represents a binding site with $R^1$ or $X^1$ in the above-described Formula (1).

($R^{201}$)

The hydrocarbon group represented by the above-described $R^{201}$ has the same meaning as the hydrocarbon group prescribed for $R^3$.
Particularly, from the standpoint of forming a coating film on the active material surface in a preferred manner with limited electrochemical side reaction, an atomic group represented by the following Formula (3-2) is preferred.

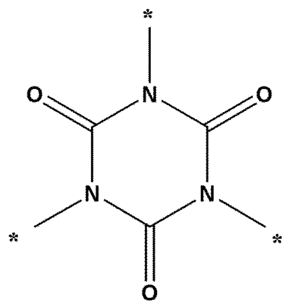

(3-2)

In Formula (3-2), * represents a binding site with $R^1$ or $X^1$ in the above-described Formula (1).
Among those atomic groups represented by the above-described Formula (2-1) or (3-1),

a divalent group having a ketone structure, a divalent group having a carbonate structure, a divalent group having a carboxylic acid ester structure, a divalent group having a sulfonic acid ester structure, a divalent group having a sulfuric acid ester structure, a divalent group having a sulfurous acid ester structure, a divalent group having a sulfinic acid structure, a trivalent group having a phosphonic acid ester structure, a trivalent group having a phosphoric acid ester structure, or a trivalent group having an isocyanurate structure is preferred,
a divalent group having a carbonate structure, a divalent group having a carboxylic acid ester structure, a divalent group having a sulfonic acid ester structure, a divalent group having a sulfuric acid ester structure, a trivalent group having a phosphonic acid ester structure, a trivalent group having a phosphoric acid ester structure, or a trivalent group having an isocyanurate structure is more preferred,
a divalent group having a carbonate structure, a divalent group having a carboxylic acid ester structure, a divalent group having a sulfonic acid ester structure, a trivalent group having a phosphonic acid ester structure, a trivalent group having a phosphoric acid ester structure, or a trivalent group having an isocyanurate structure is still more preferred, and
a divalent group having a carbonate structure or a divalent group having a carboxylic acid ester structure is particularly

preferred.

In Formula (1), $n^1$ represents an integer of 2 or 3. From the standpoint of the ease of reducing the amount of gas generation, $n^1$ is preferably 3.

In Formula (1), $p^1$ represents an integer of 0 to 2.

In Formula (1), $q^1$ represents an integer of 1 to 3, provided that $p^1 + q^1 = 2$ or 3.

From the standpoint of forming a coating film on the active material surface in a preferred manner with limited electrochemical side reaction, when $A^1$ according to Formula (1) has a structure represented by Formula (2-1) or (2-2), it is preferred that $p^1$ be 1 and $q^1$ be 1 or 2, and it is more preferred that $p^1$ and $q^1$ be both 1.

From the standpoint of forming a coating film on the active material surface in a preferred manner with limited electrochemical side reaction, when $A^1$ according to Formula (1) has a structure represented by Formula (3-1) or (3-2), it is preferred that $p^1$ be 0 and $q^1$ be 3.

Two of $R^1$ (s) and $X^1$ (s) are optionally bound to each other to form a ring. In other words, examples of a mode in which a ring is formed include modes in which $R^1$ (s), or $R^1$ and $X^1$ are bound to each other to form a ring. From the standpoint of the ease of synthesis, a mode in which $R^1$ and $X^1$ are bound to each other to form a ring is preferred. Examples of a more preferred mode include the following structures.

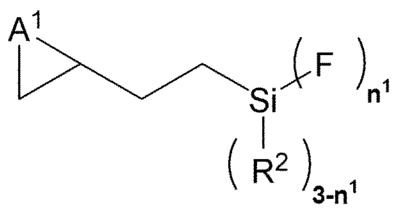

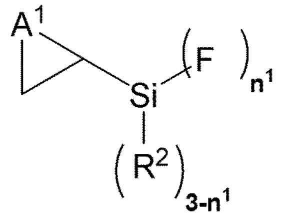

Specific examples of the compound represented by Formula (1) are shown below. It is noted here, however, that the compound represented by Formula (1) according to the present embodiment is not limited to any of the below-exemplified compounds represented by Formulae (F3-1) to (F3-106) and Formulae (F2-1) to (F2-148) by any means.

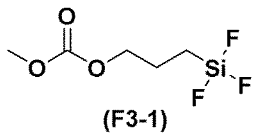
(F3-1)

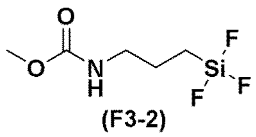
(F3-2)

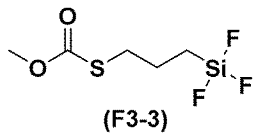
(F3-3)

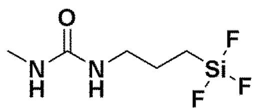
(F3-4)

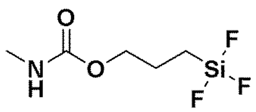
(F3-5)

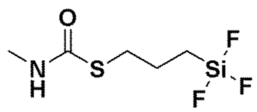
(F3-6)

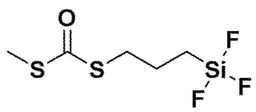
(F3-7)

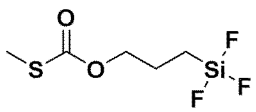
(F3-8)

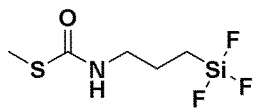
(F3-9)

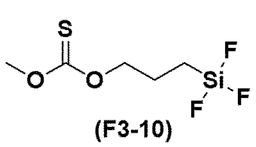
(F3-10)

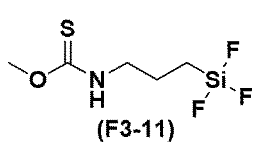
(F3-11)

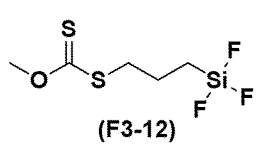
(F3-12)

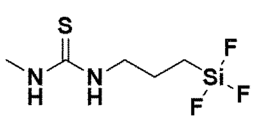
(F3-13)

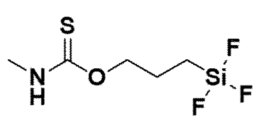
(F3-14)

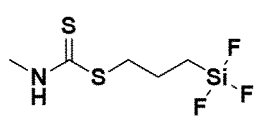
(F3-15)

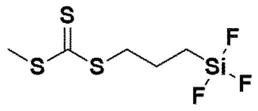
(F3-16)

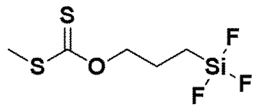
(F3-17)

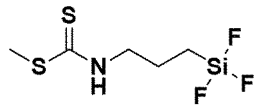
(F3-18)

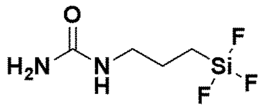
(F3-19)

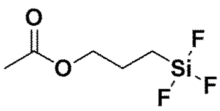
(F3-20)

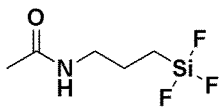
(F3-21)

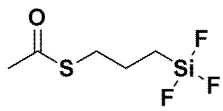
(F3-22)

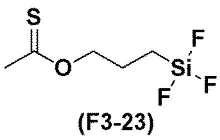
(F3-23)

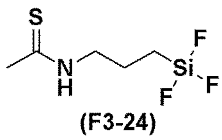
(F3-24)

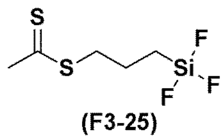
(F3-25)

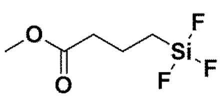
(F3-26)

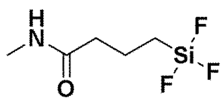
(F3-27)

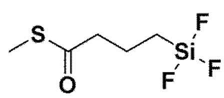
(F3-28)

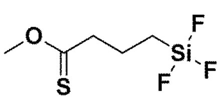
(F3-29)

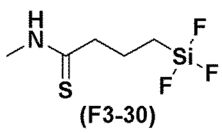
(F3-30)

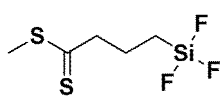
(F3-31)

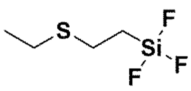
(F3-32)

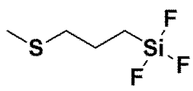
(F3-33)

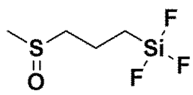
(F3-34)

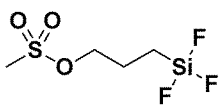
(F3-35)

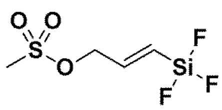
(F3-36)

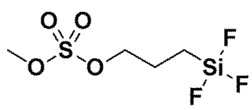
(F3-37)

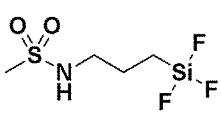
(F3-38)

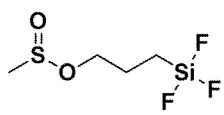
(F3-39)

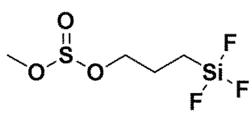
(F3-40)

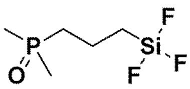
(F3-41)

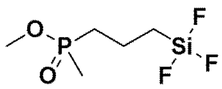
(F3-42)

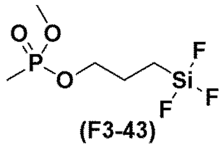
(F3-43)

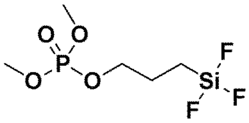
(F3-44)

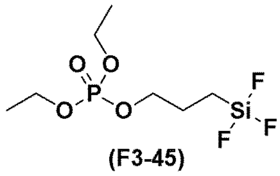
(F3-45)

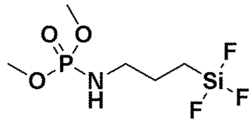
(F3-46)

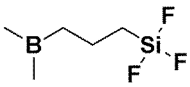
(F3-47)

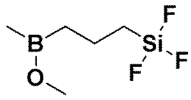
(F3-48)

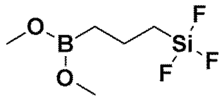
(F3-49)

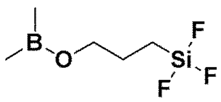
(F3-50)

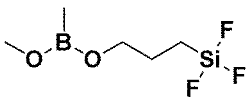
(F3-51)

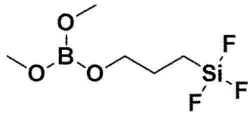
(F3-52)

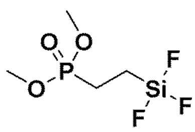
(F3-53)

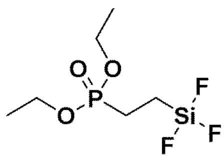
(F3-54)

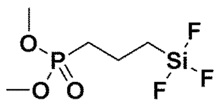
(F3-55)

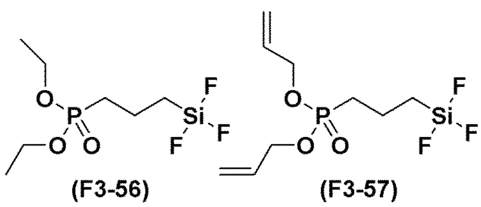
(F3-56)

(F3-57)

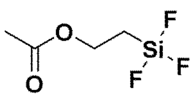
(F3-58)

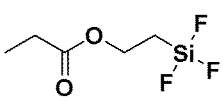
(F3-59)

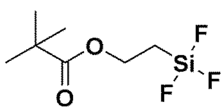
(F3-60)

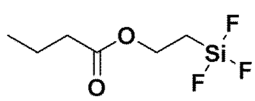
(F3-61)

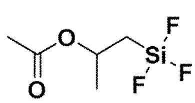
(F3-62)

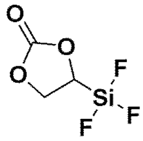
(F3-63)

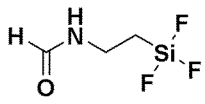
(F3-64)

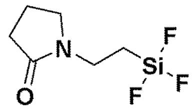
(F3-65)

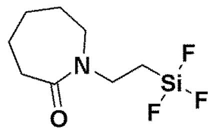
(F3-66)

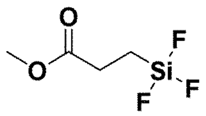
(F3-67)

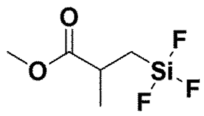
(F3-68)

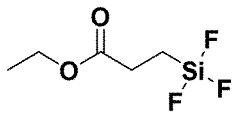
(F3-69)

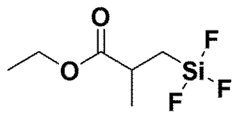
(F3-70)

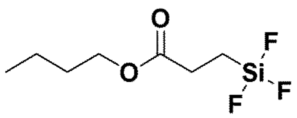
(F3-71)

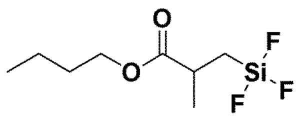
(F3-72)

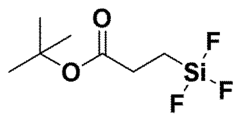
(F3-73)

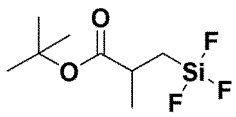
(F3-74)

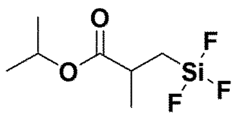
(F3-75)

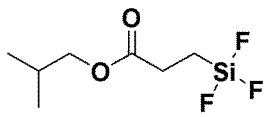
(F3-76)

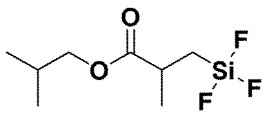
(F3-77)

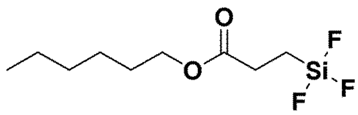
(F3-78)

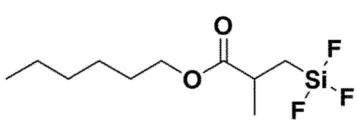
(F3-79)

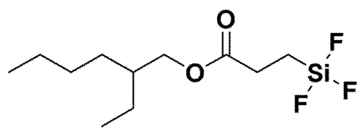
(F3-80)

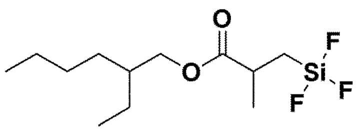
(F3-81)

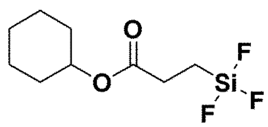
(F3-82)

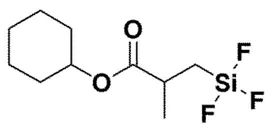
(F3-83)

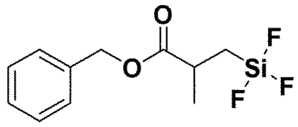
(F3-84)

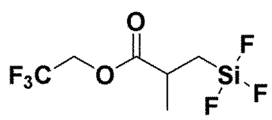
(F3-85)

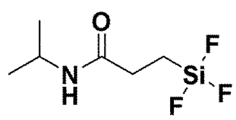
(F3-86)

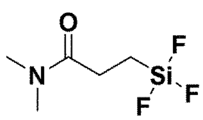
(F3-87)

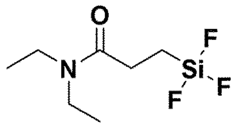
(F3-88)

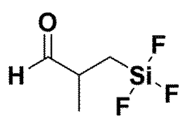
(F3-89)

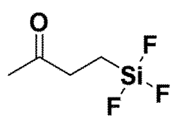
(F3-90)

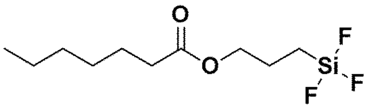

(F3-91)

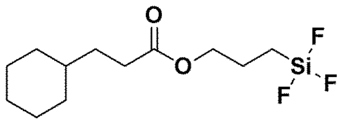

(F3-92)

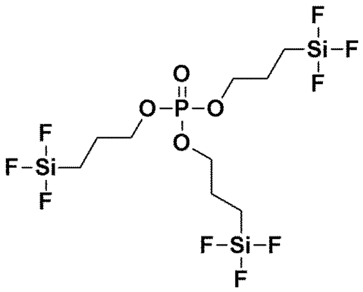

(F3-93)

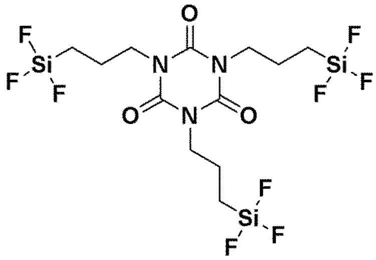

(F3-94)

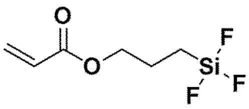

(F3-95)

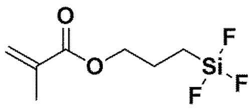

(F3-96)

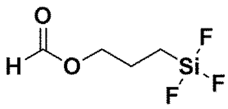

(F3-97)

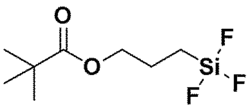

(F3-98)

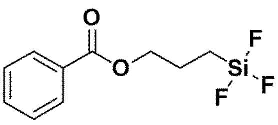

(F3-99)

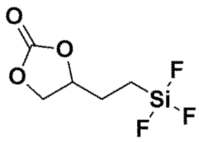

(F3-100)

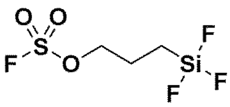

(F3-101)

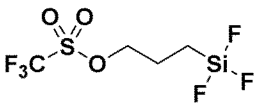

(F3-102)

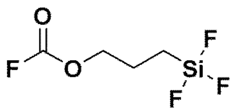

(F3-103)

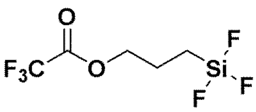

(F3-104)

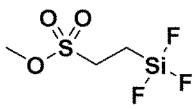

(F3-105)

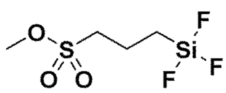

(F3-106)

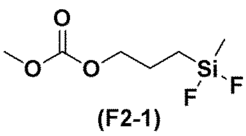

(F2-1)

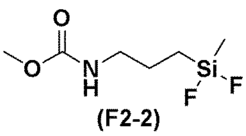

(F2-2)

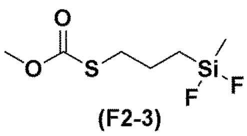

(F2-3)

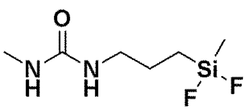

(F2-4)

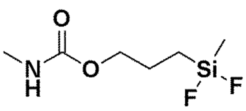

(F2-5)

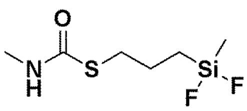

(F2-6)

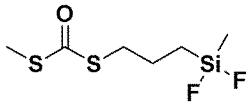
(F2-7)

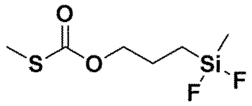
(F2-8)

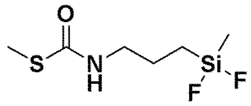
(F2-9)

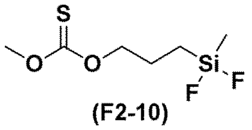
(F2-10)

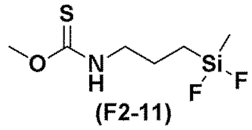
(F2-11)

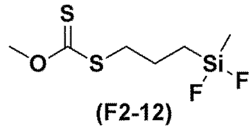
(F2-12)

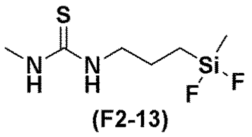
(F2-13)

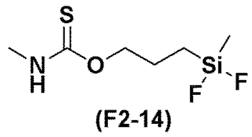
(F2-14)

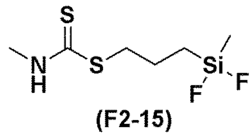
(F2-15)

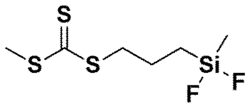
(F2-16)

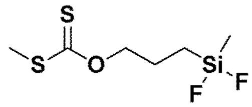
(F2-17)

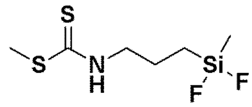
(F2-18)

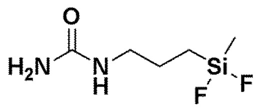
(F2-19)

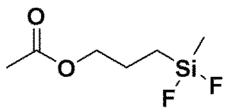
(F2-20)

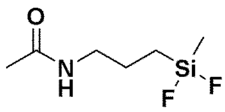
(F2-21)

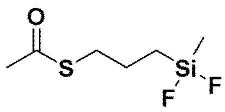
(F2-22)

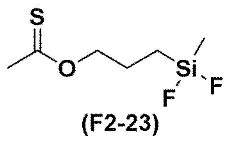
(F2-23)

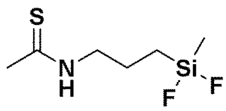
(F2-24)

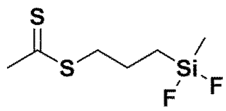
(F2-25)

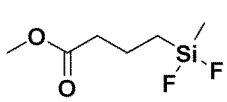
(F2-26)

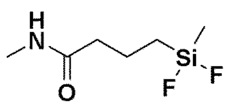
(F2-27)

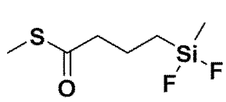
(F2-28)

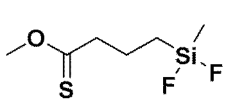
(F2-29)

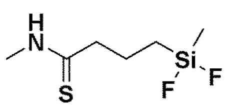
(F2-30)

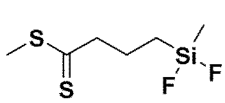
(F2-31)

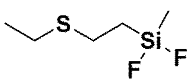
(F2-32)

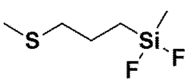
(F2-33)

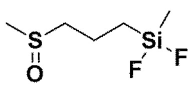
(F2-34)

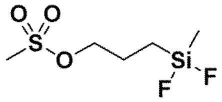
(F2-35)

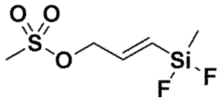
(F2-36)

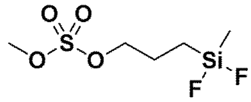
(F2-37)

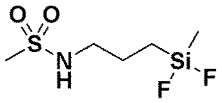
(F2-38)

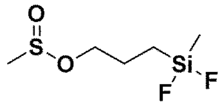
(F2-39)

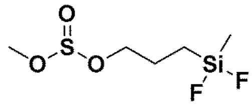
(F2-40)

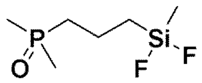
(F2-41)

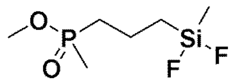
(F2-42)

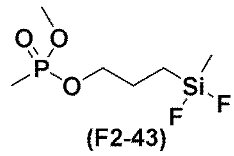
(F2-43)

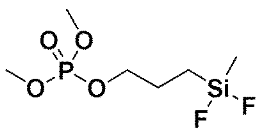
(F2-44)

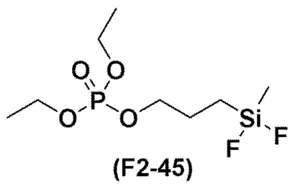
(F2-45)

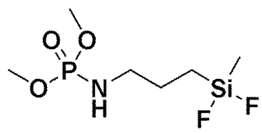
(F2-46)

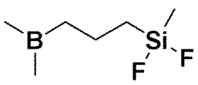
(F2-47)

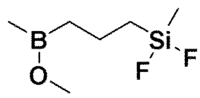
(F2-48)

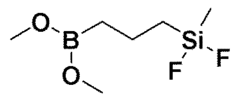
(F2-49)

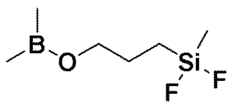
(F2-50)

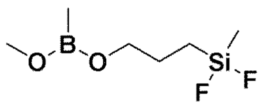
(F2-51)

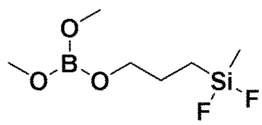
(F2-52)

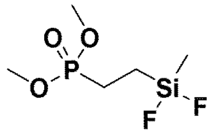
(F2-53)

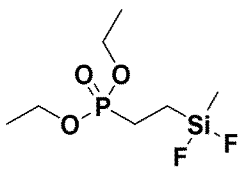
(F2-54)

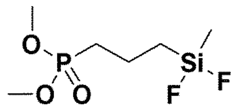
(F2-55)

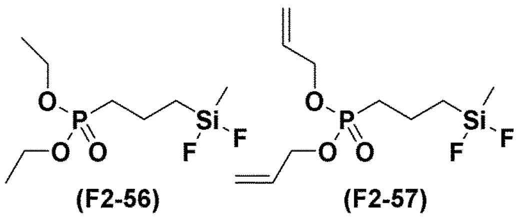
(F2-56)

(F2-57)

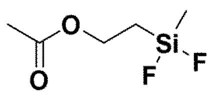
(F2-58)

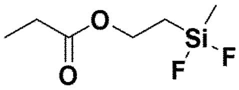
(F2-59)

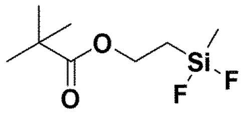
(F2-60)

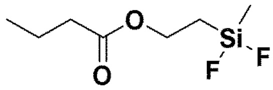
(F2-61)

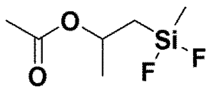
(F2-62)

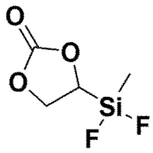
(F2-63)

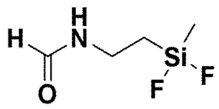
(F2-64)

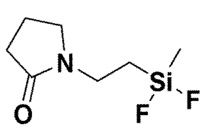
(F2-65)

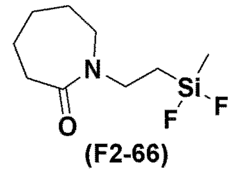
(F2-66)

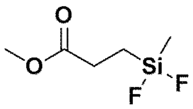
(F2-67)

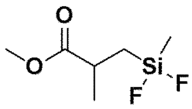
(F2-68)

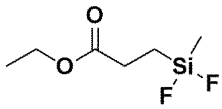
(F2-69)

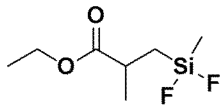
(F2-70)

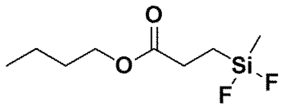
(F2-71)

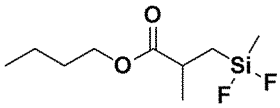
(F2-72)

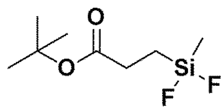
(F2-73)

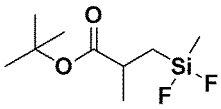
(F2-74)

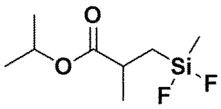
(F2-75)

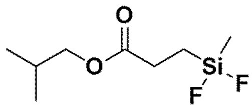
(F2-76)

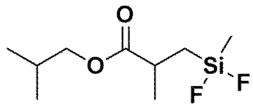
(F2-77)

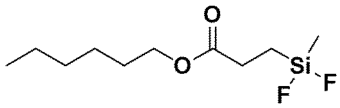
(F2-78)

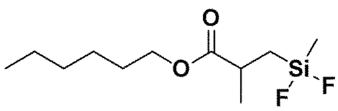
(F2-79)

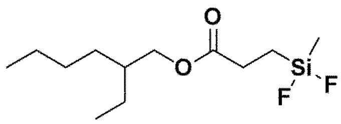
(F2-80)

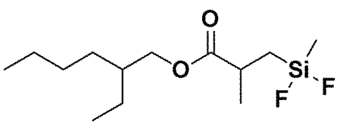
(F2-81)

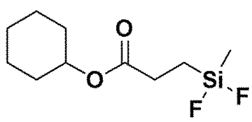
(F2-82)

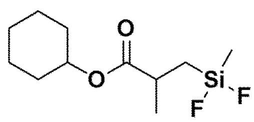
(F2-83)

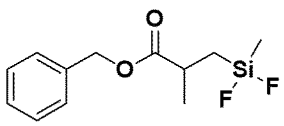
(F2-84)

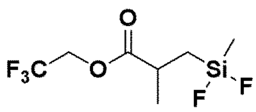
(F2-85)

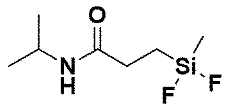
(F2-86)

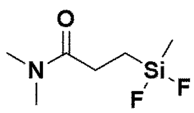
(F2-87)

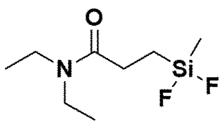
(F2-88)

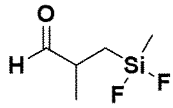
(F2-89)

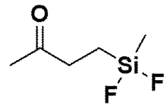
(F2-90)

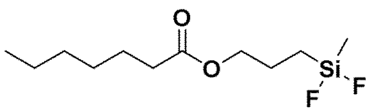
(F2-91)

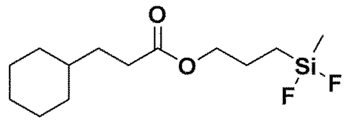
(F2-92)

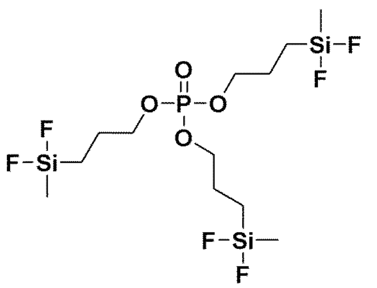
(F2-93)

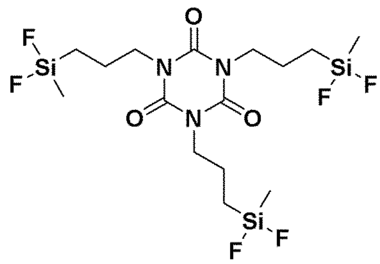
(F2-94)

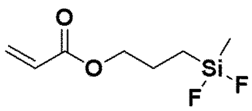
(F2-95)

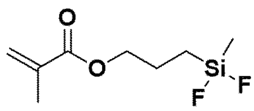
(F2-96)

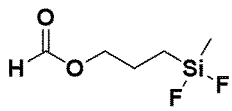
(F2-97)

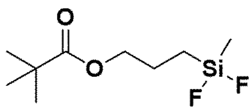
(F2-98)

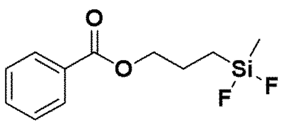
(F2-99)

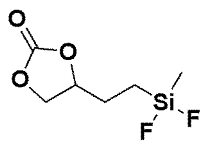
(F2-100)

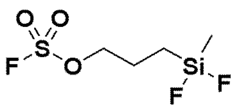
(F2-101)

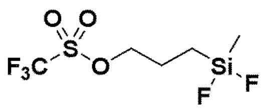
(F2-102)

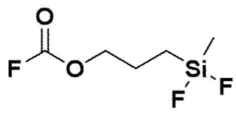
(F2-103)

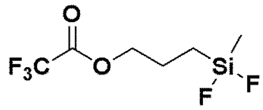
(F2-104)

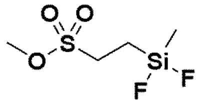
(F2-105)

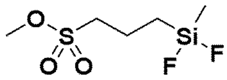
(F2-106)

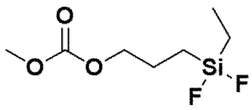
(F2-107)

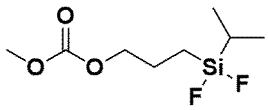
(F2-108)

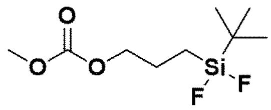
(F2-109)

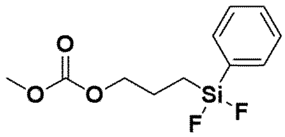
(F2-110)

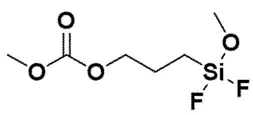
(F2-111)

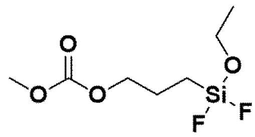
(F2-112)

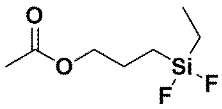
(F2-113)

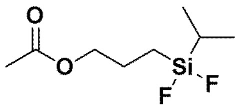
(F2-114)

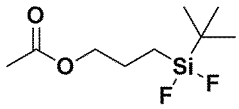
(F2-115)

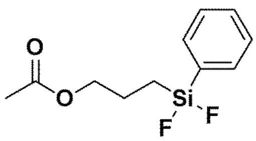
(F2-116)

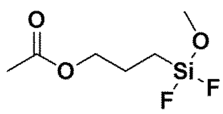
(F2-117)

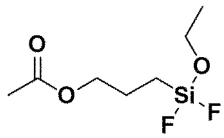
(F2-118)

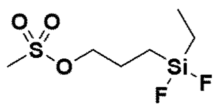
(F2-119)

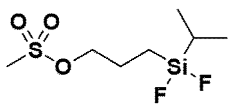
(F2-120)

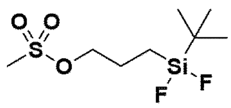
(F2-121)

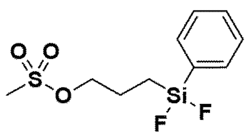
(F2-122)

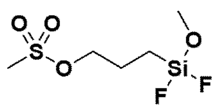
(F2-123)

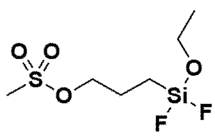
(F2-124)

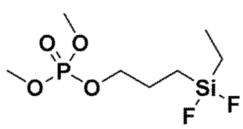
(F2-125)

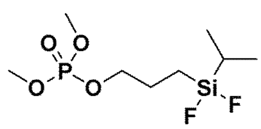
(F2-126)

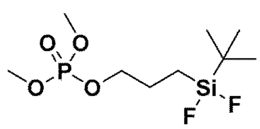
(F2-127)

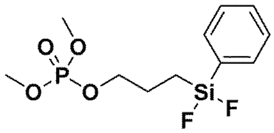
(F2-128)

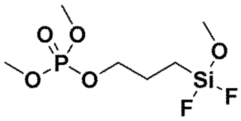
(F2-129)

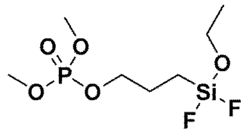
(F2-130)

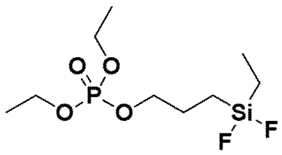
(F2-131)

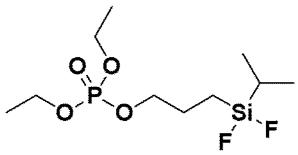
(F2-132)

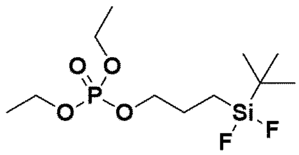
(F2-133)

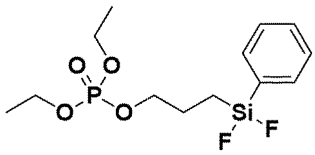
(F2-134)

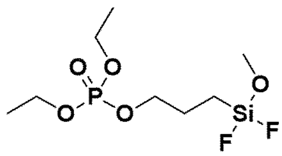
(F2-135)

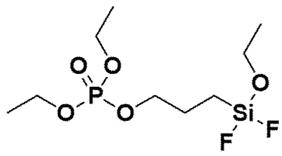
(F2-136)

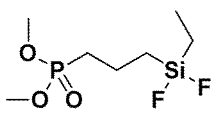
(F2-137)

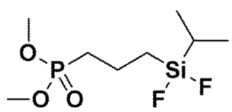
(F2-138)

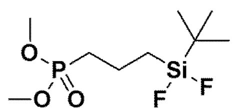
(F2-139)

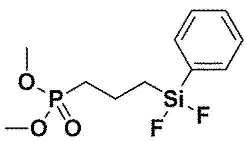
(F2-140)

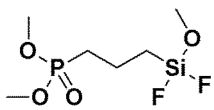
(F2-141)

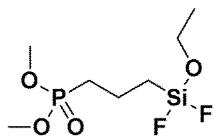
(F2-142)

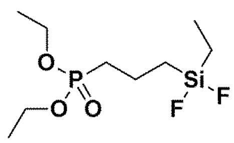
(F2-143)

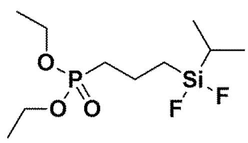
(F2-144)

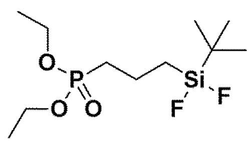
(F2-145)

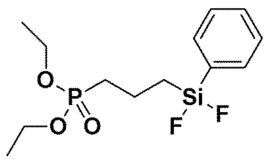
(F2-146)

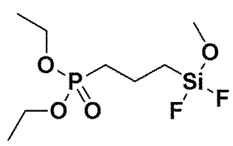
(F2-147)

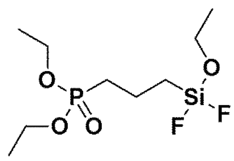
(F2-148)

Among these compounds, from the standpoints of the ease of obtaining raw materials and the ease of synthesis:

compounds in which $A^1$ is a divalent atomic group having a carbonate structure, a divalent atomic group having a carboxylic acid ester structure, a divalent atomic group having a sulfonic acid ester structure, a divalent atomic group

having a phosphonic acid ester structure, a trivalent atomic group having a phosphoric acid ester structure, or a trivalent atomic group having an isocyanurate structure, $R^1$ is a hydrogen atom or an alkyl group, $R^2$ is an alkyl group, and $X^1$ is an alkylene group are preferred and, thereamong, the compound represented by Formula (1) is preferably a compound selected from the above-exemplified compounds represented by Formulae (F3-1), (F3-20), (F3-26), (F3-35) to (F3-37), (F3-43) to (F3-45), (F3-53) to (F3-63), (F3-67) to (F3-85), (F3-91) to (F3-99), (F3-101) to (F3-106), (F2-1), (F2-20), (F2-26), (F2-35) to (F2-37), (F2-43) to (F2-45), (F2-53) to (F2-63), (F2-67) to (F2-85), (F2-91) to (F2-99), and (F2-101) to (F2-148);

compounds in which $A^1$ is a divalent atomic group having a carbonate structure, a divalent atomic group having a carboxylic acid ester structure, a divalent atomic group having a sulfonic acid ester structure, a divalent atomic group having a phosphonic acid ester structure, a trivalent atomic group having a phosphoric acid ester structure, or a trivalent atomic group having an isocyanurate structure, $R^1$ is a methyl group or an ethyl group, $R^2$ is an alkyl group, and $X^1$ is an alkylene group are more preferred and, thereamong, the compound represented by Formula (1) is preferably a compound selected from the above-exemplified compounds represented by Formulae (F3-1), (F3-20), (F3-35) to (F3-37), (F3-44), (F3-45), (F3-53) to (F3-63), (F3-91) to (F3-99), (F2-1), (F2-20), (F2-35) to (F2-37), (F2-44), (F2-45), (F2-53) to (F2-63), and (F2-91) to (F2-99);

compounds in which $X^1$ is a propylene group and $R^1$ is a methyl group or an ethyl group are still more preferred and, thereamong, the compound represented by Formula (1) is preferably a compound selected from the above-exemplified compounds represented by Formulae (F3-1), (F3-20), (F3-35), (F3-44), (F3-45), (F3-55), (F3-56), (F3-94), (F3-99), (F2-1), (F2-20), (F2-35), (F2-44), (F2-45), (F2-55), (F2-56), (F2-94), and (F2-99); and

compounds in which $A^1$ is a divalent atomic group having a carbonate structure, a divalent atomic group having a carboxylic acid ester structure, a divalent atomic group having a phosphonic acid ester structure, a trivalent atomic group having a phosphoric acid ester structure, or a trivalent atomic group having an isocyanurate structure, $X^1$ is a propylene group, and $R^1$ is a methyl group or an ethyl group are particularly preferred and, thereamong, the compound represented by Formula (1) is particularly preferably a compound selected from the above-exemplified compounds represented by Formulae (F3-1), (F3-20), (F3-44), (F3-45), (F3-55), (F3-56), (F3-94), (F2-1), (F2-20), (F2-44), (F2-45), (F2-55), (F2-56), and (F2-94).

Another embodiment of the present invention is a compound represented by the following Formula (1-4). The effects obtained by this compound as well as the use, the structural conditions and the like of this compound are the same as those of the above-described compound represented by Formula (1), and can be used as one mode of the compound represented by Formula (1).

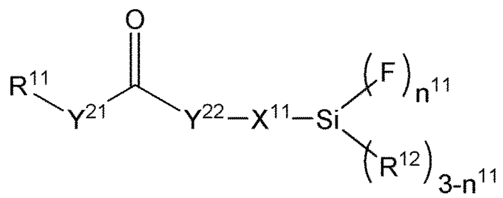

(1-4)

In Formula (1-4), $R^{11}$ represents a hydrogen atom, a halogen atom, or a monovalent hydrocarbon group optionally having a substituent; $R^{12}$ represents a hydrogen atom or a monovalent hydrocarbon group optionally having a substituent; $X^{11}$ represents a divalent hydrocarbon group having 3 or more carbon atoms and optionally having a substituent; $Y^{21}$ and $Y^{22}$ each independently represent a single bond, an oxygen atom, a sulfur atom, or $NR^{301}$ (a $-NR^{301}-$ group) ; $R^{301}$ represents a hydrogen atom or a monovalent hydrocarbon group optionally having a substituent; when $R^{301}$ is a monovalent hydrocarbon group, this $R^{301}$ is optionally bound to one of $R^{11}$ and $X^{11}$ to form a ring; $n^{11}$ represents 2; and two of $R^1$ and $X^{11}$ are optionally bound to each other to form a ring. It is noted here that $n^{11}$ is optionally 3 when $Y^{21}$ and $Y^{22}$ are oxygen atoms and $R^{11}$ and $X^{11}$ are not bound to each other to form a ring (when the compound represented by Formula (1-4) is linear (linear carbonate)).

The hydrocarbon groups represented by $R^{11}$ and $R^{12}$ have the same meanings as the hydrocarbon groups represented by $R^1$ and $R^2$ in the above-described Formula (1), respectively. Further, $R^{301}$ represents a hydrogen atom or a monovalent hydrocarbon group. The hydrocarbon group represented by $R^{301}$ has the same meaning as the hydrocarbon group prescribed for $R^1$.

As the conditions of the atoms constituting Formula (1-4), the above-described conditions of the corresponding atoms in Formula (1) can be applied in the same manner, including preferred conditions.

From the standpoint of forming a coating film on the active material surface in a preferred manner with limited electrochemical side reaction, the moiety corresponding to $A^1$ in Formula (1) is preferably a carbonate structure.

Further, from the standpoint of obtaining a proper balance between the resistance of the insulation of the coating

film, $n^{11}$ is preferably 2.

Still further, from the standpoint of obtaining a proper balance between the resistance and the insulation of the coating film, $R^{11}$ and $X^{11}$ preferably have a structure in which they are not bound to form a ring.

Moreover, from the standpoint of improving the effect of inhibiting the generation of gas during high-temperature storage, $n^{11}$ is preferably 3.

As the compound represented by Formula (1-4), specifically:

compounds of a mode having a carbonate structure, particularly a mode in which $Y^{21}$ and $Y^{22}$ are oxygen atoms, $n^{11}$ is 2 or 3, and $X^{11}$ is a divalent hydrocarbon group having 3 or more carbon atoms, are preferred and, thereamong, the compound represented by Formula (1-4) is preferably a compound selected from the above-exemplified compounds represented by Formulae (F3-1), (F2-1), and (F2-107) to (F2-112); compounds of a mode in which $R^{11}$ is a methyl group or an ethyl group are more preferred and, thereamong, the compound represented by Formula (1-4) is preferably a compound selected from the above-exemplified compounds represented by Formulae (F3-1) and (F2-1); and compounds of a mode in which $R^{11}$ is a methyl group is still more preferred and, thereamong, the compound represented by Formula (1-4) is preferably a compound selected from the above-exemplified compounds represented by Formulae (F3-1) and (F2-1); or

compounds of a mode having a carboxylic acid ester structure, particularly a mode in which $Y^{21}$ is a single bond, $Y^{22}$ is an oxygen atom, $n^{11}$ is 2 or 3, $X^{11}$ is a divalent hydrocarbon group having 3 or more carbon atoms, $R^{11}$ is a hydrogen atom or an alkyl group, and $R^{12}$ is a methyl group are preferred and, thereamong, the compound represented by Formula (1-4) is preferably a compound selected from the above-exemplified compounds represented by Formulae (F2-20), (F2-91), (F2-92), (F2-97), and (F2-98); and compounds of a mode in which $R^1$ is a methyl group or an ethyl group are more preferred and, thereamong, the compound represented by Formula (1-4) is preferably the above-exemplified compound represented by Formula (F2-20).

Yet another embodiment of the present invention is a compound represented by the following Formula (1-5). The effects obtained by this compound as well as the use, the structural conditions and the like of this compound are the same as those of the above-described compound represented by Formula (1), and can be used as one mode of the compound represented by Formula (1) .

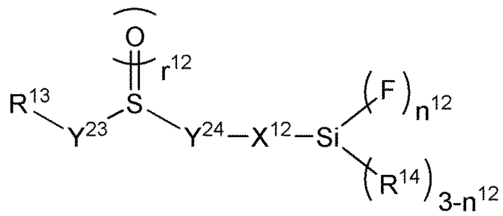

(1-5)

In Formula (1-5), $R^{13}$ represents a hydrogen atom, a halogen atom, or a monovalent hydrocarbon group optionally having a substituent; $R^{14}$ represents a hydrogen atom or a monovalent hydrocarbon group optionally having a substituent; $X^{12}$ represents a divalent hydrocarbon group having 3 or more carbon atoms and optionally having a substituent; $Y^{23}$ and $Y^{24}$ each independently represent a single bond, an oxygen atom, a sulfur atom, or $NR^{311}$ (a $-NR^{311}-$ group) ; $R^{311}$ represents a hydrogen atom or a monovalent hydrocarbon group optionally having a substituent; when $R^{311}$ is a monovalent hydrocarbon group, this $R^{311}$ is optionally bound to one of $R^{13}$ and $X^{12}$ to form a ring; $r^{12}$ represents 0, 1, or 2; $n^{12}$ represents 2 or 3; and two of $R^{13}$ and $X^{12}$ are optionally bound to each other to form a ring.

The hydrocarbon groups represented by $R^{13}$ and $R^{14}$ have the same meanings as the hydrocarbon groups represented by $R^1$ and $R^2$ in the above-described Formula (1), respectively. Further, $R^{311}$ represents a hydrogen atom or a hydrocarbon group. The hydrocarbon group represented by $R^{311}$ has the same meaning as the hydrocarbon group prescribed for $R^1$.

As the conditions of the atoms constituting Formula (1-5), the above-described conditions of the corresponding atoms in Formula (1) can be applied in the same manner, including preferred conditions.

From the standpoint of forming a coating film on the active material surface in a preferred manner with limited electrochemical side reaction, the moiety corresponding to $A^1$ in Formula (1) is preferably a sulfonic acid ester structure.

Further, from the standpoint of allowing the formation of the coating film to proceed in a preferred manner and obtaining a proper balance between the resistance and the insulation of the coating film, $n^{12}$ is preferably 2.

Still further, from the standpoint of obtaining a proper balance between the resistance and the insulation of the coating film, $R^{13}$ and $X^{12}$ preferably have a structure in which they are not bound to form a ring.

As the compound represented by Formula (1-5), specifically, compounds of a mode having a sulfonic acid ester structure, particularly a mode in which $Y^{23}$ is a single bond, $Y^{24}$ is an oxygen atom, $n^{12}$ is 2 or 3, and $X^{12}$ is an alkylene

group having 3 or more carbon atoms, are preferred and, thereamong, the compound represented by Formula (1-5) is preferably a compound selected from the above-exemplified compounds represented by Formulae (F3-35), (F2-35), and (F2-119) to (F2-124); compounds of a mode in which $R^{13}$ is a methyl group or an ethyl group are more preferred and, thereamong, the compound represented by Formula (1-5) is preferably a compound selected from the above-exemplified compounds represented by Formulae (F3-35) and (F2-35); and compounds of a mode in which $R^{13}$ is a methyl group are still more preferred and, thereamong, the compound represented by Formula (1-5) is preferably a compound selected from the above-exemplified compounds represented by Formulae (F3-35) and (F2-35).

Moreover, from the standpoint of improving the effect of inhibiting the generation of gas during high-temperature storage, $n^{12}$ is preferably 3.

Yet another embodiment of the present invention is a compound represented by the following Formula (1-6) . The effects obtained by this compound as well as the use, the structural conditions and the like of this compound are the same as those of the above-described compound represented by Formula (1), and can be used as one mode of the compound represented by Formula (1) .

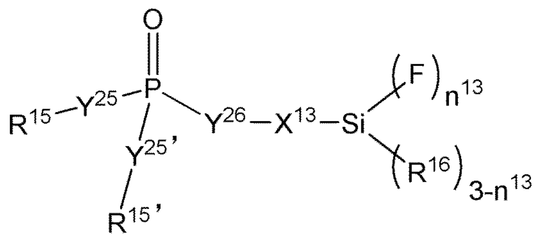

(1-6)

In Formula (1-6), $R^{15}$ and $R^{15'}$ each independently represent a hydrogen atom, a halogen atom, or a monovalent hydrocarbon group optionally having a substituent; $R^{16}$ represents a hydrogen atom or a monovalent hydrocarbon group optionally having a substituent; $X^{13}$ represents a divalent hydrocarbon group having 3 or more carbon atoms and optionally having a substituent; $Y^{25}$, $Y^{25'}$, and $Y^{26}$ each independently represent a single bond, an oxygen atom, a sulfur atom, or $NR^{321}$; $R^{321}$ represents a hydrogen atom or a monovalent hydrocarbon group optionally having a substituent; when $R^{321}$ is a monovalent hydrocarbon group, this $R^{321}$ is optionally bound to one of $R^{15}$ and $X^{13}$ to form a ring; $n^{13}$ represents 2 or 3; and two of $R^{15}$ and $X^{13}$ are optionally bound to each other to form a ring.

The monovalent hydrocarbon groups represented by $R^{15}$ and $R^{16}$ have the same meanings as the hydrocarbon groups represented by $R^1$ and $R^2$ in the above-described Formula (1), respectively. Further, $R^{321}$ represents a hydrogen atom or a hydrocarbon group. The hydrocarbon group represented by $R^{321}$ has the same meaning as the hydrocarbon group prescribed for $R^1$.

As the conditions of the atoms constituting Formula (1-6), the above-described conditions of the corresponding atoms in Formula (1) can be applied in the same manner, including preferred conditions.

From the standpoint of forming a coating film on the active material surface in a preferred manner with limited electrochemical side reaction, the moiety corresponding to $A^1$ in Formula (1) is preferably a phosphoric acid ester or phosphonic acid ester structure.

From the standpoint of obtaining a proper balance between the resistance and the insulation of the coating film, $n^{13}$ is preferably 2.

Further, from the standpoint of obtaining a proper balance between the resistance and the insulation of the coating film, $R^{15}$ and $X^{13}$ preferably have a structure in which they are not bound to form a ring.

Moreover, from the standpoint of improving the effect of inhibiting the generation of gas during high-temperature storage, $n^{13}$ is preferably 3.

As the compound represented by Formula (1-6), specifically:

compounds of a mode having a phosphonic acid ester structure, particularly a mode in which $Y^{25}$ and $Y^{25'}$ are oxygen atoms, $Y^{26}$ is a single bond, $n^{13}$ is an integer of 1 to 3, and $X^{13}$ is a monovalent hydrocarbon group having 3 or more carbon atoms, are preferred and, thereamong, the compound represented by Formula (1-6) is preferably a compound selected from the above-exemplified compounds represented by Formulae (F3-55) to (F2-57), (F2-55) to (F2-57), and (F2-137) to (F2-148) ; compounds of a mode in which $n^{13}$ is 2 or 3 and $R^{15}$ is a methyl group or an ethyl group are more preferred and, thereamong, the compound represented by Formula (1-6) is preferably a compound selected from the above-exemplified compounds represented by Formulae (F3-55), (F3-56), (F2-55) and (F2-56); and compounds of a mode in which $R^{15}$ is a methyl group is still more preferred and, thereamong, the compound represented by Formula (1-6) is preferably a compound selected from the above-exemplified compounds represented by Formulae (F3-56) and (F2-56); or

compounds of a mode having a phosphoric acid ester structure, particularly a mode in which $Y^{25}$, $Y^{25'}$, and $Y^{26}$ are

oxygen atoms, $n^{13}$ is an integer of 1 to 3, and $X^{13}$ is a hydrocarbon group having 2 or more carbon atoms, are preferred and, thereamong, the compound represented by Formula (1-6) is preferably a compound selected from the above-exemplified compounds represented by Formulae (F3-44), (F3-45), (F2-44), (F2-45), and (F2-125) to (F2-136); compounds of a mode in which $n^{13}$ is 2 or 3 and $R^{15}$ is a methyl group or an ethyl group are more preferred and, thereamong, the compound represented by Formula (1-6) is preferably a compound selected from the above-exemplified compounds represented by Formulae (F3-44), (F3-45), (F2-44), and (F2-45); and compounds of a mode in which $R^{15}$ is an ethyl group is still more preferred and, thereamong, the compound represented by Formula (1-6) is preferably the above-exemplified compound represented by Formulae (F2-45).

The compound represented by Formula (1-4) or (1-6) is preferred since it has a high effect of inhibiting the generation of gas during high-temperature storage and a high effect of improving the resistance increase rate.

In the above-described compounds represented by Formulae (1-4) to (1-6), when a compound is to be selected from the standpoint of obtaining a proper balance between the resistance and the insulation of the coating film, compounds represented by the following Formulae are preferred.

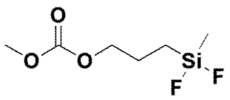
(1-4-1)

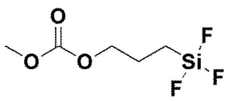
(1-4-2)

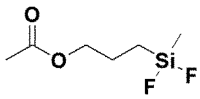
(1-4-3)

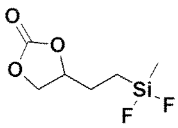
(1-4-4)

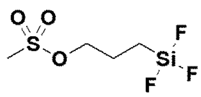
(1-5-1)

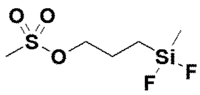
(1-5-2)

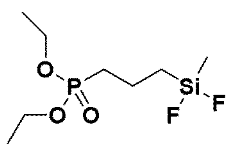
(1-6-1)

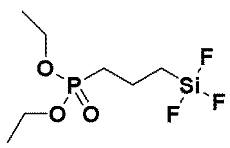
(1-6-2)

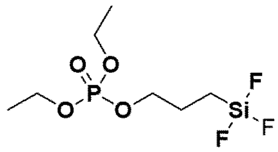

(1-6-3)

Thereamong, from the standpoint of forming the above-described insulating coating film in a preferred manner, a compound represented by the following Formula (1-4-1) or (1-4-2) is particularly preferred.

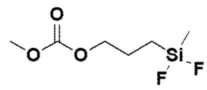

(1-4-1)

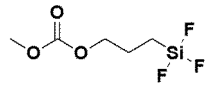

(1-4-2)

The content of the compound represented by Formula (1) is usually not less than 0.001% by mass, preferably not less than 0.01% by mass, more preferably not less than 0.1% by mass, still more preferably not less than 0.2% by mass, but usually 10% by mass or less, preferably 5.0% by mass or less, more preferably 3.0% by mass or less, particularly preferably 2.0% by mass or less, most preferably 1.0% by mass or less, with respect to a total amount of the nonaqueous electrolytic solution according to the present embodiment.

When the content of the compound represented by Formula (1) with respect to a total amount of the nonaqueous electrolytic solution is in the above-described range, concentration of the compound represented by Formula (1) into active materials progresses in a preferred manner, so that a battery with reduced gas generation during high-temperature storage can be produced.

The compound represented by Formula (1) can be produced by, but not limited to: any of the following known methods, or a combination of the following known methods.

A silane compound having various atomic groups can be synthesized by a hydrosilylation reaction with a platinum catalyst, using an olefin and a hydrosilane compound as raw materials. A fluorosilane compound can be synthesized by fluorination of a chlorosilane compound or an alkoxysilane compound with, for example, a metal fluoride, a boron trifluoride, or a boron trifluoride complex. A fluorosilane compound having various atomic groups can be synthesized by a combination of the above-described hydrosilylation reaction and fluorination reaction.

<A1-2. Electrolyte>

Similarly to a general nonaqueous electrolytic solution, the nonaqueous electrolytic solution of the present embodiment usually contains an electrolyte as its component. The electrolyte used in the nonaqueous electrolytic solution of the present embodiment is not particularly limited as long as it is an alkali metal salt, and a lithium salt such as $LiBF_4$, $LiPF_6$, LiN $(FSO_2)_2$, LiN $(CF_3SO_2)_2$, or lithium difluorooxalatoborate can be preferably used. The lithium salt may be used singly, or in combination of two or more thereof.

A total concentration of alkali metal salts in the nonaqueous electrolytic solution is not particularly limited; however, it is usually 8% by mass or higher, preferably 8.5% by mass or higher, more preferably 9% by mass or higher, with respect to a total amount of the nonaqueous electrolytic solution. An upper limit of the total concentration is usually 18% by mass or lower, preferably 17% by mass or lower, more preferably 16% by mass or lower. When the total concentration of alkali metal salts, which are electrolytes, is in this range, the nonaqueous electrolytic solution has an electrical conductivity appropriate for battery operation, so that sufficient output characteristics tend to be obtained.

<A1-3. Nonaqueous Solvent>

Similarly to a general nonaqueous electrolytic solution, the nonaqueous electrolytic solution of the present embodiment usually contains, as its main component, a nonaqueous solvent that dissolves the above-described electrolyte. The nonaqueous solvent is not particularly limited, and any known organic solvent can be used. Examples of the organic solvent include: saturated cyclic carbonates, such as ethylene carbonate, propylene carbonate, and butylene carbonate; linear carbonates, such as dimethyl carbonate, diethyl carbonate, and ethyl methyl carbonate; carboxylic acid esters, such as methyl acetate, ethyl acetate, propyl acetate, and butyl acetate; ether-based compounds, such as dimethoxymethane, diethoxymethane, ethoxymethoxymethane, tetrahydrofuran, 1,3-dioxane, and 1,4-dioxane; and sulfone-based compounds, such as 2-methylsulfolane, 3-methylsulfolane, 2-fluorosulfolane, 3-fluorosulfolane, dimethyl

sulfone, ethyl methyl sulfone, and monofluoromethyl methyl sulfone. The organic solvent is preferably a saturated cyclic carbonate, a linear carbonate, or a carboxylic acid ester, more preferably a saturated cyclic carbonate or a linear carbonate. These nonaqueous solvents may be used singly, or in combination of two or more thereof.

<A1-4. Auxiliary Agent>

The nonaqueous electrolytic solution of the present embodiment may also contain an auxiliary agent within a range that the effects of the present invention are exerted. Examples of the auxiliary agent include:

unsaturated cyclic carbonates, such as vinylene carbonate, vinylethylene carbonate, and ethynylethylene carbonate;
fluorinated cyclic carbonates, such as monofluoroethylene carbonate, 4,4-difluoroethylene carbonate, 4,5-difluoroethylene carbonate, and 4,5-difluoro-4,5-dimethylethylene carbonate;
carbonate compounds, such as methoxyethyl methyl carbonate;
spiro compounds, such as methyl-2-propynyl oxalate;
sulfur-containing compounds, such as ethylene sulfite;
isocyanate compounds, for example, cycloalkylene group-containing diisocyanates such as 1,3-bis(isocyanatomethyl)cyclohexane, trimeric compounds derived from a compound having at least two isocyanate groups in the molecule, such as triallyl isocyanurate, and aliphatic polyisocyanates obtained by adding a polyhydric alcohol to the trimeric compounds;
nitrogen-containing compounds, such as 1-methyl-2-pyrrolidinone;
hydrocarbon compounds, such as cycloheptane;
fluorine-containing aromatic compounds, such as fluorobenzene;
silane compounds, such as tris(trimethylsilyl) borate;
ester compounds, such as 2-propynyl 2-(methanesulfonyloxy)propionate; and
lithium salts, such as lithium ethylmethyloxycarbonyl phosphonate.

These auxiliary agents may be used singly, or in combination of two or more thereof. By adding these auxiliary agents, the generation of gas during initial conditioning can be inhibited, and the capacity retention characteristics after high-temperature storage and the cycle characteristics can be improved.
Particularly, in the nonaqueous electrolytic solution of the present embodiment, it is preferred to use at least one selected from unsaturated cyclic carbonates and fluorine atom-containing cyclic carbonates since this further inhibits the generation of gas during initial conditioning, so that a battery unlikely to be swollen can be obtained.
The nonaqueous electrolytic solution may also contain, as the auxiliary agent, a phosphate having a P=O bond and a P-F bond, a salt having an $FSO_2$ skeleton, or an oxalate. From the standpoint of forming a composite coating film with the compound represented by Formula (1) in a preferred manner, the nonaqueous electrolytic solution preferably contains one or more compounds selected from the group consisting of a phosphate having a P=O bond and a P-F bond, a salt having an $FSO_2$ skeleton, and an oxalate and, from the standpoint of reducing the amount of gas generation during charged storage and inhibiting an increase in the internal resistance, the nonaqueous electrolytic solution preferably contains a phosphate having a P=O bond and a P-F bond, and/or a salt having an $FSO_2$ skeleton.
A total content of the compounds selected from the group consisting of a phosphate having a P=O bond and a P-F bond, a salt having an $FSO_2$ skeleton, and an oxalate is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, in 100% by mass of the nonaqueous electrolytic solution (with respect to a total amount of the nonaqueous electrolytic solution) . When two or more auxiliary agents are used in combination, a total content thereof preferably satisfies the above-described range.

(Phosphate Having P=O Bond and P-F Bond)

The phosphate having a P=O bond and a P-F bond is not particularly limited as long as it is a phosphate that contains a P=O bond and a P-F bond in the molecule.
Examples of a counter cation of a phosphate having a P-F bond include alkali metals such as lithium, sodium, and potassium, among which lithium is preferred.
Examples of a fluorophosphate having a P=O bond include: monofluorophosphates, such as $Li_2PO_3F$; and difluorophosphates, such as $LiPO_2F_2$, $NaPO_2F_2$, and $KPO_2F_2$.
Particularly, from the standpoint of further enhancing the effect of improving the charge-discharge rate characteristics and the impedance characteristics in addition to the effect of inhibiting the generation of gas during high-temperature storage, a difluorophosphate is preferred, and lithium difluorophosphate is more preferred.

A fluorophosphate may be used singly, or two or more thereof may be used in any combination at any ratio. The content of the fluorophosphate (a total content when two or more fluorophosphates are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the fluorophosphate is in this range, the characteristics of a nonaqueous electrolytic solution secondary battery, particularly the durability characteristics or the continuous charging characteristics can be markedly improved. Although the mechanism of this effect is not clear, it is believed that, by mixing the fluorophosphate at the above-described ratio, side reactions of additives on electrodes are minimized.

The mass ratio between the compound represented by Formula (1) and the phosphate having a P=O bond and a P-F bond (a total amount when two or more thereof are used), [compound represented by Formula (1)/phosphate having a P=O bond and a P-F bond], is usually 1/100 or higher, preferably 10/100 or higher, more preferably 20/100 or higher, still more preferably 25/100 or higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, side reactions of additives on electrodes are minimized.

When the nonaqueous electrolytic solution contains $LiPF_6$, the mass ratio of the phosphate having a P=O bond and a P-F bond (a total amount when two or more thereof are used) with respect to the content of $LiPF_6$ (fluorophosphate/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.

It is noted here that the content of the phosphate having a P=O bond and a P-F bond is determined by a nuclear magnetic resonance (NMR) analysis. Usually, an NMR analysis is performed; however, an ion chromatography (IC) analysis is also performed in such a case where it is difficult to determine the attribution of other compound based on a solvent peak.

(Salt Having $FSO_2$ Skeleton)

The salt having an $FSO_2$ skeleton used in the present embodiment is not particularly limited as long as it is a salt that contains an $FSO_2$ skeleton in the molecule.

Examples of a counter cation of the salt having an $FSO_2$ skeleton include alkali metals such as lithium, sodium, and potassium, among which lithium is preferred.

Examples of the salt having an $FSO_2$ skeleton include:

fluorosulfonates, such as $FSO_3Li$, $FSO_3Na$, $FSO_3K$, $FSO_3(CH_3)_4N$, $FSO_3(C_2H_5)_4N$, and $FSO_3(n\text{-}C_4H_9)_4N$;
fluorosulfonylimide salts, such as $LiN(FSO_2)_2$ and $LiN(FSO_2)(CF_3SO_2)$; and
fluorosulfonylmethide salts, such as $LiC(FSO_2)_3$.

Particularly, from the standpoint of further enhancing the effect of improving the charge-discharge rate characteristics and the impedance characteristics in addition to the effect of inhibiting the generation of gas during high-temperature storage, a fluorosulfonate is preferred, and lithium fluorophosphate is more preferred.

The salt having an $FSO_2$ skeleton may be used singly, or two or more thereof may be used in any combination at any ratio. The content of the salt having an $FSO_2$ skeleton (a total content when two or more thereof are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the salt having an $FSO_2$ skeleton is in this range, the characteristics of a nonaqueous electrolytic solution secondary battery, particularly the durability characteristics or the continuous charging characteristics can be markedly improved. Although the mechanism of this effect is not clear, it is believed that, by mixing the salt having an $FSO_2$ skeleton at the above-described ratio, side reactions of additives on electrodes are minimized.

The mass ratio between the compound represented by Formula (1) and the salt having an $FSO_2$ skeleton (a total amount when two or more thereof are used), [compound represented by Formula (1)/salt having an $FSO_2$ skeleton], is usually 1/100 or higher, preferably 10/100 or higher, more preferably 20/100 or higher, still more preferably 25/100 or

higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, side reactions of additives on electrodes are minimized.

When the nonaqueous electrolytic solution contains $LiPF_6$, the mass ratio of the salt having an $FSO_2$ skeleton (a total amount when two or more thereof are used) with respect to the content of $LiPF_6$ (salt having an $FSO_2$ skeleton/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.

It is noted here that the content of the salt having an $FSO_2$ skeleton is determined by a nuclear magnetic resonance (NMR) analysis. Usually, an NMR analysis is performed; however, an ion chromatography (IC) analysis is also performed in such a case where it is difficult to determine the attribution of other compound based on a solvent peak.

(Oxalate)

The oxalate is not particularly limited as long as it is a compound that contains at least one oxalate skeleton in the molecule.

Examples of a counter cation of the oxalate include alkali metals such as lithium, sodium, and potassium, among which lithium is preferred.

Examples of the oxalate include:

oxalatoborates, such as lithium bis(oxalato)borate and lithium difluorooxalatoborate; and
oxalatophosphates, such as lithium tetrafluorooxalatophosphate, lithium difluorobis(oxalato)phosphate, and lithium tris(oxalato)phosphate.

Particularly, from the standpoint of further enhancing the effect of improving the charge-discharge rate characteristics and the impedance characteristics in addition to the effect of inhibiting the generation of gas during high-temperature storage, an oxalatoborate is preferred, and lithium bis(oxalato)borate is more preferred.

The oxalate may be used singly, or two or more thereof may be used in any combination at any ratio. The content of the oxalate (a total content when two or more thereof are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the oxalate is in this range, the characteristics of a nonaqueous electrolytic solution secondary battery, particularly the durability characteristics or the continuous charging characteristics can be markedly improved. Although the mechanism of this effect is not clear, it is believed that, by mixing the oxalate at the above-described ratio, side reactions of additives on electrodes are minimized.

The mass ratio between the compound represented by Formula (1) and the oxalate (a total amount when two or more thereof are used), [compound represented by Formula (1)/oxalate], is usually 1/100 or higher, preferably 10/100 or higher, more preferably 20/100 or higher, still more preferably 25/100 or higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, side reactions of additives on electrodes are minimized.

When the nonaqueous electrolytic solution contains $LiPF_6$, the mass ratio of the oxalate (a total amount when two or more thereof are used) with respect to the content of $LiPF_6$ (oxalate/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.

It is noted here that the content of the oxalate is determined by a nuclear magnetic resonance (NMR) analysis.

Usually, an NMR analysis is performed; however, an ion chromatography (IC) analysis is also performed in such a case where it is difficult to determine the attribution of other compound based on a solvent peak.

Some additives are mentioned as salts of electrolytes and, in such a case, the concentration range thereof is used for judgement. For example, a certain fluorinated inorganic salt may be judged as an electrolyte when it is contained in the nonaqueous electrolytic solution in an amount of 10% by mass, and a certain salt having an oxalate skeleton may be judged as an additive when it is contained in an amount of 0.5% by mass.

A total content of auxiliary agents is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, in 100% by mass of the nonaqueous electrolytic solution (with respect to a total amount of the nonaqueous electrolytic solution) . When two or more auxiliary agents are used in combination, a total content thereof preferably satisfies the above-described range.

<A2. Nonaqueous Electrolytic Solution Battery>

The nonaqueous electrolytic solution battery according to one embodiment of the present invention is a nonaqueous electrolytic solution battery that includes a positive electrode, a negative electrode, and a nonaqueous electrolytic solution which is the above-described nonaqueous electrolytic solution according to the present embodiment. More particularly, the nonaqueous electrolytic solution battery according to one embodiment of the present invention includes: a positive electrode which includes a current collector and a positive electrode active material layer on at least a portion of the surface of the current collector, and is capable of occluding and releasing metal ions; a negative electrode which includes a current collector and a negative electrode active material layer on at least a portion of the surface of the current collector, and is capable of occluding and releasing metal ions; and a nonaqueous electrolytic solution which contains the above-described compound represented by Formula (1) along with an alkali metal salt and a nonaqueous solvent.

<A2-1. Battery Configuration>

The nonaqueous electrolytic solution battery of the present embodiment has the same configuration as that of a conventionally known nonaqueous electrolytic solution battery, except for the above-described nonaqueous electrolytic solution. The nonaqueous electrolytic solution battery usually has a form in which the positive electrode and the negative electrode are laminated via a porous membrane (separator) impregnated with the nonaqueous electrolytic solution, and these components are housed in a casing (outer package).

The shape of the nonaqueous electrolytic solution battery of the present embodiment is not particularly limited and may be any of, for example, a cylindrical shape, a prismatic shape, a laminated shape, a coin shape, and a large-sized shape.

<A2-2. Nonaqueous Electrolytic Solution>

As the nonaqueous electrolytic solution, the above-described nonaqueous electrolytic solution according to the present embodiment is used. It is noted here that the above-described nonaqueous electrolytic solution can also be blended with other nonaqueous electrolytic solution within a range that does not depart from the gist of the present invention.

<A2-3. Positive Electrode>

The "positive electrode" refers to an electrode which includes a current collector and a positive electrode active material on at least a portion of the surface of the current collector. As for other constitutions, conventionally known constitutions can be employed.

A lithium-transition metal compound is a compound having a structure that allows dissociation and intercalation of lithium ions, and examples thereof include sulfides, phosphate compounds, silicate compounds, borate compounds, and lithium-transition metal composite oxides. Thereamong, phosphate compounds and lithium-transition metal composite oxides are preferred, and lithium-transition metal composite oxides are more preferred.

Examples of the lithium-transition metal composite oxides include those belonging to a spinel structure that is three-dimensionally diffusible, or a layered structure that allows two-dimensional diffusion of lithium ions.

Lithium-transition metal compounds having a spinel structure are generally represented by the following composition formula (11):

$$Li_{x'}M'_2O_4 \qquad (11)$$

(wherein, x' satisfies $1 \leq x' \leq 1.5$, and M' represents at least one transition metal element).

Specific examples of such lithium-transition metal compounds include $LiMn_2O_4$, $LiCoMnO_4$, $LiNi_{0.5}Mn_{1.5}O_4$, and $LiCoVO_4$.

Lithium-transition metal compounds having a layered structure are generally represented by the following composition formula (12):

$$Li_{1+x}MO_2 \qquad (12)$$

(wherein, x satisfies $-0.1 \leq x \leq 0.5$, and M represents at least one transition metal element).

Specific examples of such lithium-transition metal compounds include $LiCoO_2$, $LiNiO_2$, $LiNi_{0.85}Co_{0.10}Al_{0.05}O_2$, $LiNi_{0.80}Co_{0.15}Al_{0.05}O_2$, $LiNi_{0.33}Co_{0.33}Mn_{0.33}O_2$, $Li_{1.05}Ni_{0.33}Co_{0.33}Mn_{0.33}O_2$, $LiNi_{0.5}Co_{0.2}Mn_{0.3}O_2$, $Li_{1.05}Ni_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$.

Thereamong, from the standpoint of improving the battery capacity, lithium-transition metal composite oxides having a layered structure are preferred, and lithium-transition metal composite oxides represented by the following composition formula (13) are more preferred:

$$Li_{a1}Ni_{b1}M_{c1}O_2 \qquad (13)$$

(wherein, a1, b1, and c1 represent numerical values satisfying $0.90 \leq a1 \leq 1.10$, $0.40 \leq b1 \leq 0.98$, and $0.00 \leq c1 \leq 0.50$, respectively, and satisfy $b1 + c1 = 1$; and M represents at least one element selected from the group consisting of Co, Mn, Al, Mg, Zr, Fe, Ti, and Er).

In the composition formula (13), b1 is preferably not less than 0.55, more preferably not less than 0.60, still more preferably not less than 0.65, particularly preferably not less than 0.70, yet more preferably not less than 0.75, further preferably not less than 0.80, further more preferably not less than 0.90, and c1 is preferably not less than 0.01.

The positive electrode active material is not particularly limited as long as it is lithium cobaltate, or a transition metal oxide containing at least Ni and Co in which Ni and Co account for not less than 50% by mole of transition metals and which is capable of electrochemically occluding and releasing metal ions, and the positive electrode active material is preferably, for example, a transition metal oxide which is capable of electrochemically occluding and releasing lithium ions and contains lithium along with at least Ni and Co and in which Ni and Co account for not less than 60% by mole of transition metals. Ni and Co have a redox potential suitable for the use as positive electrode materials of a secondary battery, and are thus appropriate for high-capacity applications.

Particularly, a mode in which the positive electrode active material is a transition metal oxide represented by the following composition formula (14) is preferred:

$$Li_{a2}Ni_{b2}Co_{c2}M2_{d2}O_2 \qquad (14)$$

In the composition formula (14), a2, b2, c2, and d2 represent numerical values of $0.90 \leq a2 \leq 1.10$, $0.50 \leq b2 \leq 0.98$, $0.01 \leq c2 < 0.50$ and $0.01 \leq d2 < 0.50$, satisfying $b2 + c2 + d2 = 1$, and M2 represents at least one element selected from the group consisting of Mn, Al, Mg, Zr, Fe, Ti, and Er.

In the composition formula (14-2), d2 represents a numerical value of $0.1 \leq d2 < 0.5$.

It is advantageous to control the composition ratios of Ni, Co, and other metal species to be in the above-described respective ranges since this makes the transition metals unlikely to elute out of the positive electrode and, even if they did, Ni and Co would have only a small adverse effect in a nonaqueous secondary battery.

Preferred specific examples include $LiNi_{0.85}Co_{0.10}Al_{0.05}O_2$, $LiNi_{0.80}Co_{0.15}Al_{0.05}O_2$, $LiNi_{0.5}Co_{0.2}Mn_{0.3}O_2$, $Li_{1.05}Ni_{0.50}Co_{0.20}Mn_{0.30}O_2$, $LiNi_{0.6}Co_{0.2}Mn_{0.2}O_2$, and $LiNi_{0.8}Co_{0.1}Mn_{0.1}O_2$.

<A2-4. Negative Electrode>

The "negative electrode" refers to an electrode which includes a current collector and a negative electrode active material on at least a portion of the surface of the current collector. As for other constitutions, conventionally known constitutions can be employed.

The negative electrode active material is not particularly limited as long as it is capable of electrochemically occluding and releasing metal ions. Specific examples of the negative electrode active material include carbon-based materials, materials containing a Li-alloyable metal element and/or metalloid element, lithium-containing metal composite oxide materials, and mixtures of these materials, among which materials containing a Li-alloyable metal element and/or metalloid element are preferred since such active materials have a high capacity per weight and volume and improve the battery energy density. Any of these materials may be used singly, or two or more thereof may be used in any

combination. From the standpoint of obtaining good cycle characteristics and good safety as well as excellent continuous charging characteristics, it is preferred to use a carbon-based material, a material containing a Li-alloyable metal element and/or metalloid element, or a mixture of a carbon-based material and a Li-alloyable metal element and/or metalloid element.

Examples of the carbon-based material include natural graphite, artificial graphite, amorphous carbon, carbon-coated graphite, graphite-coated graphite, and resin-coated graphite. Thereamong, natural graphite is preferred.

Examples of the natural graphite include scaly graphite, flake graphite, and graphite particles obtained by performing a treatment, such as spheronization or densification, on any of these graphites as a raw material. Thereamong, spherical or ellipsoidal graphite particles obtained by a spheronization treatment are particularly preferred from the standpoints of the packing property of the particles and the charge-discharge rate characteristics.

The average particle size (d50) of the graphite particles is usually 1 um to 100 μm.

As the material containing a Li-alloyable metal element and/or metalloid element, any conventionally known such material can be used; however, from the standpoints of the capacity and the cycle life, the material containing a metal element and/or a metalloid element is preferably, for example, a metal selected from the group consisting of Sb, Si, Sn, Al, As, and Zn, or a compound thereof. An alloy composed of two or more metals may be used as well, and the material containing a metal element and/or a metalloid element may also be an alloy material formed by two or more metal elements.

Examples of a metal compound include metal oxides, metal nitrides, and metal carbides. Thereamong, from the standpoint of increasing the capacity, Si metal (hereinafter, may be referred to as "Si") or an Si-containing compound (particularly an Si oxide) is preferred.

In the present specification, Si and an Si-containing inorganic compound are collectively referred to as "Si compound" . Specific examples of an Si compound include $SiO_x$, $SiN_x$, $SiC_x$, and $SiZ_xO_y$ (wherein, Z = C or N). The Si compound is preferably an Si oxide ($SiO_x$) because of its higher theoretical capacity than graphite, or amorphous Si or nano-sized Si crystals from the standpoint of facilitating the migration of alkali ions such as lithium ions to obtain a high capacity.

This $SiO_x$ is obtained using silicon dioxide ($SiO_2$) and Si as raw materials, and the value of x is usually $0 < x < 2$.

As the material containing a Li-alloyable metal element and/or metalloid element, metal particles alloyable with Li are preferred from the standpoint of increasing the electrode density.

From the standpoint of the cycle life, the average particle size (d50) of the metal particles alloyable with Li is usually 0.01 um to 10 um.

A mixture of a material containing a Li-alloyable metal element and/or metalloid element and a carbon-based material, which is used as the negative electrode active material, may be a mixture in which the above-described material containing a Li-alloyable metal element and/or metalloid element and the above-described carbon-based material are mixed in a state of being mutually independent, or may be a composite in which the material containing a Li-alloyable metal element and/or metalloid element exists on the surface or the inside of graphite particles.

The content ratio of the material containing a Li-alloyable metal element and/or metalloid element is usually 5% by mass or higher, preferably 10% by mass or higher, more preferably 15% by mass or higher, still more preferably 20% by mass or higher, but usually 99% by mass or lower, preferably 50% by mass or lower, more preferably 40% by mass or lower, particularly preferably 25% by mass or lower, with respect to a total amount of the material containing a Li-alloyable metal element and/or metalloid element and the graphite particles. When this content ratio is in the above-described range, side reactions on the Si surface can be controlled, so that swelling of the negative electrode in the nonaqueous electrolytic solution battery can be favorably controlled, which is preferred.

The content ratio of the metal particles alloyable with Li is usually 0.1% by mass or higher, preferably 0.5% by mass or higher, more preferably 1.0% by mass or higher, still more preferably 2.0% by mass or higher, but usually 99% by mass or lower, preferably 50% by mass or lower, more preferably 40% by mass or lower, still more preferably 30% by mass or lower, yet still more preferably 25% by mass or lower, further more preferably 20% by mass or lower, particularly preferably 15% by mass or lower, most preferably 10% by mass or lower, with respect to a total amount of the metal particles alloyable with Li and the graphite particles. When the content ratio of the metal particles alloyable with Li is in this range, side reactions on the Si surface can be controlled, so that the nonaqueous electrolytic solution battery can be provided with a sufficient capacity, which is preferred.

<A2-5. Separator>

A separator is usually arranged between the positive electrode and the negative electrode for the purpose of inhibiting a short circuit. In this case, the nonaqueous electrolytic solution according to the present embodiment is usually impregnated into this separator. As the separator, any conventionally known separator can be used.

<B. Second Embodiment>

Another embodiment of the present invention is a nonaqueous electrolytic solution battery, and the nonaqueous electrolytic solution according to this nonaqueous electrolytic solution battery contains the below-described compound represented by Formula (4).

The mechanism in which a reduction in the amount of gas generation during high-temperature storage of a nonaqueous electrolytic solution battery is enhanced by using the nonaqueous electrolytic solution containing the compound represented by Formula (4) is not clear; however, it is presumed as follows.

<B1. Nonaqueous Electrolytic Solution>

The compound represented by Formula (4) contains, in its molecule, a divalent or trivalent atomic group having at least one atom selected from an oxygen atom, a nitrogen atom, a sulfur atom, a phosphorus atom, and a boron atom. This atomic group is a polar group; therefore, the compound represented by Formula (4) tends to interact with carbon and the like on the surface of a negative electrode active material and be thereby localized in the vicinity of the surface of the negative electrode active material. In addition, the compound represented by Formula (4) has, in its molecule, a structure in which two or more fluorine (F) atoms are bound to a silicon (Si) atom. When two or more F atoms are bound to a Si atom, the electron density of the Si atom is markedly reduced as compared to a case where a single F atom is bound to the Si atom. Since this leads to an increase in the reaction activity of the Si atom of the compound represented by Formula (4), for example, electrochemical reduction and a reaction with a reductive decomposition product of an electrolytic solution readily proceed. As a result, an insulating coating film is formed on the negative electrode active material and, for example, the surface is modified in a preferred manner when Si is used in the negative electrode active material. In addition, it is presumed that the compound represented by Formula (4) is also concentrated on the surface of a positive electrode and undergoes electrochemical oxidation and a reaction with an oxidative decomposition product of the electrolytic solution to form an insulating coating film in the same manner as on a negative electrode.

Further, by using the nonaqueous electrolytic solution containing the compound represented by Formula (4) in combination with a negative electrode that includes a negative electrode active material containing a material containing a Li-alloyable metal element and/or metalloid element, a coating film is formed by the compound represented by Formula (4) on the surface of the material containing a Li-alloyable metal element and/or metalloid element, so that a nonaqueous electrolytic solution battery in which swelling is inhibited can be obtained.

From the above, the present inventors believe that the compound represented by Formula (4) contributes to a reduction in the amount of gas generation during high-temperature storage.

<B1-1-1. Compound Represented by Formula (4)>

The nonaqueous electrolytic solution according to the present embodiment is characterized by containing a compound represented by the following Formula (4).

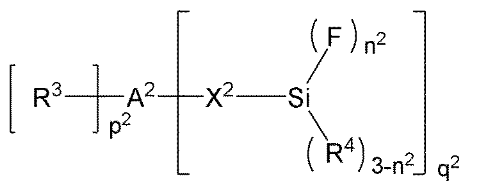

(4)

In Formula (4), $R^3$ represents a hydrogen atom, a halogen atom, or a monovalent hydrocarbon group optionally having a substituent; $R^4$ represents a hydrogen atom, a monovalent hydrocarbon group optionally having a substituent, or an alkoxy group optionally having a substituent; $X^2$ represents a divalent hydrocarbon group optionally having a substituent; $n^2$ represents an integer of 1 to 3; $p^2$ represents an integer of 0 to 2, $q^2$ represents an integer of 1 to 3, and $p^2 + q^2 = 2$ or 3; two of $R^3$(s) and $X^2$(s) are optionally bound to each other to form a ring; and $A^2$ represents a divalent or trivalent atomic group represented by the below-described Formula (5-1), or a trivalent atomic group represented by the below-described Formula (6-1).

(R3)

$R^3$ according to Formula (4) represents a hydrogen atom, a halogen atom, or a monovalent hydrocarbon group having 1 to 12 carbon atoms and optionally having a substituent.

From the standpoint of the ease of industrially handling the compound represented by Formula (4) at the time

of producing and storing the compound as well as at the time of producing an electrolytic solution, $R^3$ is preferably a monovalent hydrocarbon group having 1 to 12 carbon atoms and optionally having a substituent. It is noted here that, when the hydrocarbon group has a substituent, the number of carbon atoms contained in the substituent is not included in the number of carbon atoms of the hydrocarbon group.

Further, from the standpoint of forming the above-described insulating coating film in a preferred manner, $R^3$ is also preferably a halogen atom.

Specific examples of the halogen atom include a fluorine atom, a chlorine atom, a bromine atom, and an iodine atom, and the halogen atom is preferably a fluorine atom.

Specific examples of the monovalent hydrocarbon group include an alkyl group, an alkenyl group, an alkynyl group, an aryl group, and an aralkyl group. Thereamong, from the standpoint of inhibiting a side reaction of the compound represented by Formula (4) on an electrode, the monovalent hydrocarbon group is preferably an alkyl group, an alkenyl group, or an alkynyl group, more preferably an alkyl group or an alkenyl group, particularly preferably an alkyl group.

Examples of the alkyl group include linear alkyl groups, branched alkyl groups, and alkyl groups having a cyclic structure. Thereamong, linear alkyl groups are preferred from the standpoint of forming the above-described insulating coating film in a preferred manner.

Specific examples of the linear alkyl groups include linear alkyl groups having 1 to 12 carbon atoms, such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, and an n-dodecyl group. Thereamong, linear alkyl groups having 1 to 6 carbon atoms are preferred, and linear alkyl groups having 1 to 4 carbon atoms are particularly preferred.

Specific examples of the branched alkyl groups include branched alkyl groups having 1 to 12 carbon atoms, such as a methylethyl group, a methylpropyl group, a methylbutyl group, a methylpentyl group, a methylhexyl group, a methylheptyl group, a methyloctyl group, a methylnonyl group, a methyldecyl group, a methylundecyl group, a dimethylethyl group (a tert-butyl group), a dimethylpropyl group, a dimethylbutyl group, a dimethylpentyl group, a dimethylhexyl group, a dimethylheptyl group, a dimethyloctyl group, a trimethylhexyl group, a trimethylheptyl group, an ethylpentyl group, an ethylhexyl group, an ethylheptyl group, an ethyloctyl group, a propylhexyl group, a propylheptyl group, and a butylhexyl group. Thereamong, branched alkyl groups having 1 to 6 carbon atoms, such as a methylethyl group, a methylpropyl group, a methylbutyl group, a methylpentyl group, a dimethylethyl group (a tert-butyl group), a dimethylpropyl group, and a dimethylbutyl group are preferred, and branched alkyl groups having 1 to 4 carbon atoms, such as a methylethyl group, a methylpropyl group, and a dimethylethyl group (a tert-butyl group) are particularly preferred. It is noted here that, in the above-exemplified branched alkyl groups, the position of a branch is arbitrary.

Specific examples of the alkyl groups having a cyclic structure include alkyl groups having a cyclic structure having 3 to 12 carbon atoms, such as a cyclopropyl group, a cyclobutyl group, a cyclopentyl group, a cyclohexyl group, a cycloheptyl group, a cyclooctyl group, a cyclononyl group, a cyclodecyl group, a cyclohexylmethyl group, a cyclohexylethyl group, a methylcyclohexyl group, a dimethylcyclohexyl group, an ethylcyclohexyl group, and a methylcyclohexylmethyl group.

Thereamong, alkyl groups having a cyclic structure having 3 to 8 carbon atoms, such as a cyclopropyl group, a cyclobutyl group, a cyclopentyl group, a cyclohexyl group, a cycloheptyl group, a cyclooctyl group, a cyclocyclohexylmethyl group, a cyclohexylethyl group, a methylcyclohexyl group, a dimethylcyclohexyl group, an ethylcyclohexyl group, and a methylcyclohexylmethyl group are preferred, and alkyl groups having a cyclic structure having 6 to 8 carbon atoms, such as a cyclohexyl group, a cyclohexylmethyl group, a cyclohexylethyl group, a methylcyclohexyl group, a dimethylcyclohexyl group, an ethylcyclohexyl group, and a methylcyclohexylmethyl group are particularly preferred.

Among the above-exemplified groups, a methyl group, an ethyl group, an *n*-propyl group, an *n*-butyl group, a *tert*-butyl group, an *n*-pentyl group, and an *n*-hexyl group are preferred, a methyl group, an ethyl group, an *n*-propyl group, an *n*-butyl group, and a *tert*-butyl group are more preferred, and a methyl group and an ethyl group are particularly preferred. When the monovalent hydrocarbon group is any of the above-described alkyl groups, the compound represented by Formula (1) tends to be localized in the vicinity of the surface of a positive electrode active material and/or the vicinity of the surface of a negative electrode active material, which is preferred.

Specific examples of the alkenyl group include alkenyl groups having 2 to 12 carbon atoms, such as a vinyl group, an allyl group, an isopropenyl group, a methallyl group, a 2-butenyl group, a 3-methyl-2-butenyl group, a 3-butenyl group, and a 4-pentenyl group. Thereamong, the alkenyl group is preferably an alkenyl group having 2 to 6 carbon atoms, such as a vinyl group, an allyl group, a methallyl group, or a 2-butenyl group, more preferably an alkenyl group having 2 to 4 carbon atoms, such as a vinyl group, an allyl group, or a methallyl group, particularly preferably a vinyl group or an allyl group. When the monovalent hydrocarbon group is any of the above-exemplified alkenyl groups, the compound represented by Formula (1) forms an insulating coating film in a preferred manner on the surface of a positive electrode active material and/or the surface of a negative electrode active material, which is preferred.

Specific examples of the alkynyl group include alkynyl groups having 1 to 12 carbon atoms, such as an ethynyl group, a 2-propynyl group, a 2-butynyl group, a 3-butynyl group, a 4-pentynyl group, and a 5-hexynyl group. Thereamong,

the alkynyl group is preferably an alkynyl group having 1 to 6 carbon atoms, such as an ethynyl group, a 2-propynyl group, a 2-butynyl group, or a 3-butynyl group, more preferably an alkynyl group having 2 to 4 carbon atoms, such as a 2-propynyl group or a 3-butynyl group, particularly preferably a 2-propynyl group. When the monovalent hydrocarbon group is any of the above-exemplified alkynyl groups, the compound represented by Formula (4) forms an insulating coating film in a preferred manner on the surface of a positive electrode active material and/or the surface of a negative electrode active material, which is preferred.

Specific examples of the aryl group include aryl groups having 6 to 12 carbon atoms, such as a phenyl group, a tolyl group, and a mesityl group. Thereamong, the aryl group is preferably an aryl group having 6 to 7 carbon atoms, such as a phenyl group or a tolyl group, particularly preferably a phenyl group, since this makes the compound represented by Formula (1) tend to be localized in the vicinity of the surface of a positive electrode active material and/or the vicinity of the surface of a negative electrode active material.

Examples of the aralkyl group include aralkyl groups having 7 to 12 carbon atoms, such as a phenylmethyl group (a benzyl group), a phenylethyl group (a phenethyl group), a phenylpropyl group, a phenylbutyl group, and a phenylisopropyl group. Thereamong, the aralkyl group is preferably an aralkyl group having 7 or 8 carbon atoms, such as a benzyl group or a phenethyl group, particularly preferably a benzyl group, since this makes the compound represented by Formula (4) tend to be localized in the vicinity of the surface of a positive electrode active material and/or the vicinity of the surface of a negative electrode active material.

Examples of the substituent optionally contained in the hydrocarbon group include a cyano group, an isocyanato group, a halogen atom, and a halogen atom-containing group. Thereamong, the substituent is preferably an isocyanato group, a halogen atom, or a halogen atom-containing group, particularly preferably a halogen atom or a halogen atom-containing group. Specific examples and preferred examples of the halogen atom are the same as those prescribed for $R^1$.

Specific examples of the halogen atom-containing group include a fluoromethyl group, a chloromethyl group, a bromomethyl group, an iodomethyl group, a trifluoromethyl group, a 2,2,2-trifluoroethyl group, a 2,2,3,3-tetrafluoropropyl group, and a 2-fluorophenyl group. Thereamong, from the standpoint of inhibiting an electrochemical side reaction, a fluoromethyl group, a trifluoromethyl group, or a 2,2,2-trifluoroethyl group is preferred, and a trifluoromethyl group is particularly preferred.

(R4)

$R^4$ according to Formula (1) represents a hydrogen atom, a monovalent hydrocarbon group optionally having a substituent, or an alkoxy group optionally having a substituent. Thereamong, from the standpoint of hardly causing a side reaction of the compound represented by Formula (1) on an active material, $R^4$ is preferably a monovalent hydrocarbon group optionally having a substituent or an alkoxy group optionally having a substituent, particularly preferably a monovalent hydrocarbon group optionally having a substituent.

The "hydrocarbon group" has the same definition as prescribed for $R^3$, and preferred hydrocarbon groups are also the same.

Specific examples of the alkoxy group include alkoxy groups having 1 to 12 carbon atoms, such as a methoxy group, an ethoxy group, a propoxy group, a butoxy group, a hexyloxy group, an octyloxy group, a decyloxy group, and a dodecyloxy group. Thereamong, alkoxy groups having 1 to 6 carbon atoms, such as a methoxy group, an ethoxy group, a propoxy group, and a butoxy group are preferred and, from the standpoint of allowing the compound represented by Formula (1) to have a limited steric hindrance and be concentrated on the active material surface in a preferred manner, the alkoxy group is particularly preferably a methoxy group or an ethoxy group.

The substituent optionally contained in the alkoxy group has the same definition as the substituent optionally contained in the hydrocarbon group prescribed for $R^3$.

(X2)

$X^2$ according to Formula (1) represents a divalent hydrocarbon group optionally having a substituent. The number of carbon atoms of the divalent hydrocarbon group is preferably 1 to 10, more preferably 1 to 6, particularly preferably 1 to 4. When the number of carbon atoms of the divalent hydrocarbon group is in this range, the compound represented by Formula (1) tends to be localized in the vicinity of the surface of a positive electrode active material and/or the vicinity of the surface of a negative electrode active material, which is preferred. It is noted here that, when the hydrocarbon group has a substituent, the number of carbon atoms contained in the substituent is not included in the number of carbon atoms of the hydrocarbon group.

Specific examples of the divalent hydrocarbon group include alkylene groups and alkenylene groups. Thereamong, alkylene groups are preferred. The substituent optionally contained in the divalent hydrocarbon group has the same definition as the substituent optionally contained in the hydrocarbon group prescribed for $R^3$.

Specific examples of the alkylene groups include linear alkylene groups, branched alkylene groups, and alkylene

groups having a cyclic structure.

Specific examples of the linear alkylene groups include a methylene group, an ethylene group, a propylene group, a butylene group, a pentylene group, a hexylene group, a heptylene group, an octylene group, a nonylene group, and a decylene group.

Specific examples of the branched alkylene groups include a methylethylene group, a methylpropylene group, a methylbutylene group, a methylpentylene group, a methylhexylene group, a methylheptylene group, a methyloctylene group, a methylnonylene group, a dimethylethylene group, a dimethylpropylene group, a dimethylbutylene group, a dimethylpentylene group, a dimethylhexylene group, a dimethylheptylene group, a dimethyloctylene group, a trimethylhexylene group, a trimethylheptylene group, an ethylpentylene group, an ethylhexylene group, an ethylheptylene group, an ethyloctylene group, a propylhexylene group, a propylheptylene group, and a butylhexylene group. It is noted here that, in the above-exemplified branched alkyl groups, the position of a branch is arbitrary.

Specific examples of the alkylene groups having a cyclic structure include a cyclohexylene group.

Among the above-exemplified alkylene groups, a methylene group, an ethylene group, a propylene group, a butylene group, a pentylene group, a hexylene group, a methylethylene group, a methylpropylene group, a methylbutylene group, a methylpentylene group, and a cyclohexylene group are preferred, and a methylene group, an ethylene group, a propylene group, a butylene group, a methylethylene group, and a methylpropylene group are more preferred. When the divalent hydrocarbon group is any of these alkylene groups, the compound represented by Formula (4) tends to be localized in the vicinity of the surface of a positive electrode active material and/or the vicinity of the surface of a negative electrode active material, which is preferred.

(A2)

$A^2$ according to Formula (4) represents a divalent or trivalent atomic group represented by the following Formula (5-1) or the below-described Formula (6-1).

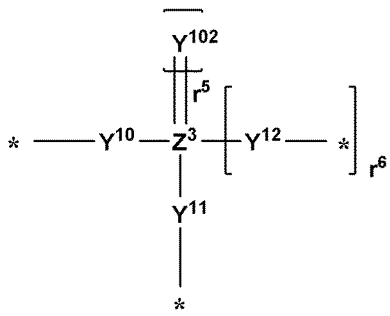

(5-1)

$Z^3$ represents a carbon atom, a sulfur atom, a phosphorus atom, or a boron atom; $Y^{102}$ represents an oxygen atom or a sulfur atom; $Y^{10}$, $Y^{11}$, and $Y^{12}$ each independently represent a single bond, an oxygen atom, a sulfur atom, or $NR^{104}$ (a $-NR^{104}-$ group) ; $R^{104}$ represents a hydrogen atom or a monovalent hydrocarbon group; $R^{104}$ represents a hydrogen atom or a monovalent hydrocarbon group; when $R^{104}$ is a monovalent hydrocarbon group, this $R^{104}$ is optionally bound to one of $R^3$ and $X^2$ in Formula (1) to form a ring;

$r^5$ is 1 when $Z^3$ is a carbon atom; 0, 1, or 2 when $Z^3$ is a sulfur atom; 0 or 1 when $Z^3$ is a phosphorus atom; or 0 when $Z^3$ is a boron atom;

$r^5$ is 0 when $Z^3$ is a carbon atom or a sulfur atom, or 1 when $Z^3$ is a phosphorus atom or a boron atom; and

* represents a binding site with $R^3$ or $X^2$ in Formula (4),

with a proviso that, when $Z^3$ is a sulfur atom and $r^5$ is 2, $Y^{10}$ and $Y^{11}$ are not single bonds simultaneously.

($R^{104}$)

The monovalent hydrocarbon group represented by the above-described $R^{104}$ has the same meaning as the monovalent hydrocarbon group prescribed for $R^1$.

The divalent atomic group represented by Formula (2-1) is, for example, an oxygen atom; a sulfur atom; a divalent atomic group formed of an oxygen atom, a carbon atom, and an oxygen atom, or a hydrogen atom, a carbon atom, and an oxygen atom; or a divalent atomic group formed of a sulfur atom, an oxygen atom, and a sulfur atom, a carbon atom, an oxygen atom, and a sulfur atom, or a hydrogen atom, a carbon atom, an oxygen atom, and a sulfur atom.

Specific examples of the divalent atomic group formed of an oxygen atom, a carbon atom, and an oxygen atom, or a hydrogen atom, a carbon atom, and an oxygen atom include divalent atomic groups having a ketone structure, a carboxylic acid ester structure, or a carbonate structure, particularly atomic groups in which $Z^3$ is a carbon atom, $Y^{102}$

is an oxygen atom, and $Y^{10}$, $Y^{11}$, and $Y^{12}$ are independently a single bond or an oxygen atom.

Specific examples of a divalent group having a ketone structure include a -CO- group.

Specific examples of a divalent group having a carboxylic acid ester structure include a -COO- group.

Specific examples of a divalent group having a carbonate structure include a -OCOO- group.

Thereamong, from the standpoint of forming a coating film on the active material surface in a preferred manner with limited electrochemical side reaction, a -COO- group and a -OCOO- group are particularly preferred.

Specific examples of the divalent atomic group formed of a sulfur atom, an oxygen atom, and a sulfur atom, a carbon atom, an oxygen atom, and a sulfur atom, or a hydrogen atom, a carbon atom, an oxygen atom, and a sulfur atom include divalent groups having a sulfide structure, a sulfone structure, a sulfonic acid ester structure, a sulfuric acid ester structure, a sulfoxide structure, a sulfurous acid ester structure, a sulfinic acid ester structure, a thiocarbonyl structure, or a thioester structure, for example: atomic groups in which $Z^3$ is a carbon atom, $Y^{102}$ is an oxygen atom, and $Y^{10}$, $Y^{11}$, and $Y^{12}$ are sulfur atoms; atomic groups in which $Z^3$ is a carbon atom, $Y^{102}$ is a sulfur atom, and $Y^{10}$, $Y^{11}$, and $Y^{12}$ are independently a single bond, an oxygen atom, or a sulfur atom; and atomic groups in which $Z^3$ is a sulfur atom, $Y^{102}$ is an oxygen atom or a sulfur atom, and $Y^{10}$, $Y^{11}$, and $Y^{12}$ are independently a single bond, an oxygen atom, or an oxygen atom.

Specific examples of a divalent group having a sulfide structure include a -S- group.

Specific examples of a divalent group having a sulfonic acid ester structure include a $-SO_3-$ group.

Specific examples of a divalent group having a sulfuric acid ester structure include a $-OSO_3-$ group.

Specific examples of a divalent group having a sulfoxide structure include a -SO- group.

Specific examples of a divalent group having a sulfurous acid ester structure include a -OSOO- group.

Specific examples of a divalent group having a sulfinic acid ester structure include a -SOO- group.

Specific examples of a divalent group having a thiocarbonyl structure include a -OCSO- group and a -CSO- group.

Specific examples of a divalent group having a thioester structure include a -COS- group, a -OCOS- group, and a -SCOS-group. The divalent atomic group may also be a divalent group having a dithiocarboxylic acid ester structure, such as a -CSS-group, a -OCSS- group, or a -SCSS- group.

Thereamong, from the standpoint of forming a coating film on the active material surface in a preferred manner with limited electrochemical side reaction, a $-SO_3-$ group, a $-OSO_3-$ group, a -OSOO- group, or a -SOO- group is preferred, a $-SO_3-$ group or a $-OSO_3-$ group is more preferred, and a $-SO_3-$ group is particularly preferred.

Specific examples of a trivalent atomic group having at least one atom selected from an oxygen atom, a nitrogen atom, a sulfur atom, a phosphorus atom, and a boron atom include: a nitrogen atom; a phosphorus atom; a boron atom; a trivalent atomic group formed of a carbon atom, a nitrogen atom, and an oxygen atom, or a hydrogen atom, a carbon atom, a nitrogen atom, and an oxygen atom; a trivalent atomic group formed of a carbon atom, a nitrogen atom, and a sulfur atom, a nitrogen atom, an oxygen atom, and a sulfur atom, a hydrogen atom, a carbon atom, a nitrogen atom, and a sulfur atom, or a carbon atom, a nitrogen atom, an oxygen atom, and a sulfur atom; a trivalent atomic group formed of a phosphorus atom, an oxygen atom, and a phosphorus atom, or a hydrogen atom, a nitrogen atom, an oxygen atom, and a phosphorus atom; and a trivalent atomic group formed of a boron atom, or a boron atom and an oxygen atom, particularly atomic groups in which $Z^3$ is a carbon atom, $Y^{102}$ is an oxygen atom, and $Y^{10}$, $Y^{11}$, and $Y^{12}$ are independently $NR^{104}$.

Examples of the trivalent atomic group formed of a carbon atom, a nitrogen atom, and an oxygen atom, or a hydrogen atom, a carbon atom, a nitrogen atom, and an oxygen atom include trivalent groups having an amide structure, a urethane structure, or a urea structure. Specific examples of these trivalent groups include the following atomic groups.

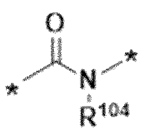 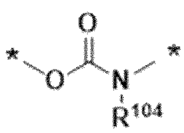 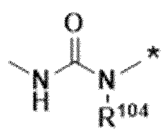

Examples of the trivalent atomic group formed of a carbon atom, a nitrogen atom, and a sulfur atom, a nitrogen atom, an oxygen atom, and a sulfur atom, a hydrogen atom, a carbon atom, a nitrogen atom, and a sulfur atom, or a carbon atom, a nitrogen atom, an oxygen atom, and a sulfur atom include trivalent groups having a thiocarbonyl structure, a thioester structure, or a sulfonamide structure. The trivalent atomic group may also be a trivalent group having a dithiocarboxylic acid ester structure. Specific examples of these trivalent groups include the following atomic groups, for example, atomic groups having a mode in which: $Z^3$ is a carbon atom, $Y^{102}$ is a sulfur atom, and $Y^{10}$, $Y^{11}$, and $Y^{12}$ are independently $NR^{104}$; or $Z^3$ is a carbon atom, $Y^{104}$ is an oxygen atom, and $Y^{10}$, $Y^{11}$, and $Y^{12}$ are independently $NR^{104}$.

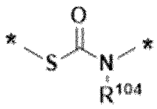 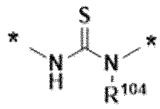 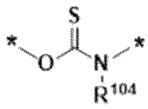 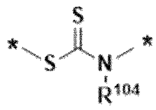

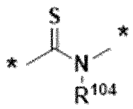 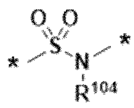

Specific examples of the trivalent atomic group formed of a phosphorus atom, an oxygen atom, and a phosphorus atom, or a hydrogen atom, a nitrogen atom, an oxygen atom, and a phosphorus atom include atomic groups in which $Z^3$ is a phosphorus atom, more specifically trivalent groups having a phosphine oxide structure, a phosphinic acid ester structure, a phosphonic acid ester structure, a phosphoric acid ester structure, a phosphoric acid amide structure, a phosphine structure, a phosphinous acid ester structure, a phosphonous acid ester structure, or a phosphorous acid ester structure.

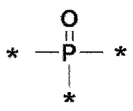 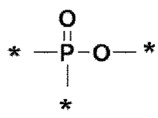 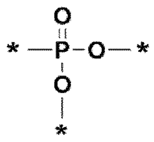 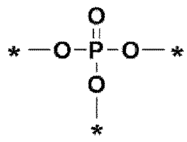 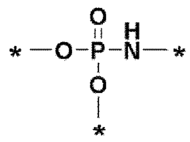

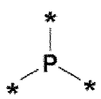 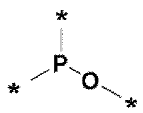 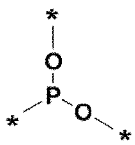 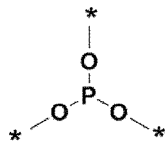

Thereamong, from the standpoint of forming a coating film on the active material surface in a preferred manner with limited electrochemical side reaction, the following atomic groups are preferred.

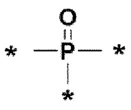 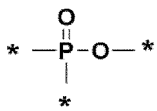 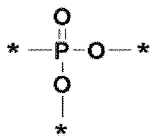 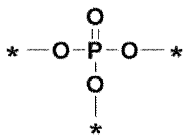

Thereamong, the following atomic groups are particularly preferred.

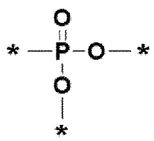 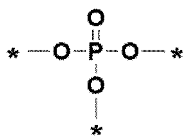

Examples of the trivalent atomic group formed of a boron atom, or a boron atom and an oxygen atom include trivalent groups having a trialkylborane structure, a borinic acid ester structure, a boronic acid ester structure, or a boric acid ester structure. Specific examples of these trivalent groups include the following atomic groups.

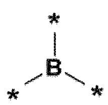 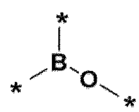 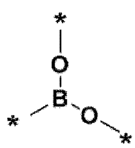 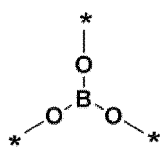

Particularly, from the standpoint of forming a coating film on the active material surface in a preferred manner with limited electrochemical side reaction, the divalent or trivalent atomic group represented by Formula (5-1) is preferably

a divalent or trivalent atomic group represented by the following Formula (5-2) .

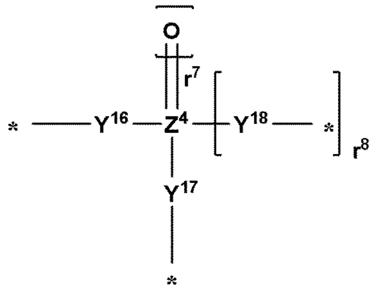

(5-2)

$Z^4$ represents a carbon atom, a sulfur atom, or a phosphorus atom; $Y^{16}$, $Y^{17}$ and $Y^{18}$ each independently represent a single bond or an oxygen atom;
$r^7$ is 1 when $Z^4$ is a carbon atom; 0, 1, or 2 when $Z^4$ is a sulfur atom; or 0 or 1 when $Z^4$ is a phosphorus atom;
$r^8$ is 0 when $Z^4$ is a carbon atom or a sulfur atom, or 1 when $Z^4$ is a phosphorus atom; and
* represents a binding site with $R^3$ or $X^2$ in Formula (4),
with a proviso that, when $Z^4$ is a sulfur atom and $r^7$ is 2, $Y^{16}$ and $Y^{17}$ are not single bonds simultaneously.

The conditions of $Z^3$, $Y^{13}$, $Y^{14}$, $Y^{15}$, $r^5$, and $r^6$ in the above-described Formula (2-1) can be applied to $Z^4$, $Y^{16}$, $Y^{17}$, $Y^{18}$, $r^7$, and $r^8$ in Formula (2-2), respectively, within an applicable range.

The trivalent atomic group represented by the following Formula (6-1) will now be described.

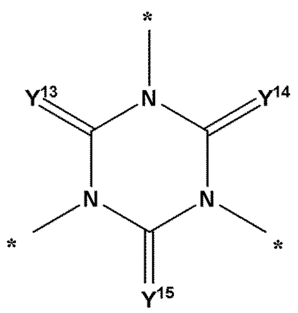

(6-1)

$Y^{13}$, $Y^{14}$ and $Y^{15}$ each independently represent an oxygen atom, a sulfur atom, or $NR^{202}$ (= a $NR^{202}$ group) ; $R^{202}$ represents a hydrogen atom or a monovalent hydrocarbon group; and * represents a binding site with $R^3$ or $X^2$ in the above-described Formula (4).

(R202)

The monovalent hydrocarbon group represented by the above-described $R^{202}$ has the same meaning as the monovalent hydrocarbon group prescribed for $R^1$.

Particularly, from the standpoint of forming a coating film on the active material surface in a preferred manner with limited electrochemical side reaction, an atomic group represented by the following Formula (6-2) is preferred.

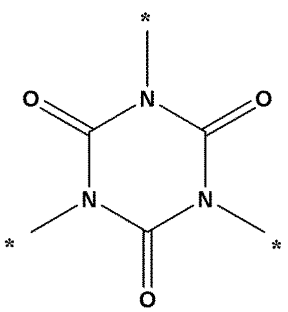

(6-2)

In Formula (6-2), * represents a binding site with $R^3$ or $X^2$ in the above-described Formula (4).

Among those atomic groups represented by the above-described Formula (5-1) or (6-1),

a divalent group having a ketone structure, a divalent group having a carbonate structure, a divalent group having a carboxylic acid ester structure, a divalent group having a sulfonic acid ester structure, a divalent group having a sulfuric acid ester structure, a divalent group having a sulfurous acid ester structure, a divalent group having a sulfinic acid structure, a trivalent group having a phosphonic acid ester structure, a trivalent group having a phosphoric acid ester structure, or a trivalent group having an isocyanurate structure is preferred,

a divalent group having a carbonate structure, a divalent group having a carboxylic acid ester structure, a divalent group having a sulfonic acid ester structure, a divalent group having a sulfuric acid ester structure, a trivalent group having a phosphonic acid ester structure, a trivalent group having a phosphoric acid ester structure, or a trivalent group having an isocyanurate structure is more preferred,

a divalent group having a carbonate structure, a divalent group having a carboxylic acid ester structure, a divalent group having a sulfonic acid ester structure, a trivalent group having a phosphonic acid ester structure, a trivalent group having a phosphoric acid ester structure, or a trivalent group having an isocyanurate structure is still more preferred, and

a divalent group having a carbonate structure or a divalent group having a carboxylic acid ester structure is particularly preferred.

($n^2$)

In Formula (4), $n^2$ represents an integer of 1 to 3. From the standpoint of the ease of inhibiting swelling of the battery, $n^2$ is preferably 2 or 3.

When $n^2$ is 2, for example, the following combination is preferred: $R^3$ is an alkyl group, $R^4$ is an alkyl group, $X^2$ is an alkylene group, and $A^2$ is a divalent group having a carbonate structure; $R^3$ is an alkyl group, $R^4$ is an alkyl group, $X^2$ is an alkylene group, and $A^2$ is a divalent group having an ester structure; $R^3$ is an alkyl group, $R^4$ is an alkyl group, $X^2$ is an alkylene group, and $A^2$ is a divalent group having a sulfone structure; or $R^3$ is an alkyl group, $R^4$ is an alkyl group, $X^2$ is an alkylene group, and $A^2$ is a trivalent group having an isocyanurate structure.

When $n^2$ is 3, for example, the following combination is preferred: $R^3$ is an alkyl group, $X^2$ is an alkylene group, and $A^2$ is a divalent group having a carbonate structure; $R^3$ is an alkyl group, $X^2$ is an alkylene group, and $A^2$ is a divalent group having an ester structure; $R^3$ is an alkyl group, $X^2$ is an alkylene group, and $A^2$ is a divalent group having a sulfone structure; or $R^3$ is an alkyl group, $X^2$ is an alkylene group, and $A^2$ is a trivalent group having an isocyanurate structure.

($p^2$ and $q^2$)

In Formula (4), $p^2$ represents an integer of 0 to 2.

In Formula (4), $q^2$ represents an integer of 1 to 3, provided that $p^2 + q^2 = 2$ or 3.

From the standpoint of forming a coating film on the active material surface in a preferred manner with limited electrochemical side reaction, when $A^2$ according to Formula (4) has a structure represented by Formula (5-1) or (5-2), it is preferred that $p^2$ be 1 and $q^2$ be 1 or 2, and it is more preferred that $p^2$ and $q^2$ be both 1.

From the standpoint of forming a coating film on the active material surface in a preferred manner with limited electrochemical side reaction, when $A^2$ according to Formula (4) has a structure represented by Formula (6-1) or (6-2), it is preferred that $p^2$ be 0 and $q^2$ be 3.

Two of $R^3$(s) and $X^2$(s) are optionally bound to each other to form a ring. In other words, examples of a mode in which a ring is formed include modes in which $R^3$(s), or $R^3$ and $X^2$ are bound to each other to form a ring. From the standpoint of the ease of synthesis, a mode in which $R^3$ and $X^2$ are bound to each other to form a ring is preferred. Examples of a more preferred mode include the following structures.

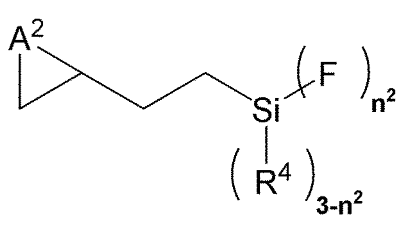 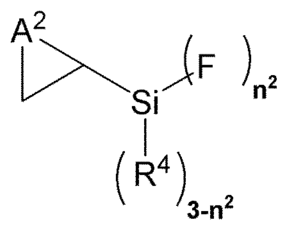

Specific examples of the compound represented by Formula (4) are shown below. It is noted here, however, that the compound represented by Formula (4) according to the present embodiment is not limited to any of the below-exemplified compounds represented by Formulae (G3-1) to (G3-106), Formulae (G2-1) to (G2-148), and Formulae

(G1-1) to (G1-148) by any means.

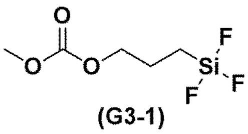
(G3-1)

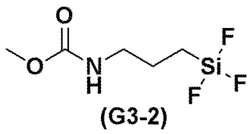
(G3-2)

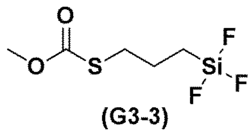
(G3-3)

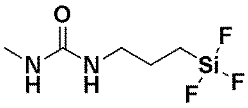
(G3-4)

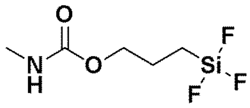
(G3-5)

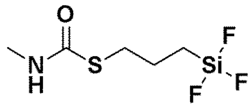
(G3-6)

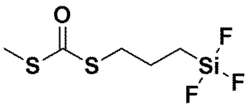
(G3-7)

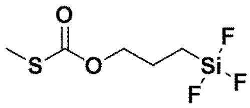
(G3-8)

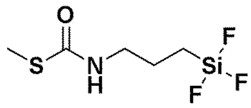
(G3-9)

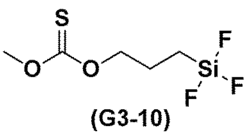
(G3-10)

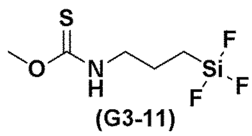
(G3-11)

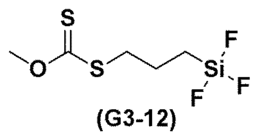
(G3-12)

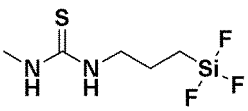
(G3-13)

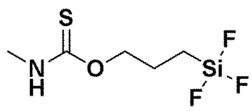
(G3-14)

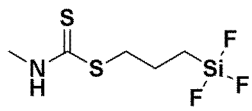
(G3-15)

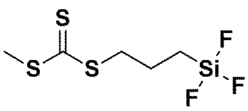
(G3-16)

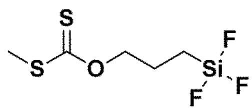
(G3-17)

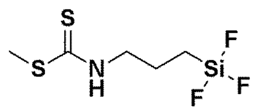
(G3-18)

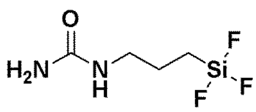
(G3-19)

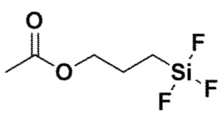
(G3-20)

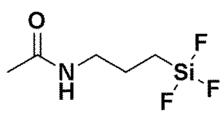
(G3-21)

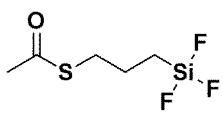
(G3-22)

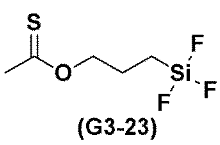
(G3-23)

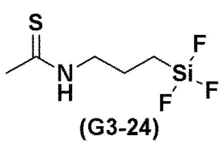
(G3-24)

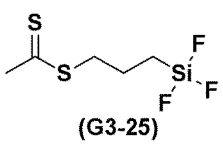
(G3-25)

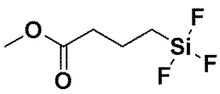
(G3-26)

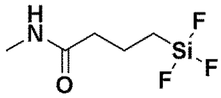
(G3-27)

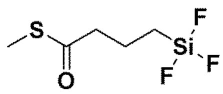
(G3-28)

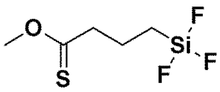
(G3-29)

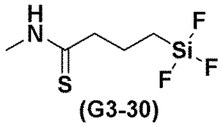
(G3-30)

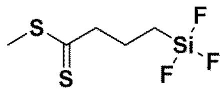
(G3-31)

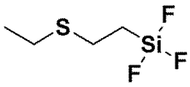
(G3-32)

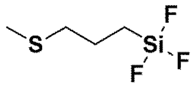
(G3-33)

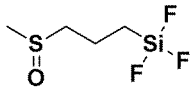
(G3-34)

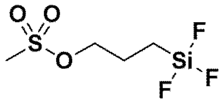
(G3-35)

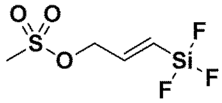
(G3-36)

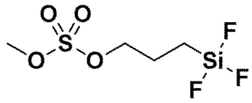
(G3-37)

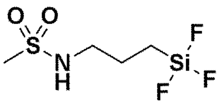
(G3-38)

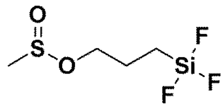
(G3-39)

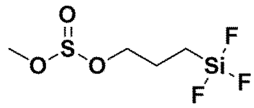
(G3-40)

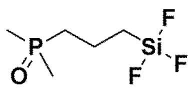
(G3-41)

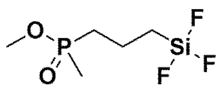
(G3-42)

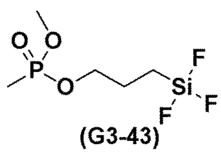
(G3-43)

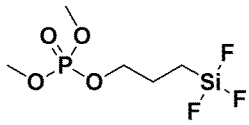
(G3-44)

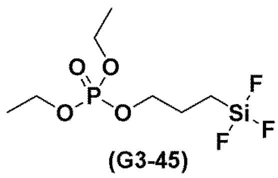
(G3-45)

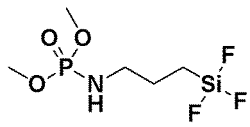
(G3-46)

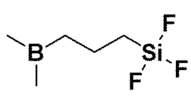
(G3-47)

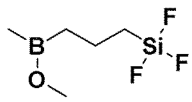
(G3-48)

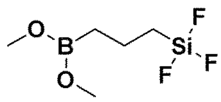
(G3-49)

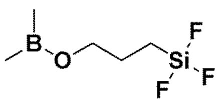
(G3-50)

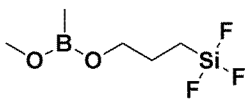
(G3-51)

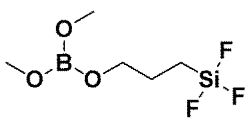
(G3-52)

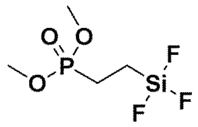

(G3-53)

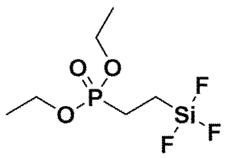

(G3-54)

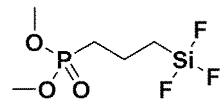

(G3-55)

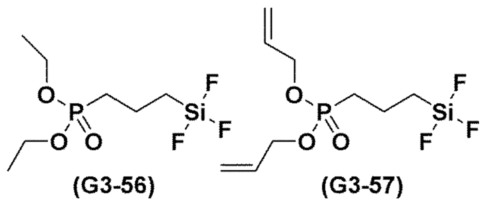

(G3-56)

(G3-57)

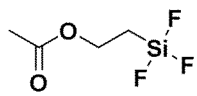

(G3-58)

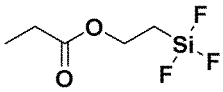

(G3-59)

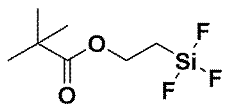

(G3-60)

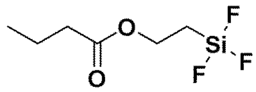

(G3-61)

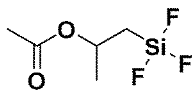

(G3-62)

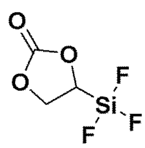

(G3-63)

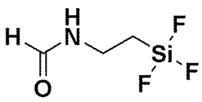

(G3-64)

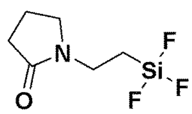

(G3-65)

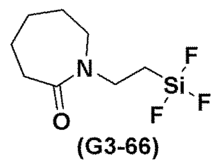

(G3-66)

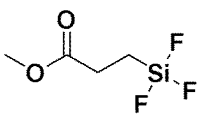

(G3-67)

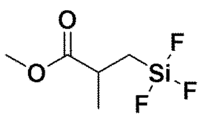

(G3-68)

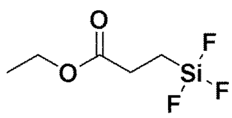

(G3-69)

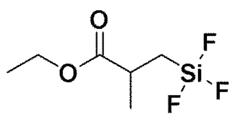

(G3-70)

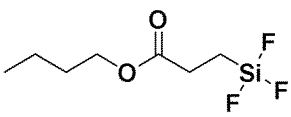

(G3-71)

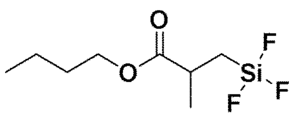

(G3-72)

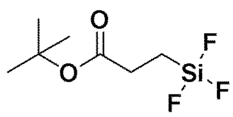

(G3-73)

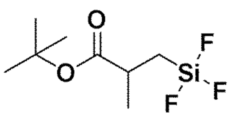

(G3-74)

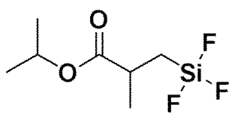

(G3-75)

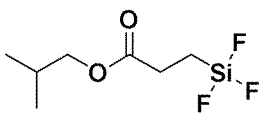

(G3-76)

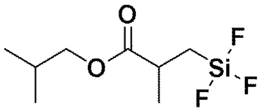
(G3-77)

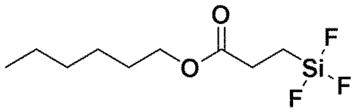
(G3-78)

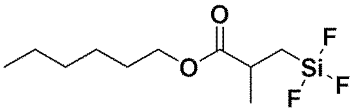
(G3-79)

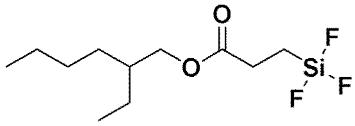
(G3-80)

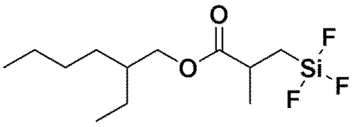
(G3-81)

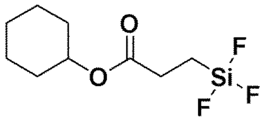
(G3-82)

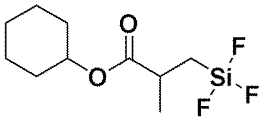
(G3-83)

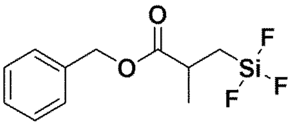
(G3-84)

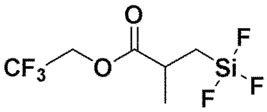
(G3-85)

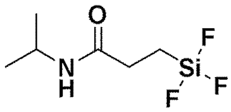
(G3-86)

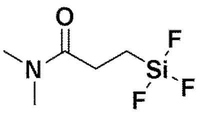
(G3-87)

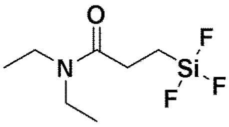
(G3-88)

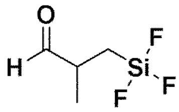
(G3-89)

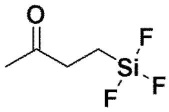
(G3-90)

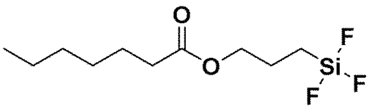
(G3-91)

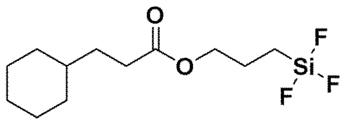
(G3-92)

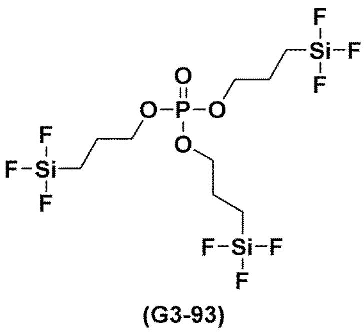
(G3-93)

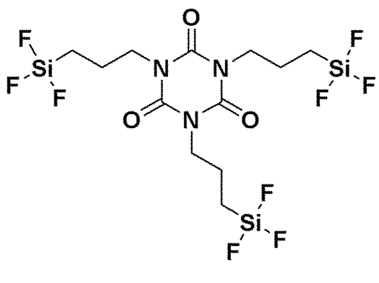
(G3-94)

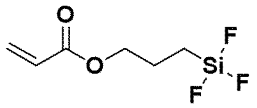
(G3-95)

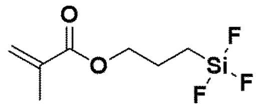
(G3-96)

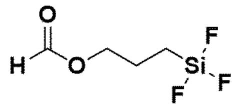
(G3-97)

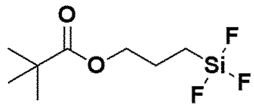
(G3-98)

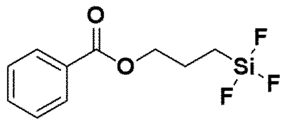
(G3-99)

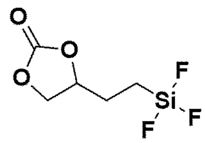
(G3-100)

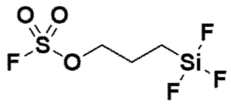
(G3-101)

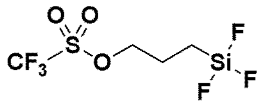
(G3-102)

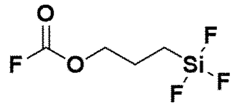
(G3-103)

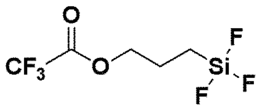
(G3-104)

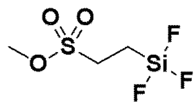
(G3-105)

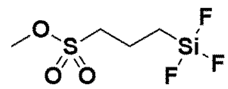
(G3-106)

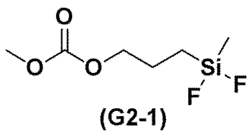
(G2-1)

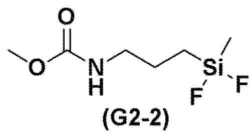
(G2-2)

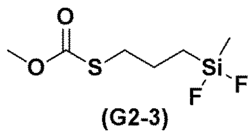
(G2-3)

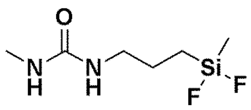
(G2-4)

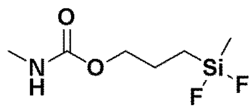
(G2-5)

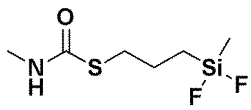
(G2-6)

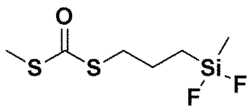
(G2-7)

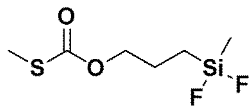
(G2-8)

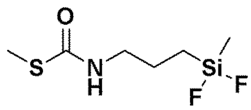
(G2-9)

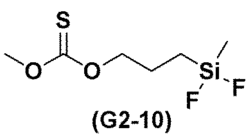
(G2-10)

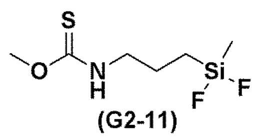
(G2-11)

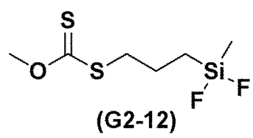
(G2-12)

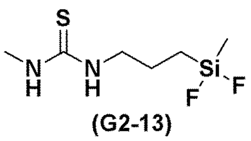
(G2-13)

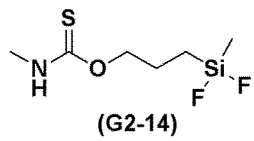
(G2-14)

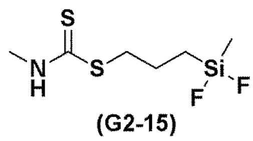
(G2-15)

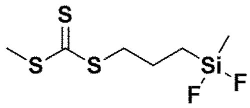
(G2-16)

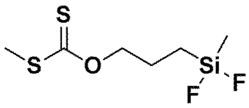
(G2-17)

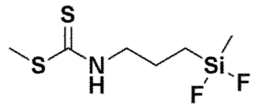
(G2-18)

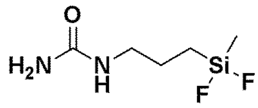
(G2-19)

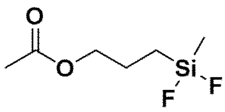
(G2-20)

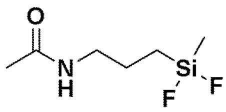
(G2-21)

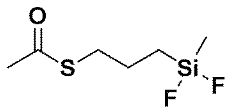
(G2-22)

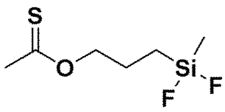
(G2-23)

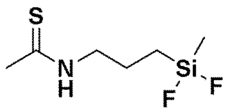
(G2-24)

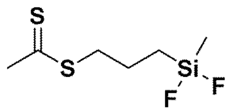
(G2-25)

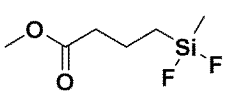
(G2-26)

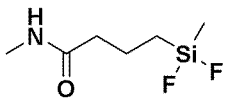
(G2-27)

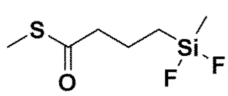
(G2-28)

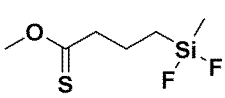
(G2-29)

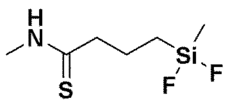
(G2-30)

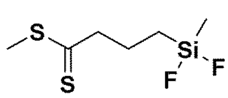
(G2-31)

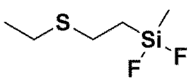
(G2-32)

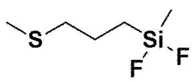
(G2-33)

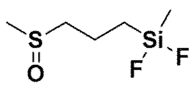
(G2-34)

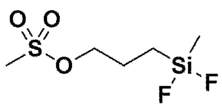
(G2-35)

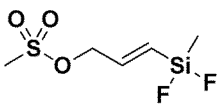
(G2-36)

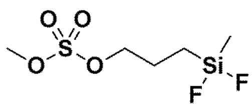
(G2-37)

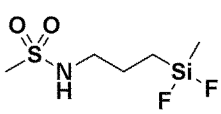
(G2-38)

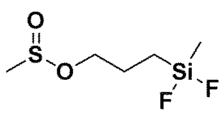
(G2-39)

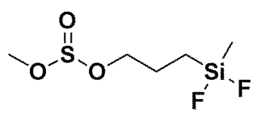
(G2-40)

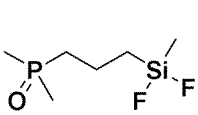
(G2-41)

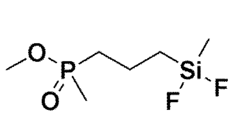
(G2-42)

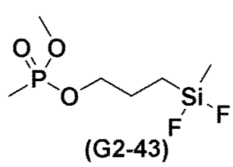
(G2-43)

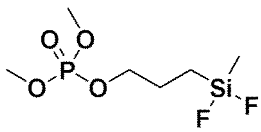
(G2-44)
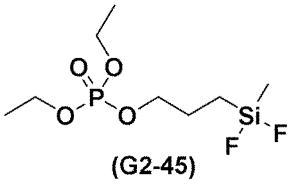
(G2-45)
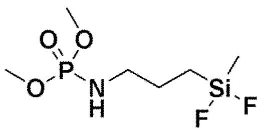
(G2-46)

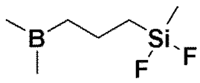
(G2-47)
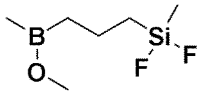
(G2-48)
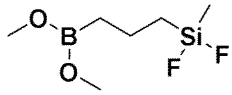
(G2-49)

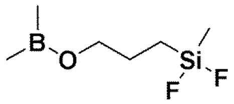
(G2-50)
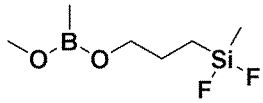
(G2-51)
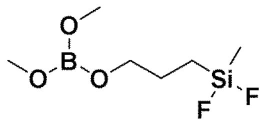
(G2-52)

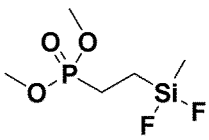
(G2-53)
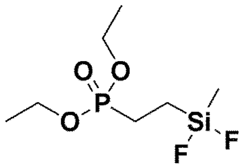
(G2-54)
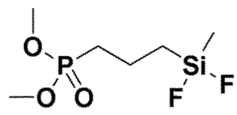
(G2-55)

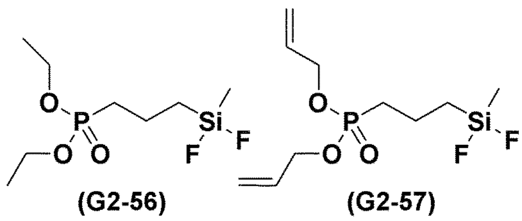
(G2-56)
(G2-57)
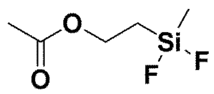
(G2-58)

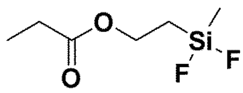
(G2-59)
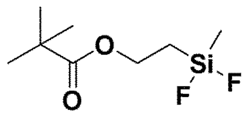
(G2-60)
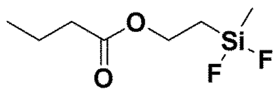
(G2-61)

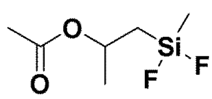
(G2-62)
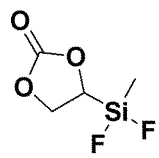
(G2-63)

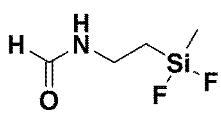
(G2-64)
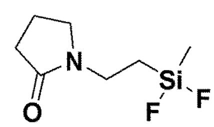
(G2-65)
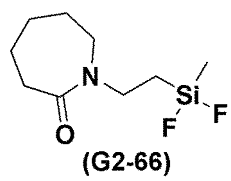
(G2-66)

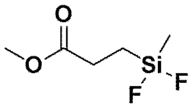
(G2-67)

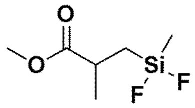
(G2-68)

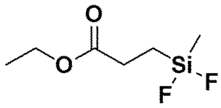
(G2-69)

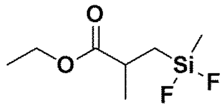
(G2-70)

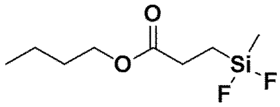
(G2-71)

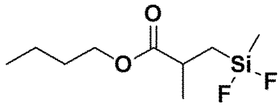
(G2-72)

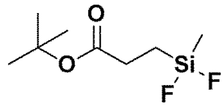
(G2-73)

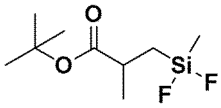
(G2-74)

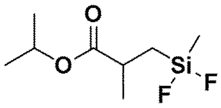
(G2-75)

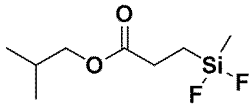
(G2-76)

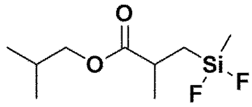
(G2-77)

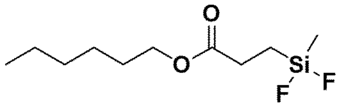
(G2-78)

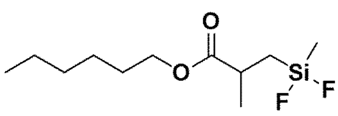
(G2-79)

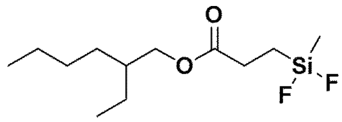
(G2-80)

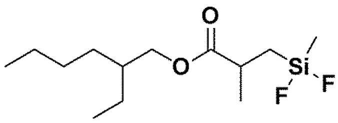
(G2-81)

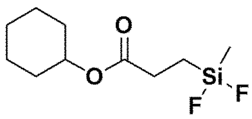
(G2-82)

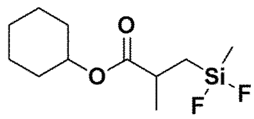
(G2-83)

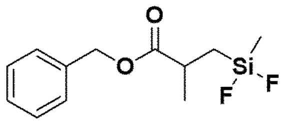
(G2-84)

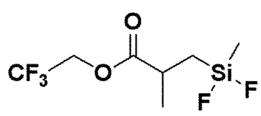
(G2-85)

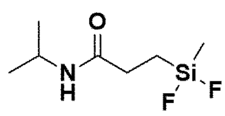
(G2-86)

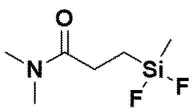
(G2-87)

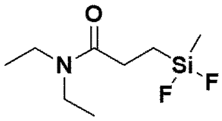
(G2-88)

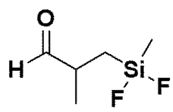
(G2-89)

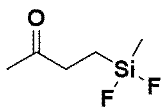
(G2-90)

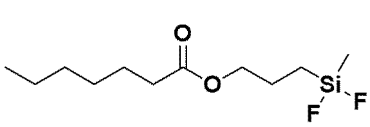
(G2-91)

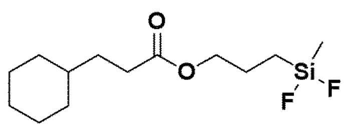
(G2-92)

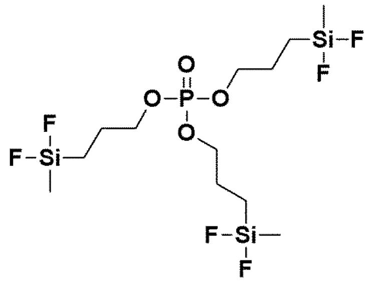

(G2-93)

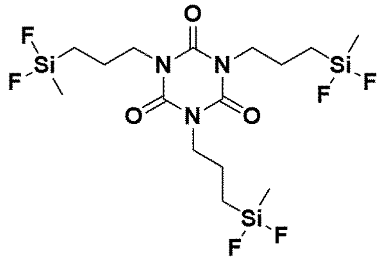

(G2-94)

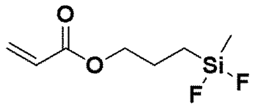

(G2-95)

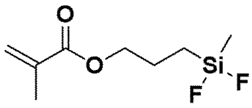

(G2-96)

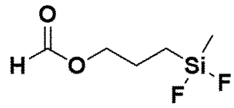

(G2-97)

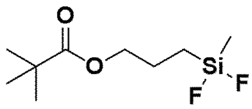

(G2-98)

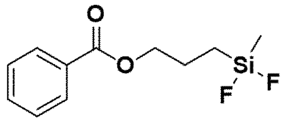

(G2-99)

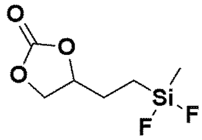

(G2-100)

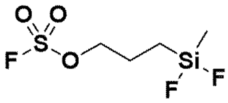

(G2-101)

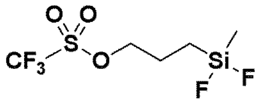

(G2-102)

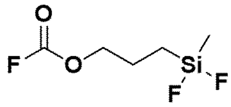

(G2-103)

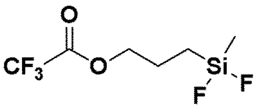

(G2-104)

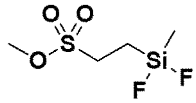

(G2-105)

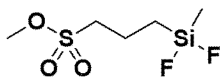

(G2-106)

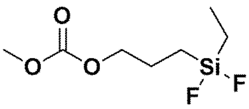

(G2-107)

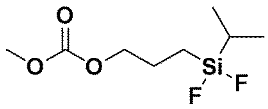

(G2-108)

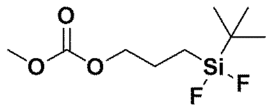

(G2-109)

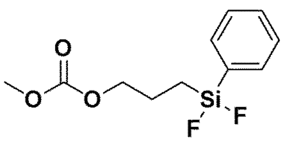

(G2-110)

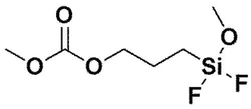

(G2-111)

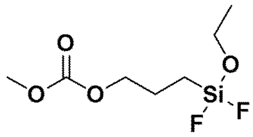

(G2-112)

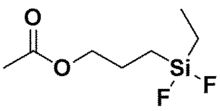

(G2-113)

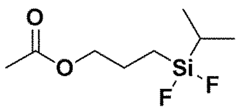

(G2-114)

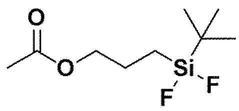

(G2-115)

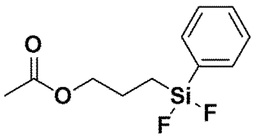

(G2-116)

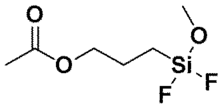

(G2-117)

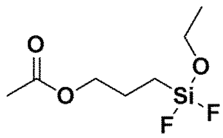

(G2-118)

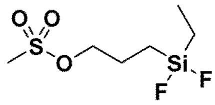

(G2-119)

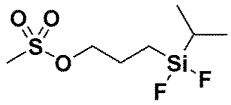

(G2-120)

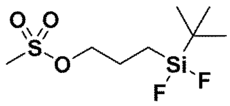

(G2-121)

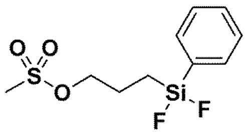

(G2-122)

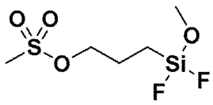

(G2-123)

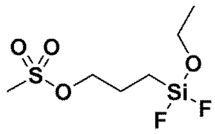

(G2-124)

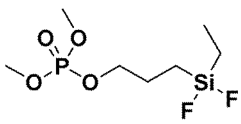

(G2-125)

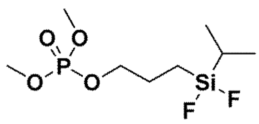

(G2-126)

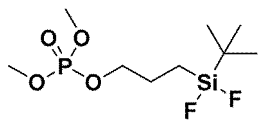

(G2-127)

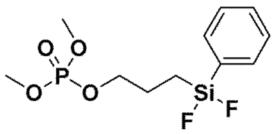

(G2-128)

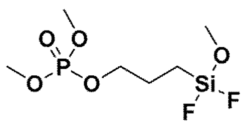

(G2-129)

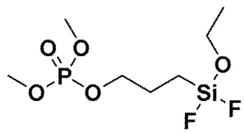

(G2-130)

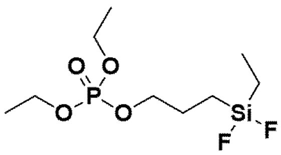

(G2-131)

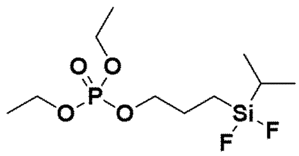

(G2-132)

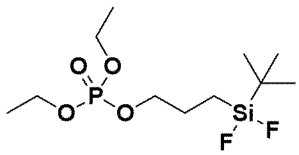

(G2-133)

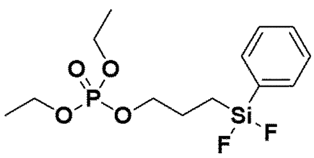

(G2-134)

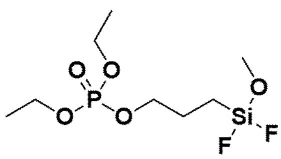

(G2-135)

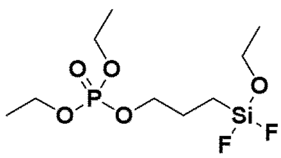

(G2-136)

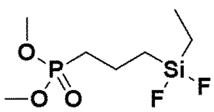

(G2-137)

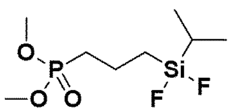

(G2-138)

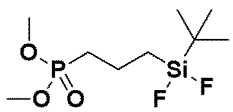

(G2-139)

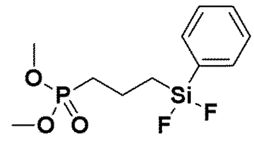
(G2-140)

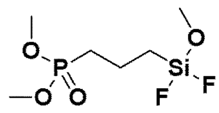
(G2-141)

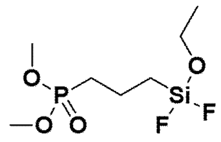
(G2-142)

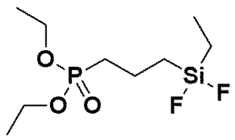
(G2-143)

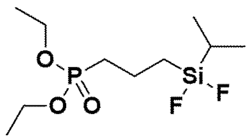
(G2-144)

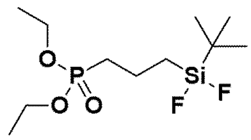
(G2-145)

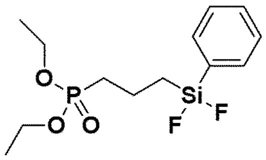
(G2-146)

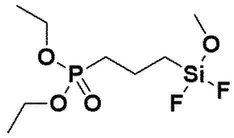
(G2-147)

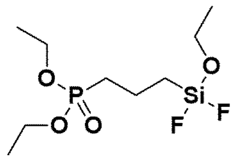
(G2-148)

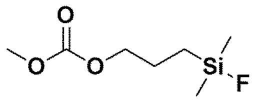
(G1-1)

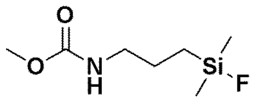
(G1-2)

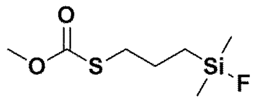
(G1-3)

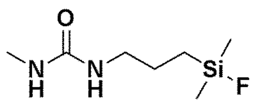
(G1-4)

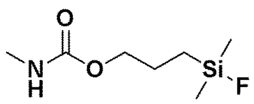
(G1-5)

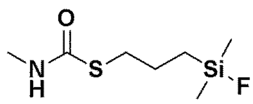
(G1-6)

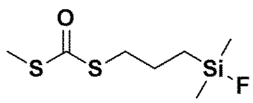
(G1-7)

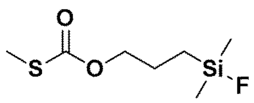
(G1-8)

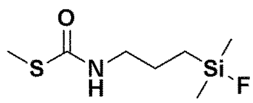
(G1-9)

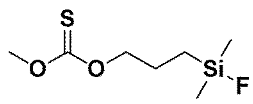
(G1-10)

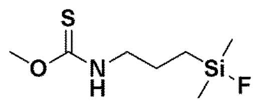
(G1-11)

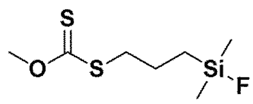
(G1-12)

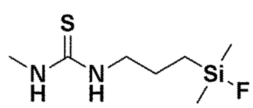
(G1-13)

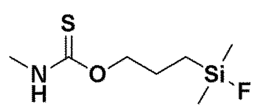
(G1-14)

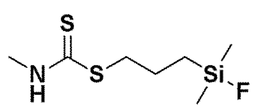
(G1-15)

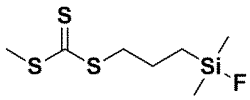
(G1-16)

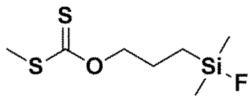
(G1-17)

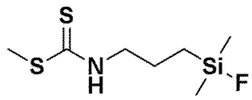
(G1-18)

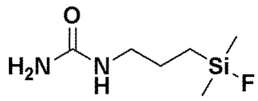
(G1-19)

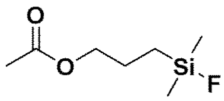
(G1-20)

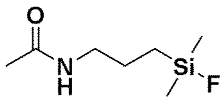
(G1-21)

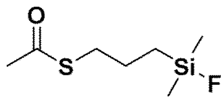
(G1-22)

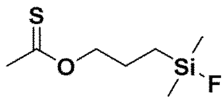
(G1-23)

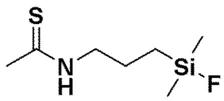
(G1-24)

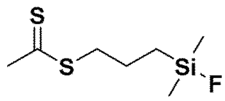
(G1-25)

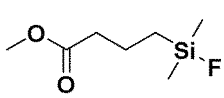
(G1-26)

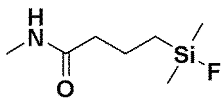
(G1-27)

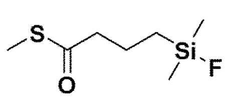
(G1-28)

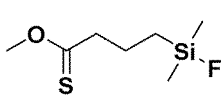
(G1-29)

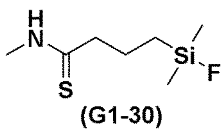
(G1-30)

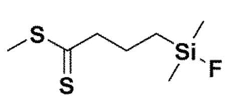
(G1-31)

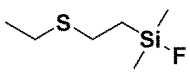
(G1-32)

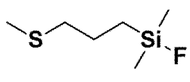
(G1-33)

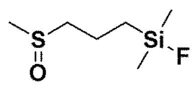
(G1-34)

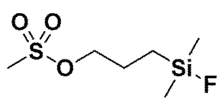
(G1-35)

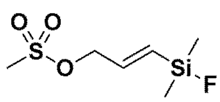
(G1-36)

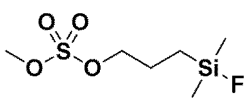
(G1-37)

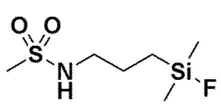
(G1-38)

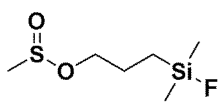
(G1-39)

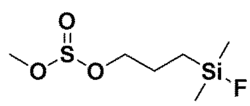
(G1-40)

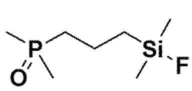
(G1-41)

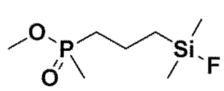
(G1-42)

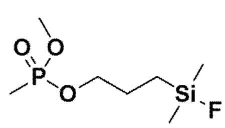
(G1-43)

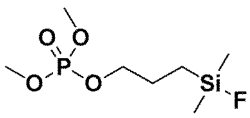
(G1-44)

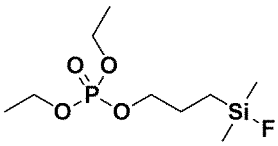
(G1-45)

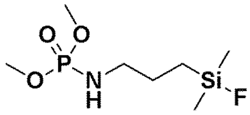
(G1-46)

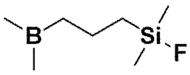
(G1-47)

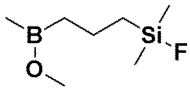
(G1-48)

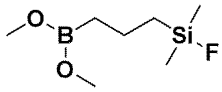
(G1-49)

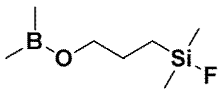
(G1-50)

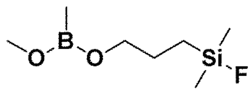
(G1-51)

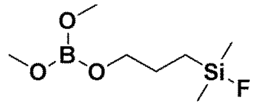
(G1-52)

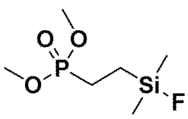
(G1-53)

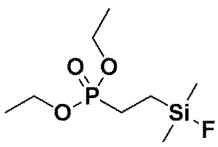
(G1-54)

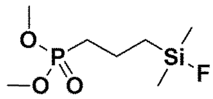
(G1-55)

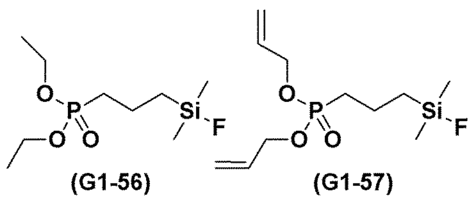
(G1-56) (G1-57)

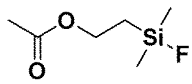
(G1-58)

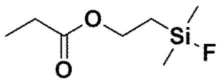
(G1-59)

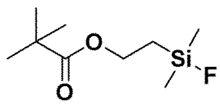
(G1-60)

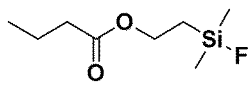
(G1-61)

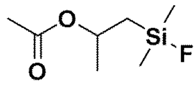
(G1-62)

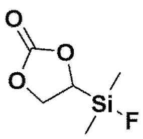
(G1-63)

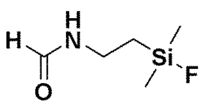
(G1-64)

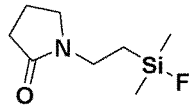
(G1-65)

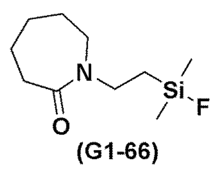
(G1-66)

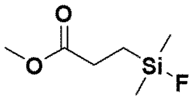
(G1-67)

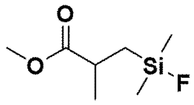
(G1-68)

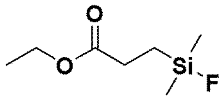
(G1-69)

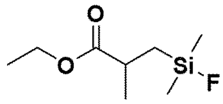
(G1-70)

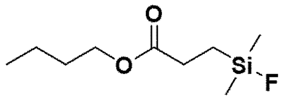
(G1-71)

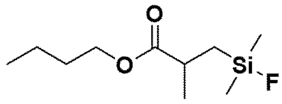
(G1-72)

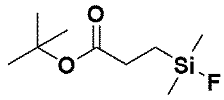
(G1-73)

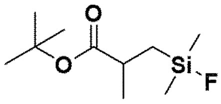
(G1-74)

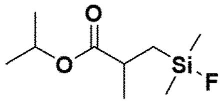
(G1-75)

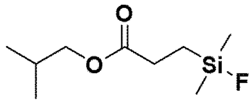
(G1-76)

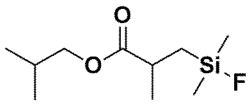
(G1-77)

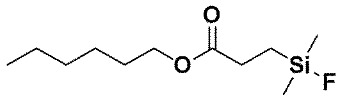
(G1-78)

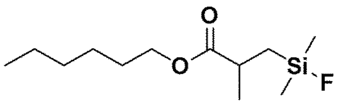
(G1-79)

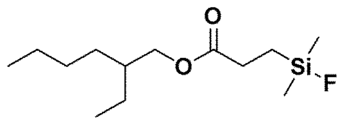
(G1-80)

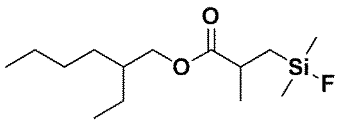
(G1-81)

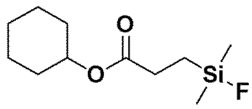
(G1-82)

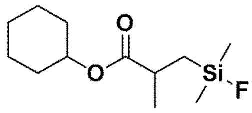
(G1-83)

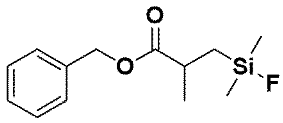
(G1-84)

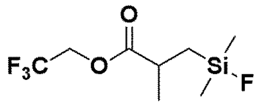
(G1-85)

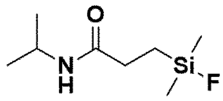
(G1-86)

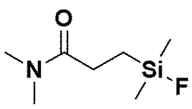
(G1-87)

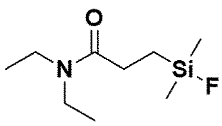
(G1-88)

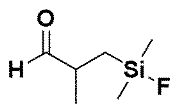
(G1-89)

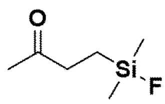
(G1-90)

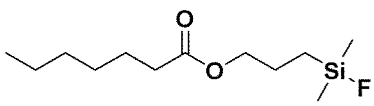
(G1-91)

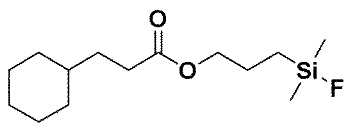
(G1-92)

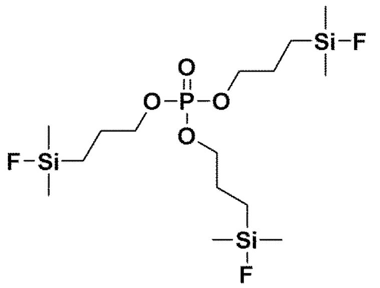

(G1-93)

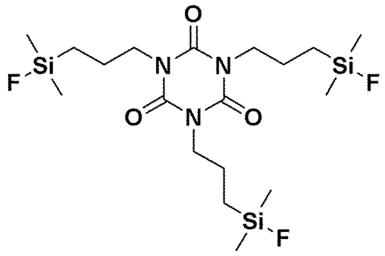

(G1-94)

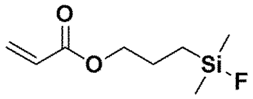

(G1-95)

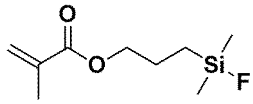

(G1-96)

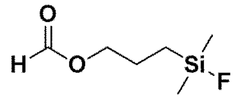

(G1-97)

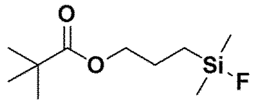

(G1-98)

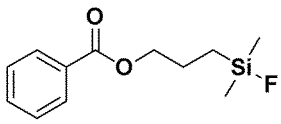

(G1-99)

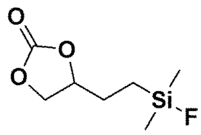

(G1-100)

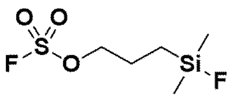

(G1-101)

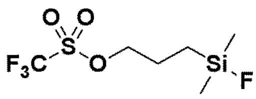

(G1-102)

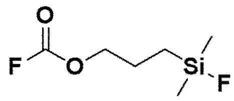

(G1-103)

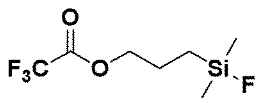

(G1-104)

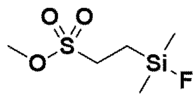

(G1-105)

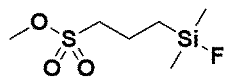

(G1-106)

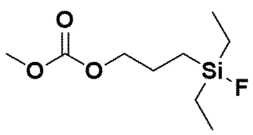

(G1-107)

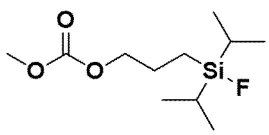

(G1-108)

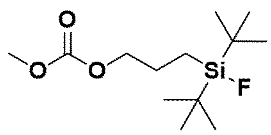

(G1-109)

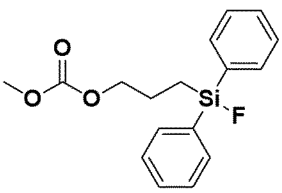

(G1-110)

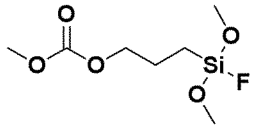

(G1-111)

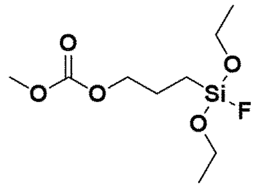

(G1-112)

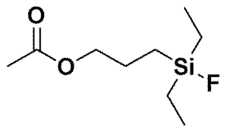

(G1-113)

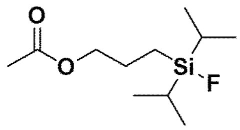

(G1-114)

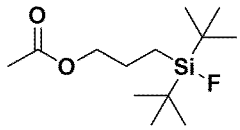

(G1-115)

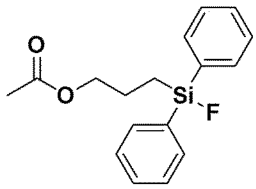

(G1-116)

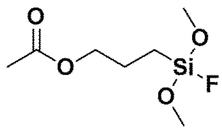

(G1-117)

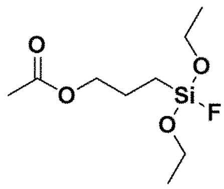

(G1-118)

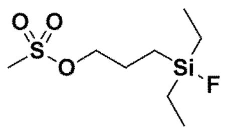

(G1-119)

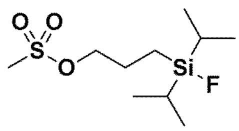

(G1-120)

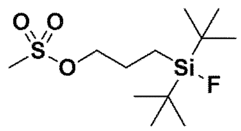

(G1-121)

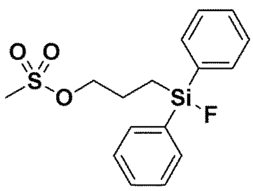

(G1-122)

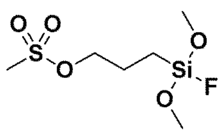

(G1-123)

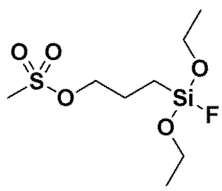

(G1-124)

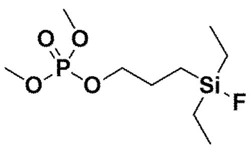

(G1-125)

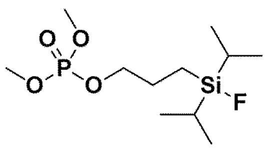

(G1-126)

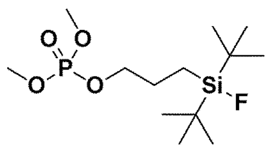

(G1-127)

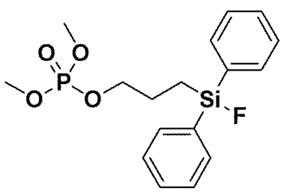

(G1-128)

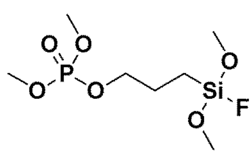

(G1-129)

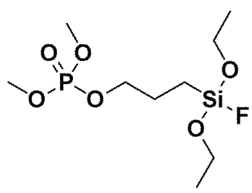

(G1-130)

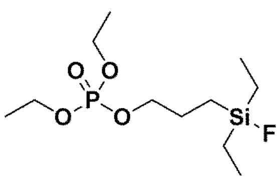

(G1-131)

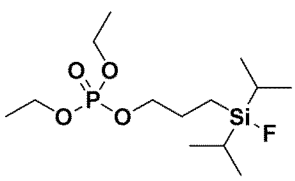

(G1-132)

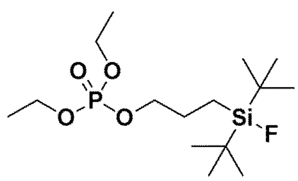

(G1-133)

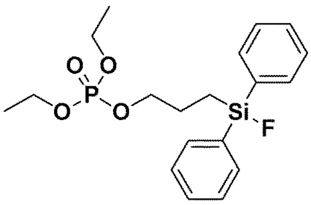

(G1-134)

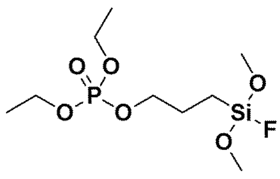

(G1-135)

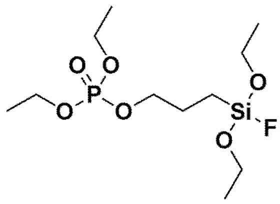

(G1-136)

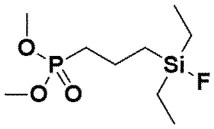

(G1-137)

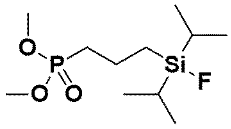

(G1-138)

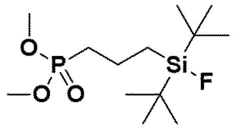

(G1-139)

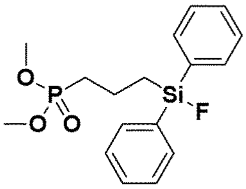

(G1-140)

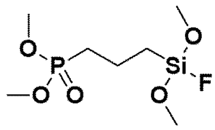

(G1-141)

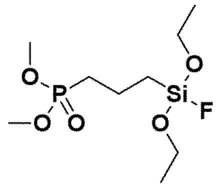

(G1-142)

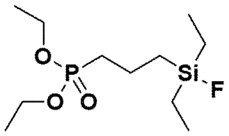

(G1-143)

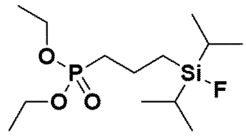

(G1-144)

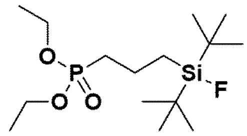

(G1-145)

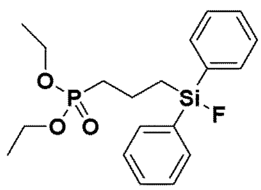

(G1-146)

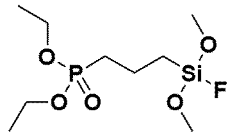

(G1-147)

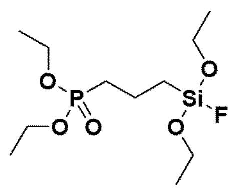

(G1-148)

Among these compounds, from the standpoints of the ease of obtaining raw materials and the ease of synthesis:

compounds in which $A^2$ is a divalent atomic group having a carbonate structure, a divalent atomic group having a carboxylic acid ester structure, a divalent atomic group having a sulfonic acid ester structure, a divalent atomic group having a phosphonic acid ester structure, a trivalent atomic group having a phosphoric acid ester structure, or a trivalent atomic group having an isocyanurate structure, $R^3$ is a hydrogen atom or an alkyl group, $R^4$ is an alkyl group, and $X^2$ is an alkylene group are preferred and, thereamong, the compound represented by Formula (4) is preferably a compound selected from the above-exemplified compounds represented by Formulae (G3-1), (G3-20), (G3-26), (G3-35) to (G3-37), (G3-43) to (G3-45), (G3-53) to (G3-63), (G3-67) to (G3-85), (G3-91) to (G3-99), (G3-101) to (G3-106), (G2-1), (G2-20), (G2-26), (G2-35) to (G2-37), (G2-43) to (G2-45), (G2-53) to (G2-63), (G2-67) to (G2-85), (G2-91) to (G2-99), (G2-101) to (G2-148), (G1-1), (G1-20), (G1-26), (G1-35) to (G1-37), (G1-43) to (G1-45), (G1-53) to (G1-63), (G1-67) to (G1-85), (G1-91) to (G1-99), and (G1-101) to (G1-148);

compounds in which $A^2$ is a divalent atomic group having a carbonate structure, a divalent atomic group having a carboxylic acid ester structure, a divalent atomic group having a sulfonic acid ester structure, a divalent atomic group

having a phosphonic acid ester structure, a trivalent atomic group having a phosphoric acid ester structure, or a trivalent atomic group having an isocyanurate structure, $R^3$ is a methyl group or an ethyl group, $R^4$ is an alkyl group, and $X^2$ is an alkylene group are more preferred and, thereamong, the compound represented by Formula (4) is preferably a compound selected from the above-exemplified compounds represented by Formulae (G3-1), (G3-20), (G3-35) to (G3-37), (G3-44), (G3-45), (G3-53) to (G3-63), (G3-91) to (G3-99), (G2-1), (G2-20), (G2-35) to (G2-37), (G2-44), (G2-45), (G2-53) to (G2-63), (G2-91) to (G2-100), (G1-1), (G1-20), (G1-35) to (G1-37), (G1-44), (G1-45), (G1-53) to (G1-63), and (G1-91) to (G1-99);

compounds in which $X^2$ is a propylene group and $R^3$ is a methyl group or an ethyl group are still more preferred and, thereamong, the compound represented by Formula (4) is preferably a compound selected from the above-exemplified compounds represented by Formulae (G3-1), (G3-20), (G3-35), (G3-44), (G3-45), (G3-55), (G3-56), (G3-94), (G2-1), (G2-20), (G2-35), (G2-44), (G2-45), (G2-55), (G2-56), (G2-94), (G2-100), (G1-1), (G1-20), (G1-35), (G1-44), (G1-45), (G1-55), (G1-56), and (G1-94); and

compounds in which $n^2$ is 2 or 3, $A^2$ is a divalent atomic group having a carbonate structure, a divalent atomic group having a carboxylic acid ester structure, a divalent atomic group having a phosphonic acid ester structure, a trivalent atomic group having a phosphoric acid ester structure, or a trivalent atomic group having an isocyanurate structure, $R^3$ is a methyl group or an ethyl group, $R^4$ is an alkyl group having 1 to 6 carbon atoms, and $X^2$ is a propylene group are particularly preferred and, thereamong, the compound represented by Formula (4) is preferably a compound selected from the above-exemplified compounds represented by Formulae (G3-1), (G3-20), (G3-44), (G3-45), (G3-55), (G3-56), (G3-94), (G2-1), (G2-20), (G2-44), (G2-45), (G2-55), (G2-56), and (G2-94), particularly preferably a compound selected from the above-exemplified compounds represented by Formulae (G3-1), (G3-20), (G3-44), (G3-45), (G3-55), (G3-56), (G3-94), (G2-1), (G2-20), (G2-44), (G2-45), (G2-55), (G2-56), and (G2-94).

Further, in a mode in which $A^2$ is a divalent atomic group having a carbonate structure; and $R^3$ is an alkyl group, $n^2$ = 2, $R^4$ is an alkyl group, and $X^3$ is an alkylene group, or $R^3$ is an alkyl group, $n^2$ is 3, and $X^2$ is an alkylene group,

in a mode in which $A^2$ is a divalent group having a carboxylic acid ester structure, $R^3$ is an alkyl group, $n^2$ = 2, $R^4$ is an alkyl group, and $X^2$ is an alkylene group,

in a mode in which $A^2$ is a divalent group having a sulfonic acid ester structure; and $R^3$ is an alkyl group, $n^2$ = 2, $R^4$ is an alkyl group, and $X^2$ is an alkylene group, or $R^3$ is an alkyl group, $n^2$ is 3, and $X^2$ is an alkylene group,

in a mode in which $A^2$ is a divalent group having a phosphonic acid ester structure; and $R^3$ is an alkyl group, $n^2$ = 2, $R^4$ is an alkyl group, and $X^2$ is an alkylene group, or $R^3$ is an alkyl group, $n^2$ is 3, and $X^2$ is an alkylene group, or

in a mode in which $A^2$ is a trivalent group having a phosphoric acid ester structure; and $R^3$ is an alkyl group, $n^2$ = 2, $R^4$ is an alkyl group, and $X^2$ is an alkylene group, or $R^1$ is an alkyl group, $n^2$ is 3, and $X^2$ is an alkylene group,

the following compounds are preferred.

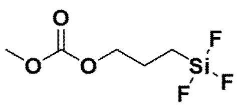

(G3-1)

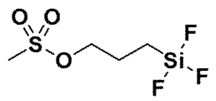

(G3-35)

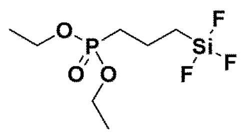

(G3-56)

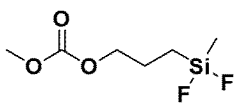

(G2-1)

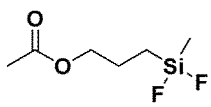

(G2-20)

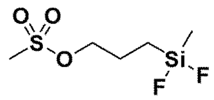

(G2-35)

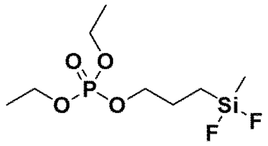

(G2-45)

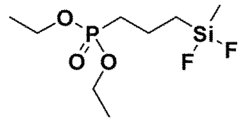

(G2-56)

Moreover, in a mode in which $A^2$ is a divalent atomic group having a carbonate structure; and $R^3$ is an alkyl group, $n^2$ = 2, $R^4$ is an alkyl group, and $X^3$ is an alkylene group, or $R^3$ is an alkyl group, $n^2$ is 3, and $X^2$ is an alkylene group,

in a mode in which $A^2$ is a divalent group having a carboxylic acid ester structure, $R^3$ is an alkyl group, $n^2 = 2$, $R^4$ is an alkyl group, and $X^2$ is an alkylene group,
in a mode in which $A^2$ is a divalent group having a phosphonic acid ester structure; and $R^3$ is an alkyl group, $n^2 = 2$, $R^4$ is an alkyl group, and $X^2$ is an alkylene group, or $R^3$ is an alkyl group, $n^2$ is 3, and $X^2$ is an alkylene group, or
in a mode in which $A^2$ is a trivalent group having a phosphoric acid ester structure; and $R^3$ is an alkyl group, $n^2 = 2$, $R^4$ is an alkyl group, and $X^2$ is an alkylene group, or $R^1$ is an alkyl group, $n^2$ is 3, and $X^2$ is an alkylene group,
the following compounds are preferred.

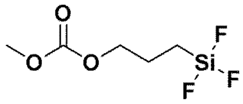
(G3-1)

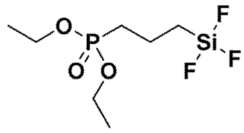
(G3-56)

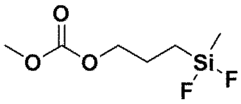
(G2-1)

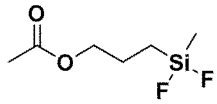
(G2-20)

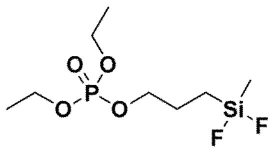
(G2-45)

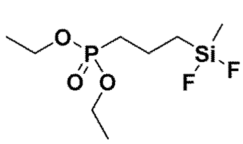
(G2-56)

Among the above-described compounds represented by Formula (4), compounds represented by any of the following Formulae are preferred from the standpoint of obtaining a proper balance of the inhibition of gas generation by the resistance and the insulation of the coating film.

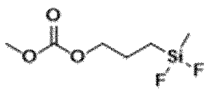
(4-a1)

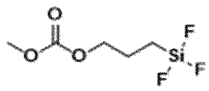
(4-a2)

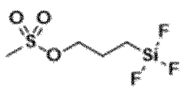
(4-a3)

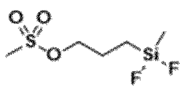
(4-a4)

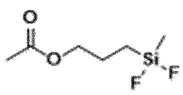
(4-a5)

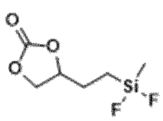
(4-a6)

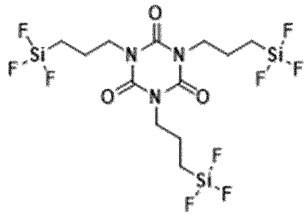

(4-a7)

Thereamong, compounds represented by the following Formula (4-a1) or (4-a2) are particularly preferred from the standpoint of forming the above-described insulating coating film in a preferred manner.

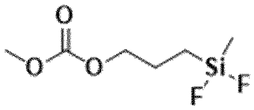

(4-a1)

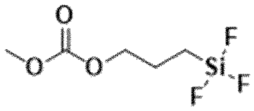

(4-a2)

(Content)

The content of the compound represented by Formula (4) is usually not less than 0.001% by mass, preferably not less than 0.01% by mass, more preferably not less than 0.1% by mass, still more preferably not less than 0.2% by mass, but usually 10% by mass or less, preferably 5.0% by mass or less, more preferably 3.0% by mass or less, particularly preferably 2.0% by mass or less, most preferably 1.0% by mass or less, with respect to a total amount of the nonaqueous electrolytic solution according to the present embodiment.

When the content of the compound represented by Formula (4) with respect to a total amount of the nonaqueous electrolytic solution is in the above-described range, concentration of the compound represented by Formula (4) into active materials progresses in a preferred manner, so that a battery with reduced gas generation during high-temperature storage can be produced.

<B1-1-2. Negative Electrode>

The "negative electrode" refers to an electrode which includes a current collector and a negative electrode active material on at least a portion of the surface of the current collector. As for other constitutions, conventionally known constitutions can be employed.

The negative electrode active material is not particularly limited as long as it is a material that is capable of electrochemically occluding and releasing metal ions and contains a Li-alloyable metal element and/or metalloid element. Specific examples of the negative electrode active material include carbon-based materials, materials containing a Li-alloyable metal element and/or metalloid element, lithium-containing metal composite oxide materials, and mixtures of these materials. A material containing a Li-alloyable metal element and/or metalloid element may be used singly, or in any combination with a carbon-based material or a lithium-containing metal composite oxide material. From the standpoint of obtaining good cycle characteristics and good safety as well as excellent continuous charging characteristics, it is preferred to use a material containing a Li-alloyable metal element and/or metalloid element, or a mixture of a material containing a Li-alloyable metal element and/or metalloid element with a carbon-based material, and it is more preferred to use or a mixture of a material containing a Li-alloyable metal element and/or metalloid element with a carbon-based material.

Examples of the carbon-based material include natural graphite, artificial graphite, amorphous carbon, carbon-coated graphite, graphite-coated graphite, and resin-coated graphite. Thereamong, natural graphite is preferred.

Examples of the natural graphite include scaly graphite, flake graphite, and graphite particles obtained by performing a treatment, such as spheronization or densification, on any of these graphites as a raw material. Thereamong, spherical or ellipsoidal graphite particles obtained by a spheronization treatment are particularly preferred from the standpoints of the packing property of the particles and the charge-discharge rate characteristics.

The average particle size (d50) of the graphite particles is usually 1 um to 100 μm.

As the material containing a Li-alloyable metal element and/or metalloid element, any conventionally known such material can be used; however, from the standpoints of the capacity and the cycle life, the material containing a

metal element and/or a metalloid element is preferably, for example, a metal selected from the group consisting of Sb, Si, Sn, Al, As, and Zn, or a compound thereof. An alloy composed of two or more metals may be used as well, and the material containing a metal element and/or a metalloid element may also be an alloy material formed by two or more metal elements.

Examples of a metal compound include metal oxides, metal nitrides, and metal carbides. Thereamong, from the standpoint of increasing the capacity, Si metal (hereinafter, may be referred to as "Si") or an Si-containing compound is preferred.

In the present specification, Si and an Si-containing compound are collectively referred to as "Si compound". Specific examples of an Si compound include $SiO_x$, $SiN_x$, $SiC_x$, and $SiZ_xO_y$ (wherein, Z = C or N) . The Si compound is preferably an Si metal oxide ($SiO_x$) because of its higher theoretical capacity than graphite, or amorphous Si or nano-sized Si crystals from the standpoint of facilitating the migration of alkali ions such as lithium ions to obtain a high capacity.

This $SiO_x$ is obtained using silicon dioxide ($SiO_2$) and Si as raw materials, and the value of x is usually $0 < x < 2$.

As the material containing a Li-alloyable metal element and/or metalloid element, metal particles alloyable with Li are preferred from the standpoint of increasing the electrode density.

From the standpoint of the cycle life, the average particle size (d50) of the metal particles alloyable with Li is usually 0.01 um to 10 um.

A mixture of a material containing a Li-alloyable metal element and/or metalloid element and graphite particles, which is used as the negative electrode active material, may be a mixture in which the above-described material containing a Li-alloyable metal element and/or metalloid element and the above-described graphite particles are mixed in a state of being mutually independent, or may be a composite in which the material containing a Li-alloyable metal element and/or metalloid element exists on the surface or the inside of graphite particles.

The content ratio of the material containing a Li-alloyable metal element and/or metalloid element is usually 5% by mass or higher, preferably 10% by mass or higher, more preferably 15% by mass or higher, still more preferably 20% by mass or higher, but usually 99% by mass or lower, preferably 50% by mass or lower, more preferably 40% by mass or lower, with respect to a total amount of the material containing a Li-alloyable metal element and/or metalloid element and the graphite particles. When this content ratio is in the above-described range, side reactions on the Si surface can be controlled, so that swelling of the negative electrode in the nonaqueous electrolytic solution battery can be favorably controlled, which is preferred.

The content ratio of the metal particles alloyable with Li is usually 0.1% by mass or higher, preferably 0.5% by mass or higher, more preferably 1.0% by mass or higher, still more preferably 2.0% by mass or higher, but usually 99% by mass or lower, preferably 50% by mass or lower, more preferably 40% by mass or lower, still more preferably 30% by mass or lower, yet still more preferably 25% by mass or lower, further more preferably 20% by mass or lower, particularly preferably 15% by mass or lower, most preferably 10% by mass or lower, with respect to a total amount of the metal particles alloyable with Li and the graphite particles. When the content ratio of the metal particles alloyable with Li is in this range, side reactions on the Si surface can be controlled, so that the nonaqueous electrolytic solution battery can be provided with a sufficient capacity, which is preferred.

<B2-5. Separator>

A separator is usually arranged between the positive electrode and the negative electrode for the purpose of inhibiting a short circuit. In this case, the nonaqueous electrolytic solution according to the present embodiment is usually impregnated into this separator. As the separator, any conventionally known separator can be used.

<B1-2. Electrolyte>

Similarly to a general nonaqueous electrolytic solution, the nonaqueous electrolytic solution of the present embodiment usually contains an electrolyte as its component. The electrolyte used in the nonaqueous electrolytic solution of the present embodiment is not particularly limited as long as it is an alkali metal salt, and a lithium salt such as $LiBF_4$, $LiPF_6$, $LiN (FSO_2)_2$, $LiN(CF_3SO_2)_2$, or lithium difluorooxalatoborate can be preferably used. The lithium salt may be used singly, or in combination of two or more thereof.

A total concentration of alkali metal salts in the nonaqueous electrolytic solution is not particularly limited; however, it is usually 8% by mass or higher, preferably 8.5% by mass or higher, more preferably 9% by mass or higher, with respect to a total amount of the nonaqueous electrolytic solution. An upper limit of the total concentration is usually 18% by mass or lower, preferably 17% by mass or lower, more preferably 16% by mass or lower. When the total concentration of alkali metal salts, which are electrolytes, is in this range, the nonaqueous electrolytic solution has an electrical conductivity appropriate for battery operation, so that sufficient output characteristics tend to be obtained.

<B1-3. Nonaqueous Solvent>

Similarly to a general nonaqueous electrolytic solution, the nonaqueous electrolytic solution of the present embodiment usually contains, as its main component, a nonaqueous solvent that dissolves the above-described electrolyte. The nonaqueous solvent is not particularly limited, and any known organic solvent can be used. Examples of the organic solvent include: saturated cyclic carbonates, such as ethylene carbonate, propylene carbonate, and butylene carbonate; linear carbonates, such as dimethyl carbonate, diethyl carbonate, and ethyl methyl carbonate; carboxylic acid esters, such as methyl acetate, ethyl acetate, propyl acetate, and butyl acetate; ether-based compounds, such as dimethoxymethane, diethoxymethane, ethoxymethoxymethane, tetrahydrofuran, 1,3-dioxane, and 1,4-dioxane; and sulfone-based compounds, such as 2-methylsulfolane, 3-methylsulfolane, 2-fluorosulfolane, 3-fluorosulfolane, dimethyl sulfone, ethyl methyl sulfone, and monofluoromethyl methyl sulfone. The organic solvent is preferably a saturated cyclic carbonate, a linear carbonate, or a carboxylic acid ester, more preferably a saturated cyclic carbonate or a linear carbonate. These nonaqueous solvents may be used singly, or in combination of two or more thereof.

<B1-4. Auxiliary Agent>

The nonaqueous electrolytic solution of the present embodiment may also contain an auxiliary agent within a range that the effects of the present invention are exerted. Examples of the auxiliary agent include:

unsaturated cyclic carbonates, such as vinylene carbonate, vinylethylene carbonate, and ethynylethylene carbonate;
fluorinated cyclic carbonates, such as monofluoroethylene carbonate, 4,4-difluoroethylene carbonate, 4,5-difluoroethylene carbonate, and 4,5-difluoro-4,5-dimethylethylene carbonate;
carbonate compounds, such as methoxyethyl methyl carbonate;
spiro compounds, such as methyl-2-propynyl oxalate;
sulfur-containing compounds, such as ethylene sulfite;
isocyanate compounds, for example, cycloalkylene group-containing diisocyanates such as 1,3-bis(isocyanatomethyl)cyclohexane, trimeric compounds derived from a compound having at least two isocyanate groups in the molecule, such as triallyl isocyanurate, and aliphatic polyisocyanates obtained by adding a polyhydric alcohol to the trimeric compounds;
nitrogen-containing compounds, such as 1-methyl-2-pyrrolidinone;
hydrocarbon compounds, such as cycloheptane; fluorine-containing aromatic compounds, such as fluorobenzene;
silane compounds, such as tris(trimethylsilyl) borate;
ester compounds, such as 2-propynyl 2-(methanesulfonyloxy)propionate; and
lithium salts, such as lithium ethylmethyloxycarbonyl phosphonate.

These auxiliary agents may be used singly, or in combination of two or more thereof. By adding these auxiliary agents, the generation of gas during initial conditioning can be inhibited, and the capacity retention characteristics after high-temperature storage and the cycle characteristics can be improved.

Particularly, in the nonaqueous electrolytic solution of the present embodiment, it is preferred to use at least one selected from unsaturated cyclic carbonates and fluorine atom-containing cyclic carbonates since this further inhibits the generation of gas during initial conditioning, so that a battery unlikely to be swollen can be obtained.

The nonaqueous electrolytic solution may also contain, as the auxiliary agent, a phosphate having a P=O bond and a P-F bond, a salt having an $FSO_2$ skeleton, or an oxalate. From the standpoint of forming a composite coating film with the compound represented by Formula (4) in a preferred manner, the nonaqueous electrolytic solution preferably contains one or more compounds selected from the group consisting of a phosphate having a P=O bond and a P-F bond, a salt having an $FSO_2$ skeleton, and an oxalate and, from the standpoint of reducing the amount of gas generation during charged storage and inhibiting an increase in the internal resistance, the nonaqueous electrolytic solution preferably contains a phosphate having a P=O bond and a P-F bond, and/or a salt having an $FSO_2$ skeleton.

A total content of the compounds selected from the group consisting of a phosphate having a P=O bond and a P-F bond, a salt having an $FSO_2$ skeleton, and an oxalate is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, in 100% by mass of the nonaqueous electrolytic solution (with respect to a total amount of the nonaqueous electrolytic solution) . When two or more auxiliary agents are used in combination, a total content thereof preferably satisfies the above-described range.

(Phosphate Having P=O Bond and P-F Bond)

The phosphate having a P=O bond and a P-F bond is not particularly limited as long as it is a phosphate that contains a P=O bond and a P-F bond in the molecule.
Examples of a counter cation of a phosphate having a P-F bond include alkali metals such as lithium, sodium, and potassium, among which lithium is preferred.
Examples of a fluorophosphate having a P=O bond include: monofluorophosphates, such as $Li_2PO_3F$; and difluorophosphates, such as $LiPO_2F_2$, $NaPO_2F_2$, and $KPO_2F_2$.
Particularly, from the standpoint of further enhancing the effect of improving the charge-discharge rate characteristics and the impedance characteristics in addition to the effect of inhibiting the generation of gas during high-temperature storage, a difluorophosphate is preferred, and lithium difluorophosphate is more preferred.
A fluorophosphate may be used singly, or two or more thereof may be used in any combination at any ratio. The content of the fluorophosphate (a total content when two or more fluorophosphates are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the fluorophosphate is in this range, the characteristics of a nonaqueous electrolytic solution secondary battery, particularly the durability characteristics or the continuous charging characteristics can be markedly improved. Although the mechanism of this effect is not clear, it is believed that, by mixing the fluorophosphate at the above-described ratio, side reactions of additives on electrodes are minimized.
The mass ratio between the compound represented by Formula (1) and the phosphate having a P=O bond and a P-F bond (a total amount when two or more thereof are used), [compound represented by Formula (1)/phosphate having a P=O bond and a P-F bond], is usually 1/100 or higher, preferably 10/100 or higher, more preferably 20/100 or higher, still more preferably 25/100 or higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, side reactions of additives on electrodes are minimized.
When the nonaqueous electrolytic solution contains $LiPF_6$, the mass ratio of the phosphate having a P=O bond and a P-F bond (a total amount when two or more thereof are used) with respect to the content of $LiPF_6$ (fluorophosphate/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.
It is noted here that the content of the phosphate having a P=O bond and a P-F bond is determined by a nuclear magnetic resonance (NMR) analysis. Usually, an NMR analysis is performed; however, an ion chromatography (IC) analysis is also performed in such a case where it is difficult to determine the attribution of other compound based on a solvent peak.

(Salt Having $FSO_2$ Skeleton)

The salt having an $FSO_2$ skeleton used in the present embodiment is not particularly limited as long as it is a salt that contains an $FSO_2$ skeleton in the molecule.
Examples of a counter cation of the salt having an $FSO_2$ skeleton include alkali metals such as lithium, sodium, and potassium, among which lithium is preferred.
Examples of the salt having an $FSO_2$ skeleton include:

fluorosulfonates, such as $FSO_3Li$, $FSO_3Na$, $FSO_3K$, $FSO_3(CH_3)_4N$, $FSO_3(C_2H_5)_4N$, and $FSO_3(n\text{-}C_4H_9)_4N$;
fluorosulfonylimide salts, such as $LiN(FSO_2)_2$ and $LiN(FSO_2)(CF_3SO_2)$; and
fluorosulfonylmethide salts, such as $LiC(FSO_2)_3$.

Particularly, from the standpoint of further enhancing the effect of improving the charge-discharge rate characteristics and the impedance characteristics in addition to the effect of inhibiting the generation of gas during high-temperature storage, a fluorosulfonate is preferred, and lithium fluorophosphate is more preferred.
The salt having an $FSO_2$ skeleton may be used singly, or two or more thereof may be used in any combination

at any ratio. The content of the salt having an $FSO_2$ skeleton (a total content when two or more thereof are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the salt having an $FSO_2$ skeleton is in this range, the characteristics of a nonaqueous electrolytic solution secondary battery, particularly the durability characteristics or the continuous charging characteristics can be markedly improved. Although the mechanism of this effect is not clear, it is believed that, by mixing the salt having an $FSO_2$ skeleton at the above-described ratio, side reactions of additives on electrodes are minimized.

The mass ratio between the compound represented by Formula (1) and the salt having an $FSO_2$ skeleton (a total amount when two or more thereof are used), [compound represented by Formula (1) /salt having an $FSO_2$ skeleton], is usually 1/100 or higher, preferably 10/100 or higher, more preferably 20/100 or higher, still more preferably 25/100 or higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, side reactions of additives on electrodes are minimized.

When the nonaqueous electrolytic solution contains $LiPF_6$, the mass ratio of the salt having an $FSO_2$ skeleton (a total amount when two or more thereof are used) with respect to the content of $LiPF_6$ (salt having an $FSO_2$ skeleton/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.

It is noted here that the content of the salt having an $FSO_2$ skeleton is determined by a nuclear magnetic resonance (NMR) analysis. Usually, an NMR analysis is performed; however, an ion chromatography (IC) analysis is also performed in such a case where it is difficult to determine the attribution of other compound based on a solvent peak.

(Oxalate)

The oxalate is not particularly limited as long as it is a compound that contains at least one oxalate skeleton in the molecule.

Examples of a counter cation of the oxalate include alkali metals such as lithium, sodium, and potassium, among which lithium is preferred.

Examples of the oxalate include:

oxalatoborates, such as lithium bis(oxalato)borate and lithium difluorooxalatoborate; and
oxalatophosphates, such as lithium tetrafluorooxalatophosphate, lithium difluorobis(oxalato)phosphate, and lithium tris(oxalato)phosphate.

Particularly, from the standpoint of further enhancing the effect of improving the charge-discharge rate characteristics and the impedance characteristics in addition to the effect of inhibiting the generation of gas during high-temperature storage, an oxalatoborate is preferred, and lithium bis(oxalato)borate is more preferred.

The oxalate may be used singly, or two or more thereof may be used in any combination at any ratio. The content of the oxalate (a total content when two or more thereof are used) in 100% by mass of the nonaqueous electrolytic solution may be not less than 0.001% by mass, preferably not less than 0.01% by mass, more preferably not less than 0.1% by mass, but may be 10% by mass or less, preferably 5% by mass or less, more preferably 3% by mass or less. When the content of the oxalate is in this range, the characteristics of a nonaqueous electrolytic solution secondary battery, particularly the durability characteristics or the continuous charging characteristics can be markedly improved. Although the mechanism of this effect is not clear, it is believed that, by mixing the oxalate at the above-described ratio, side reactions of additives on electrodes are minimized.

The mass ratio between the compound represented by Formula (1) and the oxalate (a total amount when two or more thereof are used), [compound represented by Formula (1) /oxalate], is usually 1/100 or higher, preferably 10/100 or higher, more preferably 20/100 or higher, still more preferably 25/100 or higher, but usually 10,000/100 or lower, preferably 500/100 or lower, more preferably 100/100, particularly preferably 80/100 or lower, most preferably 40/100 or lower. When the mass ratio is in this range, the characteristics of a nonaqueous electrolytic solution secondary battery, particularly the durability characteristics or the continuous charging characteristics can be markedly improved. Although

the mechanism of this effect is not clear, it is believed that, by mixing these compounds at the above-described ratio, side reactions of additives on electrodes are minimized.

When the nonaqueous electrolytic solution contains $LiPF_6$, the mass ratio of the oxalate (a total amount when two or more thereof are used) with respect to the content of $LiPF_6$ (oxalate/$LiPF_6$) is usually 0.00005 or higher, preferably 0.001 or higher, more preferably 0.01 or higher, still more preferably 0.02 or higher, particularly preferably 0.025 or higher, but usually 1.0 or lower, preferably 0.5 or lower, more preferably 0.4 or lower, still more preferably 0.35 or lower. When the mass ratio is in this range, the characteristics of a nonaqueous electrolytic solution secondary battery, particularly the durability characteristics or the continuous charging characteristics can be markedly improved. Although the mechanism of this effect is not clear, it is believed that, by mixing these compounds at the above-described ratio, decomposition side reaction of $LiPF_6$ inside the nonaqueous electrolytic solution secondary battery is minimized.

It is noted here that the content of the oxalate is determined by a nuclear magnetic resonance (NMR) analysis. Usually, an NMR analysis is performed; however, an ion chromatography (IC) analysis is also performed in such a case where it is difficult to determine the attribution of other compound based on a solvent peak.

Some additives are mentioned as salts of electrolytes and, in such a case, the concentration range thereof is used for judgement. For example, a certain fluorinated inorganic salt may be judged as an electrolyte when it is contained in the nonaqueous electrolytic solution in an amount of 10% by mass, and a certain salt having an oxalate skeleton may be judged as an additive when it is contained in an amount of 0.5% by mass.

A total content of auxiliary agents is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, in 100% by mass of the nonaqueous electrolytic solution (with respect to a total amount of the nonaqueous electrolytic solution) . When two or more auxiliary agents are used in combination, a total content thereof preferably satisfies the above-described range.

<B2. Nonaqueous Electrolytic Solution Battery>

The nonaqueous electrolytic solution battery according to one embodiment of the present invention is a nonaqueous electrolytic solution battery including: a positive electrode and a negative electrode that are capable of occluding and releasing metal ions; and the above-described nonaqueous electrolytic solution, wherein a negative electrode active material contained in the negative electrode contains a material containing a Li-alloyable metal element and/or metalloid element.

More particularly, the nonaqueous electrolytic solution battery according to one embodiment of the present invention includes : a positive electrode which includes a current collector and a positive electrode active material layer on at least a portion of the surface of the current collector, and is capable of occluding and releasing metal ions; a negative electrode which includes a current collector and a negative electrode active material layer on at least a portion of the surface of the current collector, and is capable of occluding and releasing metal ions; and a nonaqueous electrolytic solution which contains the above-described compound represented by Formula (4) along with an alkali metal salt and a nonaqueous solvent, and a negative electrode active material contained in the negative electrode contains a material containing a Li-alloyable metal element and/or metalloid element.

<B2-1. Battery Configuration>

The nonaqueous electrolytic solution battery of the present embodiment has the same configuration as that of a conventionally known nonaqueous electrolytic solution battery, except for the above-described nonaqueous electrolytic solution and negative electrode. The nonaqueous electrolytic solution battery usually has a form in which the positive electrode and the negative electrode are laminated via a porous membrane (separator) impregnated with the nonaqueous electrolytic solution, and these components are housed in a casing (outer package).

The shape of the nonaqueous electrolytic solution battery of the present embodiment is not particularly limited and may be any of, for example, a cylindrical shape, a prismatic shape, a laminated shape, a coin shape, and a large-sized shape.

<B2-2. Nonaqueous Electrolytic Solution>

As the nonaqueous electrolytic solution, the above-described nonaqueous electrolytic solution according to the present embodiment is used. It is noted here that the above-described nonaqueous electrolytic solution can also be blended with other nonaqueous electrolytic solution within a range that does not depart from the gist of the present invention.

<B2-3. Positive Electrode>

The "positive electrode" refers to an electrode which includes a current collector and a positive electrode active material on at least a portion of the surface of the current collector. As for other constitutions, conventionally known constitutions can be employed.

A lithium-transition metal compound is a compound having a structure that allows dissociation and intercalation of lithium ions, and examples thereof include sulfides, phosphate compounds, silicate compounds, borate compounds, and lithium-transition metal composite oxides. Thereamong, phosphate compounds and lithium-transition metal composite oxides are preferred, and lithium-transition metal composite oxides are more preferred.

Examples of the lithium-transition metal composite oxides include those belonging to a spinel structure that is three-dimensionally diffusible, or a layered structure that allows two-dimensional diffusion of lithium ions.

Lithium-transition metal compounds having a spinel structure are generally represented by the following composition formula (11-2):

$$Li_{X2'}M3'_2O_4 \qquad (11\text{-}2)$$

(wherein, x3' satisfies $1 \leq x3' \leq 1.5$, and M3' represents at least one transition metal element).

Specific examples of such lithium-transition metal compounds include $LiMn_2O_4$, $LiCoMnO_4$, $LiNi_{0.5}Mn_{1.5}O_4$, and $LiCoVO_4$.

Lithium-transition metal compounds having a layered structure are generally represented by the following composition formula (12-2):

$$Li_{1+x3}M3O_2 \qquad (12\text{-}2)$$

(wherein, x3 satisfies $-0.1 \leq x3 \leq 0.5$, and M3 represents at least one transition metal element).

Specific examples of such lithium-transition metal compounds include $LiCoO_2$, $LiNiO_2$, $LiNi_{0.85}Co_{0.10}Al_{0.05}O_2$, $LiNi_{0.80}Co_{0.15}Al_{0.05}C_2$, $LiNi_{0.33}Co_{0.33}Mn_{0.33}O_2$, $Li_{1.05}Ni_{0.33}Co_{0.33}Mn_{0.33}O_2$, $LiNi_{0.5}Co_{0.2}Mn_{0.3}O_2$, $Li_{1.05}Ni_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$.

Thereamong, from the standpoint of improving the battery capacity, lithium-transition metal composite oxides having a layered structure are preferred, and lithium-transition metal composite oxides represented by the following composition formula (13-2) are more preferred:

$$Li_{a13}Ni_{b13}M13_{c13}O_2 \qquad (13\text{-}2)$$

(wherein, a13, b13, and c13 represent numerical values satisfying $0.90 \leq a13 \leq 1.10$, $0.40 \leq b13 \leq 0.98$, and $0.00 \leq c13 \leq 0.50$, respectively, and satisfyb13 + c13 = 1; and M13 represents at least one element selected from the group consisting of Co, Mn, Al, Mg, Zr, Fe, Ti, and Er).

In the composition formula (13-2), b13 is preferably not less than 0.55, more preferably not less than 0.60, still more preferably not less than 0.65, particularly preferably not less than 0.70, yet more preferably not less than 0.75, further preferably not less than 0.80, further more preferably not less than 0.90, and c13 is preferably not less than 0.01.

The positive electrode active material is not particularly limited as long as it is lithium cobaltate, or a transition metal oxide containing at least Ni and Co in which Ni and Co account for not less than 50% by mole of transition metals and which is capable of electrochemically occluding and releasing metal ions, and the positive electrode active material is preferably, for example, a transition metal oxide which is capable of electrochemically occluding and releasing lithium ions and contains lithium along with at least Ni and Co and in which Ni and Co account for not less than 60% by mole of transition metals. Ni and Co have a redox potential suitable for the use as positive electrode materials of a secondary battery, and are thus appropriate for high-capacity applications.

Particularly, a mode in which the positive electrode active material is a transition metal oxide represented by the following composition formula (14-2) is preferred:

$$Li_{a23}Ni_{b23}Co_{c23}M23_{d23}O_2 \qquad (14\text{-}2)$$

In the composition formula (14), a23, b23, c23, and d23 represent numerical values of $0.90 \leq a23 \leq 1.10$, $0.50 \leq b23 \leq 0.98$, $0.01 \leq c23 < 0.50$ and $0.01 \leq d23 < 0.50$, satisfying b23 + c23 + d23 = 1, and M23 represents at least one element selected from the group consisting of Mn, Al, Mg, Zr, Fe, Ti, and Er.

In the composition formula (14-2), d23 represents a numerical value of $0.1 \leq d23 < 0.5$.

It is advantageous to control the composition ratios of Ni, Co, and other metal species to be in the above-described respective ranges since this makes the transition metals unlikely to elute out of the positive electrode and,

even if they did, Ni and Co would have only a small adverse effect in a nonaqueous secondary battery.

Preferred specific examples include $LiNi_{0.85}Co_{0.10}Al_{0.05}O_2$, $LiNi_{0.80}Co_{0.15}Al_{0.05}O_2$, $LiNi_{0.5}Co_{0.2}Mn_{0.3}O_2$, $Li_{1.05}Ni_{0.50}Co_{0.20}Mn_{0.30}O_2$, $LiNi_{0.6}Co_{0.2}Mn_{0.2}O_2$, and $LiNi_{0.8}Co_{0.1}Mn_{0.1}O_2$.

<B2-5. Separator>

A separator is usually arranged between the positive electrode and the negative electrode for the purpose of inhibiting a short circuit. In this case, the nonaqueous electrolytic solution according to the present embodiment is usually impregnated into this separator. As the separator, any conventionally known separator can be used.

EXAMPLES

The present invention will now be described more concretely by way of Examples and Comparative Examples; however, the present invention is not limited to the below-described Examples within the gist of the present invention.

Compounds used in Examples and Comparative Examples are shown below.

Compound 1

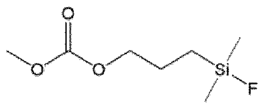

Compound 2

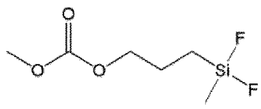

Compound 3

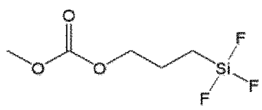

Compound 4

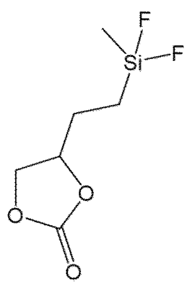

Compound 5

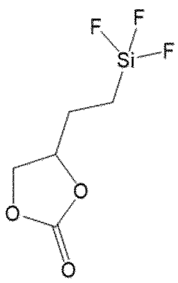

Compound 6

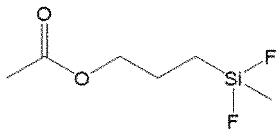

Compound 7

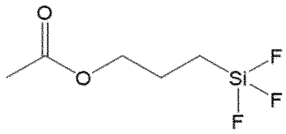

Compound 8

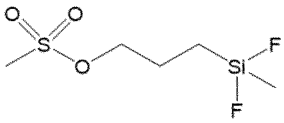

Compound 9

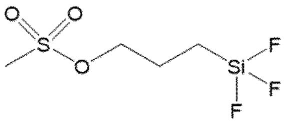

Compound 10

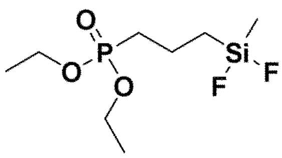

Compound 11

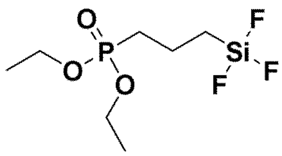

Compound 12

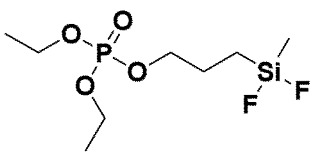

Compound 13

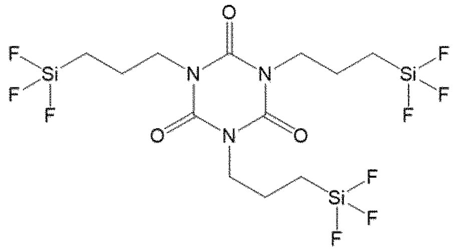

Compound 14

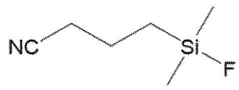

Compound 15

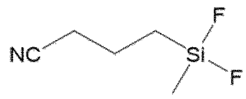

Compound 16

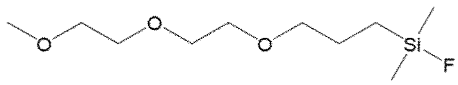

| | |
|---|---|
| Compound 17 | lithium difluorophosphate ($LiPO_2F_2$) |
| Compound 18 | lithium fluorosulfonate ($LiSO_3F$) |

<Synthesis Examples>

In the below-described Synthesis Examples, a 2%-by-weight xylene solution of platinum (0)-1,3-divinyltetramethyldisiloxane complex manufactured by Sigma-Aldrich Co., LLC. was used as a Karstedt catalyst.
The analysis methods employed in the below-described Synthesis Examples are as follows.

[Nuclear Magnetic Resonance (NMR) Analysis]

$^1$H-NMR, $^{13}$C-NMR, and $^{19}$F-NMR were measured using 400 ULTRASHIELD manufactured by Bruker Optics K.K. at 400 MHz, 101 MHz, and 376 MHz, respectively. A sample was dissolved in deuterated chloroform ($CDCl_3$) to perform the measurement.

[Gas Chromatography (GC) Analysis]

A sample in an amount of 100 μL was dissolved in 1 mL of hexane. The thus obtained solution was analyzed using a GC analyzer (GC-2010 manufactured by Shimadzu Corporation). The conditions were as follows.

Column: DB-1 (length: 30 m, inner diameter: 0.32 mm, membrane thickness: 0.25 um, manufactured by Agilent Technologies, Inc.)
Detector: FID
Temperature :40°C → 280°C, heated at a rate of 10°C/min.
The purity was determined from the peak area %.

<Synthesis Example 1>

Synthesis of Compound 1

(3-(fluorodimethylsilyl)propylmethyl) carbonate)

Allyl methyl carbonate (2.00 g, 17.2 mmol) was dissolved in toluene (20 mL), and 20 μL of Karstedt's catalyst was added thereto. Chlorodimethylsilane (2.25 mL, 20.7 mmol) was further added dropwise with stirring under ice-cooling. The resultant was heated with stirring at 70°C for 15 minutes to obtain a toluene solution of 3-(chlorodimethylsilyl)propylmethyl carbonate.

Potassium fluoride (2.00 g, 34.5 mmol), 18-crown-6-ether (0.911 g, 3.44 mmol), and acetonitrile (40 mL) were added to another reactor, the toluene solution of 3-(chlorodimethylsilyl)propylmethyl carbonate was further added dropwise with stirring under ice-cooling, and the resultant was heated to reflux for 3 hours. The thus obtained reaction solution was filtered and the solvent was concentrated, after which 3-(fluorodimethylsilyl)propylmethyl carbonate (0.185 g, 0.952 mmol) was obtained by silica-gel column chromatography. The purity estimated by GC analysis was 99%. The analysis results of $^1$H-NMR, $^{13}$C-NMR, and $^{19}$F-NMR were as follows.

$^1$H-NMR (400 MHz, $CDCl_3$): δ = 4.12 (t,J = 6.8 Hz,2H), 3.78 (s,3H), 1.80-1.73 (m,2H), 0.75-0.69 (m,2H), 0.24 (s,6H)
$^{13}$C-NMR (101 MHz, $CDCl_3$): δ = 155.8, 70.0, 54.7, 22.0, 12.4,-1.6
$^{19}$F-NMR (376 MHz, $CDCl_3$): δ = -162.2

<Synthesis Example 2>

Synthesis of Compound 2

(3-(difluoromethylsilyl)propylmethyl) carbonate)

Allyl methyl carbonate (6.50 g, 56.0 mmol) was dissolved in toluene (65 mL), and 70 μL of Karstedt's catalyst was added thereto. Dichlorodimethylsilane (6.90 mL,67.2 mmol) was further added dropwise with stirring under ice-cooling. The resultant was heated with stirring at 80°C for 15 minutes to obtain a toluene solution of 3-(dichlorodimethylsilyl)propylmethyl carbonate.

Potassium fluoride (13.0 g, 224 mmol), 18-crown-6-ether (2.96 g, 11.2 mmol), and acetonitrile (130 mL) were added to another reactor, and the toluene solution of 3-(dichlorodimethylsilyl)propylmethyl carbonate was further added dropwise with stirring under ice-cooling. The resultant was heated to reflux for 3 hours and then allowed to cool to room temperature. The thus obtained reaction solution was filtered and the solvent was distilled away, followed by distillation and purification to obtain 3-(difluorodimethylsilyl)propylmethyl carbonate (80.0 mg, 0.404 mmol). The purity estimated by GC analysis was 99%. The analysis results of $^1$H-NMR and $^{19}$F-NMR were as follows.

$^1$H-NMR (400 MHz, $CDCl_3$): δ = 4.13 (t,J = 6.5 Hz,2H), 3.79 (s,3H), 1.87-1.79 (m,2H), 0.89-0.82 (m,2H), 0.38-0.35 (m,3H)
$^{19}$F-NMR (376 MHz, $CDCl_3$): δ = -135.5

<Synthesis Example 3>

Synthesis of Compound 3 (3-(trifluorosilyl)propylmethyl) carbonate)

Allyl methyl carbonate (7.50 g, 64.6 mmol) was dissolved in toluene (110 mL), and 75 μL of Karstedt's catalyst was added thereto. Trimethoxysilane (9.87 mL, 77.5mmol) was further added dropwise with stirring under ice-cooling. The resultant was heated with stirring at 50°C for 15 minutes, and the solvent was distilled away to obtain 3-(trimethoxysilyl)propylmethyl carbonate (12.3 g, 51.5 mmol).

The thus obtained 3-(trimethoxysilyl)propylmethyl carbonate (12.3 g, 51.5mmol) was dissolved in diethyl ether (180 mL), and boron trifluoride-diethyl ether complex (6.46 mL, 51.5 mmol) was added thereto dropwise under ice-cooling. The resultant was heated to reflux for 6 hours, and low-boiling-point by-products and solvent were subsequently distilled away. Purification was performed using a Kugelrohr distillation-purification apparatus to obtain 3-(trifluorosilyl)propylmethyl carbonate (1.26 g, 6.23 mmol). The purity estimated by GC analysis was 97% . The analysis results of $^1$H-NMR, $^{13}$C-NMR, and $^{19}$F-NMR were as follows.

$^1$H-NMR (400 MHz, $CDCl_3$): δ = 4.17 (t,J = 6.3 Hz,2H), 3.80 (s,3H), 1.96-1.89 (m,2H), 1.12-1.07 (m,2H)

$^{13}C$-NMR (101 MHz, $CDCl_3$) : $\delta$ = 155.8, 68.6, 55.0, 20.6, 3.4
$^{19}F$-NMR (376 MHz, $CDCl_3$): $\delta$ = -137.1

<Synthesis Example 4>

Synthesis of Compound 4

(4-[2-(difluoromethylsilyl)ethyl]-1,3-dioxolane-2-one)

Vinylethylene carbonate (6.00 g, 52.6 mmol) was dissolved in toluene (80 mL), and 60 μL of Karstedt's catalyst was added thereto. Dichloromethylsilane (6.72 mL, 63.1 mmol) was further added dropwise with stirring under ice-cooling, and the resultant was heated with stirring at 100°C for 2 hours. The resultant was allowed to cool to room temperature, and acetonitrile (160 mL) and 18-crown-6-ether (2.78 g, 10.5 mmol) were subsequently added thereto, after which potassium fluoride (12.2 g, 210 mmol) was further added in small amounts. The resultant was heated to reflux for 4 hours and then allowed to cool to room temperature, and inorganic salts were separated by filtration. The resulting filtrate was concentrated and subsequently purified by distillation to obtain 4-[2-(difluoromethylsilyl)ethyl]-1,3-dioxolane-2-one (0.300 g, 1.53 mmol). The purity estimated by GC analysis was 87%. The analysis results of $^1H$-NMR, $^{13}C$-NMR, and $^{19}F$-NMR were as follows.

$^1H$-NMR (400 MHz, $CDCl_3$): $\delta$ = 4.68-4.74 (m,1H), 4.56 (dd,J = 8.6, 7.9Hz,1H), 4.10 (dd,J=8.6, 6.8Hz,1H), 1.94-1.87 (m,2H), 1.03-0.85 (m,2H), 0.42 (t,$J_{H-F}$ = 6.3 Hz,3H)
$^{13}C$-NMR (101 MHz, $CDCl_3$): $\delta$ = 154.6, 77.5, 68.7, 26.1, 8.3, -4.3
$^{19}F$-NMR (376 MHz, $CDCl_3$): $\delta$ = -135.2

<Synthesis Example 5>

Synthesis of Compound 5

(4-(2-trifluorosilylethyl)-1,3-dioxolane-2-one)

Vinylethylene carbonate (12.0 g, 105 mmol) was dissolved in toluene (120 mL), and 100 μL of Karstedt's catalyst was added thereto. Trimethoxysilane (16.1 mL, 126 mmol) was further added dropwise with stirring under ice-cooling, and the resultant was heated with stirring at 50°C for 2 hours. The solvent was distilled away to obtain 4-(2-trimethoxysilylethyl)-1,3-dioxolane-2-one (23.8 g, 101 mmol) .

The thus obtained 4-(2-trimethoxysilylethyl)-1,3-dioxolane-2-one (15.0 g, 63.5 mmol) was dissolved in diethyl ether (70 mL), and boron trifluoride-diethyl ether complex (7.97 mL, 63.5 mmol) was added thereto dropwise under ice-cooling. The resultant was heated to reflux for 5 hours, and low-boiling-point by-products and solvent were subsequently distilled away. The resulting 3 g of crude product was purified by distillation to obtain 4-(2-trifluorosilylethyl)-1,3-dioxolane-2-one (0.88 g, 4.40 mmol). The purity estimated by GC analysis was 99%. The analysis results of $^1H$-NMR, $^{13}C$-NMR, and $^{19}F$-NMR were as follows.

$^1H$-NMR (400 MHz, $CDCl_3$): $\delta$ = 4.68-4.75 (m,1H), 4.60-4.55 (m,1H), 4.10 (dd,J=8.6, 6.6Hz,1H), 2.01-1.95 (m,2H), 1.30-1.21 (m,1H), 1.16-1.07 (m,1H)

$^{13}C$-NMR (101 MHz, $CDCl_3$): $\delta$ = 154.2, 76.9, 68.6, 25.8, 2.4
$^{19}F$-NMR (376 MHz, $CDCl_3$): $\delta$ = -136.7

<Synthesis Example 6>

Synthesis of Compound 6 (3-(difluoromethylsilyl)propyl acetate)

Allyl acetate (3.00 g, 30.0 mmol) was dissolved in toluene (40 mL), and 30 μL of Karstedt's catalyst was added thereto. Dichloromethylsilane (3.83 mL, 36.0 mmol) was further added dropwise with stirring under ice-cooling, and the resultant was heated with stirring at 80°C for 15 minutes. The resultant was allowed to cool to room temperature, and acetonitrile (80 mL) and 18-crown-6-ether (1.58 g, 5.99 mmol) were subsequently added thereto, after which potassium fluoride (6.96 g, 120 mmol) was further added in small amounts. The resultant was heated to reflux for 3 hours and then allowed to cool to room temperature. The thus obtained reaction solution was filtered, and the resulting filtrate was concentrated and then purified by distillation to obtain 3-(difluoromethylsilyl)propyl acetate (1.10 g, 6.04 mmol). The purity estimated by GC analysis was 95%. The analysis results of $^1H$-NMR, $^{13}C$-NMR, and $^{19}F$-NMR were as follows.

$^1$H-NMR (400 MHz, $CDCl_3$): δ = 4.06 (t,J = 6.5 Hz,2H), 2.12 (s,3H), 1.83-1.76 (m,2H), 0.87-0.81 (m,2H), 0.37 (t,$J_{H-F}$ = 6.4 Hz, 3H)
$^{13}$C-NMR (101 MHz, $CDCl_3$): δ = 171.0, 65.7, 20.9, 20.8, 9.9, -4.3
$^{19}$F-NMR (376 MHz, $CDCl_3$): δ = -135.4

<Synthesis Example 7>

Synthesis of Compound 7 (3-trifluorosilylpropyl acetate)

After dissolving 3-trimethoxysilylpropyl acetate (34.5 g, 155.2 mmol) in toluene (345 mL), boron trifluoride-diethyl ether complex (38.3 mL, 310.4 mmol) was added thereto dropwise under ice-cooling. The resultant was heated at 80°C for 2 hours, and low-boiling-point by-products and solvent were subsequently distilled away. The resulting 3 g of crude product was purified by distillation to obtain 3-trifluorosilylpropyl acetate (0.90 g, 4.83 mmol). The purity estimated by GC analysis was 92%. The analysis results of $^1$H-NMR, $^{13}$C-NMR, and $^{19}$F-NMR were as follows.

$^1$H-NMR (400 MHz, $CDCl_3$): δ = 4.18 (t,J = 6.1 Hz,2H), 2.21 (s,3H), 1.91-1.98 (m,2H), 1.11-1.07 (m,2H)
$^{13}$C-NMR (101 MHz, $CDCl_3$): δ = 173.6, 66.8, 20.6, 20.4, 3.9
$^{19}$F-NMR (376 MHz, $CDCl_3$): δ = -136.8

<Synthesis Example 8>

Synthesis of Compound 8 (3-(difluoromethylsilyl)propyl methanesulfonate)

After dissolving 3-chloropropyl-dimethoxy-methylsilane (5.00 g, 27.4 mmol) in acetone (30 mL), sodium iodide (6.15 g, 41.0 mmol) was added thereto, and the resultant was heated to reflux for 16 hours. The solvent was distilled away, and dichloromethane was subsequently added, followed by separation of the thus precipitated inorganic salts by filtration. The resulting filtrate was concentrated to obtain 3-iodopropyl-dimethoxy-methylsilane (6.37 g, 23.2 mmol).

Silver methanesulfonate (2.89 g, 14.2 mmol) was dissolved in acetonitrile (50 mL), and the above-obtained 3-iodopropyl-dimethoxy-methylsilane (3.00 g, 10.9 mmol) was added thereto. The resultant was heated to reflux for 2 hours. The thus obtained reaction solution was filtered, and the resulting filtrate was concentrated. Toluene was added thereto and the resulting precipitate was separated by filtration, after which the thus obtained filtrate was concentrated to obtain 3-(dimethoxymethylsilyl)propyl methanesulfonate (2.30 g, 9.49 mmol) .

The thus obtained 3-(dimethoxymethylsilyl)propyl methanesulfonate (2.30 g, 9.49 mmol) was dissolved in diethyl ether (30 mL), and boron trifluoride-diethyl ether complex (0.795 mL, 6.33 mmol) was added thereto dropwise under ice-cooling. After heating the resultant to reflux for 5 hours, low-boiling-point by-products and solvent were distilled away, and the resultant was subsequently purified by distillation to obtain 3-(difluoromethylsilyl)propylmethanesulfonate (0.21 g, 0.962 mmol). The purity estimated by GC analysis was 86%. The analysis results of $^1$H-NMR, $^{13}$C-NMR, and $^{19}$F-NMRwere as follows.

$^1$H-NMR (400 MHz, $CDCl_3$): δ = 4.22 (t,J = 6.4 Hz,2H), 3.03 (s,3H), 1.96-1.88 (m,2H), 0.92-0.88 (m,2H), 0.39 (t,$J_{H-F}$ = 6.3 Hz,3H)
$^{13}$C-NMR (101 MHz, $CDCl_3$): δ = 71.0, 37.3, 21.6, 9.4, -4.4
$^{19}$F-NMR (376 MHz, $CDCl_3$): δ = -135.2

<Synthesis Example 9>

Synthesis of Compound 9 (3-trifluorosilylpropyl methanesulfonate)

Silver methanesulfonate (1.23 g, 6.04 mmol) was dissolved in acetonitrile (15 mL), and 3-iodopropyl(trimethoxy)silane (1.46 g, 5.03mmol) was added thereto. The resultant was stirred for 1 hour at room temperature and subsequently heated to reflux for 4 hours. The thus obtained reaction solution was filtered, and the resulting filtrate was concentrated. Toluene was added thereto and the resulting precipitate was separated by filtration, after which the thus obtained filtrate was concentrated to obtain 3-trimethoxysilylpropyl methanesulfonate (1.02 g, 3.95 mmol).

The thus obtained 3-trimethoxysilylpropyl methanesulfonate (1.00 g, 3.87 mmol) was dissolved in diethyl ether (15 mL), and boron trifluoride-diethyl ether complex (0.486 mL, 3.87 mmol) was added thereto dropwise under ice-cooling. After heating the resultant to reflux for 9 hours, low-boiling-point by-products and solvent were distilled away, and the resultant was subsequently purified by distillation to obtain 3-trifluorosilylpropyl methanesulfonate (0.15 g, 0.675 mmol). The purity estimated by GC analysis was 97%. The analysis results of $^1$H-NMR, $^{13}$C-NMR, and $^{19}$F-NMR were

as follows.

$^{1}H$-NMR (400 MHz, $CDCl_3$): δ = 4.26 (t,J = 6.1 Hz,2H), 3.06 (s,3H), 2.05-1.98 (m,2H), 1.18-1.11 (m,2H)
$^{13}C$-NMR (101 MHz, $CDCl_3$): δ = 69.9, 37.4, 21.2, 3.3
$^{19}F$-NMR (376 MHz, $CDCl_3$): δ = -136.7

<Synthesis Example 10>

Synthesis of Compound 10

(3-diethoxyphosphorylpropyl-difluoro-methylsilane)

Diethyl allylphosphonate (3.00 g, 16.8 mmol) was dissolved in toluene (30 mL), and 90 μL of Karstedt's catalyst was added thereto. Methyl(dimethoxy)silane (3.12 mL, 25.3 mmol) was further added dropwise with stirring under ice-cooling, and the resultant was heated with stirring at 90°C for 3 hours. The solvent was distilled away to obtain 3-diethoxyphosphorylpropyl-dimethoxy-methylsilane (4.79 g, 16.8 mmol) .

The thus obtained 3-diethoxyphosphorylpropyl-dimethoxy-methylsilane (4.79 g, 16.8 mmol) was dissolved in diethyl ether (30 mL), and boron trifluoride-diethyl ether complex (1.41 mL, 11.2 mmol) was added thereto dropwise under ice-cooling. The resultant was heated to reflux for 1.5 hours, and low-boiling-point by-products and solvent were subsequently distilled away. The resultant was purified by distillation to obtain 3-diethoxyphosphorylpropyl-difluoro-methylsilane (1.87 g, 7.18 mmol). The purity estimated by GC analysis was 76%. The analysis results of $^{1}H$-NMR, $^{13}C$-NMR, $^{19}F$-NMR, and $^{31}P$-NMR were as follows.

$^{1}H$-NMR (400 MHz, $CDCl_3$): δ = 4.15-4.05 (m,4H), 1.82-1.75 (m,4H), 1.35-1.22 (m,6H), 0.93 (m,0.96-0.90,2H), 0.40-0.34 (m,3H)
$^{13}C$-NMR (101 MHz, $CDCl_3$): δ = 61.5, 29.2, 27.8, 16.4, 14.6, -4.3
$^{19}F$-NMR (376 MHz, $CDCl_3$): δ = -135.3
$^{31}P$-NMR (162 MHz, $CDCl_3$): δ = 30.7

<Synthesis Example 11>

Synthesis of Compound 11

(3-diethoxyphosphorylpropyl(trifluoro)silane)

Diethyl allylphosphonate (1.00 g, 5.61mmol) was dissolved in toluene (10 mL), and 10 μL of Karstedt's catalyst was added thereto. Trimethoxysilane (0.857 mL, 6.74 mmol) was further added dropwise with stirring under ice-cooling, and the resultant was heated with stirring at room temperature for 30 minutes. The solvent was distilled away to obtain 3-diethoxyphosphorylpropyl(trimethoxy)silane (1.69 g, 5.61 mmol) .

The thus obtained 3-diethoxyphosphorylpropyl(trimethoxy)silane (1.69 g, 5.63 mmol) was dissolved in diethyl ether (20 mL), and boron trifluoride-diethyl ether complex (0.707 mL, 5.63mmol) was added thereto dropwise under ice-cooling. The resultant was heated to reflux for 5 hours, and low-boiling-point by-products and solvent were subsequently distilled away. The resultant was purified by distillation to obtain 3-diethoxyphosphorylpropyl(trifluoro)silane (0.35 g, 1.32 mmol). The purity estimated by GC analysis was 90%. The analysis results of $^{1}H$-NMR, $^{13}C$-NMR, $^{19}F$-NMR, and $^{31}P$-NMR were as follows.

$^{1}H$-NMR (400 MHz, $CDCl_3$): δ = 4.16-4.06 (m,4H), 1.90-1.80 (m,4H), 1.36-1.31 (m,6H), 1.17-1.14 (m,2H)
$^{13}C$-NMR (101 MHz, $CDCl_3$): δ = 61.7, 28.7, 27.3, 16.4, 14.8
$^{19}F$-NMR (376 MHz, $CDCl_3$): δ = -136.8
$^{31}P$-NMR (162 MHz, $CDCl_3$): δ = 29.9

<Synthesis Example 12>

Synthesis of Compound 12

(3-[difluoro(methyl)silyl]propyldiethyl phosphate)

Allyl diethyl phosphate (3.00 g, 15.5 mmol) was dissolved in toluene (30 mL), and 30 μL of Karstedt's catalyst

was added thereto. Methyl(dimethoxy)silane (2.29 mL, 18.5 mmol) was further added dropwise with stirring under ice-cooling, and the resultant was heated with stirring at room temperature for 30 minutes. The solvent was distilled away to obtain 3-[methyl(dimethoxy)silyl]propyldiethyl phosphate (4.45 g, 14.8 mmol) .

The thus obtained 3-[methyl(dimethoxy)silyl]propyldiethyl phosphate (4.45 g, 14.8 mmol) was dissolved in diethyl ether (30 mL), and boron trifluoride-diethyl ether complex (1.24 mL, 9.88 mmol) was added thereto dropwise under ice-cooling. The resultant was heated to reflux for 1.5 hours, and low-boiling-point by-products and solvent were subsequently distilled away. The resultant was purified by distillation to obtain 3-[difluoro(methyl)silyl]propyldiethyl phosphate (0.62 g, 2.24 mmol). The purity estimated by GC analysis was 92%. The analysis results of $^{1}$H-NMR, $^{13}$C-NMR, $^{19}$F-NMR, and $^{31}$P-NMR were as follows.

$^{1}$H-NMR (400 MHz, $CDCl_3$): $\delta$ = 4.16-4.08 (m,4H), 4.02 (m,4.05-4.00,2H), 1.86-1.81 (m,2H), 1.34 (t,J = 7.1 Hz,6H), 0.91-0.85 (m,2H), 0.37 (t,$J_{H-F}$ = 6.4 Hz,3H)
$^{13}$C-NMR (101 MHz, $CDCl_3$): $\delta$ = 68.7, 63.8, 22.5, 16.1, 9.4, -4.3
$^{19}$F-NMR (376 MHz, $CDCl_3$): $\delta$ = -135.4
$^{31}$P-NMR (162 MHz, $CDCl_3$): $\delta$ = -0.9

<Synthesis Example 13>

Synthesis of Compound 13 (tris(3-trifluorosilylpropyl) isocyanurate)

Tris(3-trimethoxysilylpropyl) isocyanurate (5.00 g, 8.12 mmol) was dissolved in diethyl ether (80 mL), and boron trifluoride-diethyl ether complex (3.06 mL, 24.4 mmol) was added thereto dropwise under ice-cooling. The resultant was heated to reflux for 17 hours, and low-boiling-point by-products and solvent were subsequently distilled away to obtain a crude product (2.90 g) containing 3.2% by weight of diethyl ether. The analysis results of $^{1}$H-NMR and $^{19}$F-NMR were as follows.

$^{1}$H-NMR (400 MHz, $CDCl_3$): $\delta$ = 3.94 (t,J = 7.4 Hz,6H), 1.95-1.87 (m,6H), 1.08-1.03 (m,6H)
$^{19}$F-NMR (376 MHz, $CDCl_3$): $\delta$ = -137.0

<Synthesis Example 15>

Synthesis of Compound 15

(4-(difluoromethylsilyl)butanenitrile)

Allyl cyanide (2.50 g, 37.3 mmol) was dissolved in toluene (40 mL), and 40 $\mu$L of Karstedt's catalyst was added thereto. Dichloromethylsilane (4.76 mL, 44.7 mmol) was further added dropwise with stirring under ice-cooling. The resultant was heated with stirring at 70°C for 15 minutes. The resultant was allowed to cool to room temperature, and acetonitrile (80 mL) and 18-crown-6-ether (1.97 g, 7.45 mmol) were subsequently added thereto, after which potassium fluoride (8.66 g, 149 mmol) was further added in small amounts. The resultant was heated to reflux for 7 hours and then allowed to cool to room temperature. The thus obtained reaction solution was filtered, and the resulting filtrate was concentrated and then purified by distillation to obtain 4-(difluoromethylsilyl)butanenitrile (0.77 g, 5.16 mmol) . The analysis results of $^{1}$H-NMR, $^{13}$C-NMR, and $^{19}$F-NMR were as follows.

$^{1}$H-NMR (400 MHz, $CDCl_3$): $\delta$ = 2.42 (t,J = 7.0 Hz,2H), 1.88-1.80 (m,2H), 0.99-0.95 (m,2H), 0.39 (s,3H)
$^{13}$C-NMR (101 MHz, $CDCl_3$): $\delta$ = 118.9, 19.9, 18.2, 12.8, -4.3
$^{19}$F-NMR (376 MHz, $CDCl_3$): $\delta$ = -135.2

The compound 14 was synthesized by the synthesis method described in Patent Document 1.

Further, commercially available products were used as the compounds 16, 17, and 18.

<Examples A1-1 to A1-23 and Comparative Examples A1-1 to A1-6>

[Production of Positive Electrode]

A slurry was prepared by mixing 90 parts by mass of a lithium-nickel-cobalt-manganese composite oxide ($Li_{1.0}Ni_{0.5}Co_{0.2}Mn_{0.3}O_2$) as a positive electrode active material, 7 parts by mass of acetylene black as a conductive material, and 3 parts by mass of polyvinylidene fluoride (PVdF) as a binder in an N-methylpyrrolidone solvent using a

disperser. This slurry was uniformly applied and dried onto both sides of a 15 um-thick aluminum foil, and this aluminum foil was subsequently pressed to produce a positive electrode.

[Production of Negative Electrode]

To 98 parts by mass of natural graphite, 1 part by mass of an aqueous dispersion of sodium carboxymethyl cellulose (concentration of sodium carboxymethyl cellulose = 1% by mass) and 1 part by mass of an aqueous dispersion of a styrene-butadiene rubber (concentration of styrene-butadiene rubber = 50% by mass) were added as a thickening agent and a binder, respectively, and these materials were mixed using a disperser to prepare a slurry. The thus obtained slurry was applied and dried onto one side of a 10 um-thick copper foil, and this copper foil was subsequently pressed to produce a negative electrode.

[Preparation of Nonaqueous Electrolytic Solutions]

Under a dry argon atmosphere, thoroughly-dried $LiPF_6$ was dissolved as an electrolyte at 1.2 mol/L (14.8% by mass in terms of the concentration in the resulting nonaqueous electrolytic solution) in a mixture of ethylene carbonate (EC), diethyl carbonate (DEC), and ethyl methyl carbonate (EMC) (volume ratio EC:DEC:EMC = 3:3:4). Subsequently, vinylene carbonate (VC) and fluoroethylene carbonate (FEC) were further added each in an amount of 2.0% by mass (in terms of the concentration in the resulting nonaqueous electrolytic solution) (the resultant is hereinafter referred to as "reference electrolytic solution 1") . To the thus obtained reference electrolytic solution 1, the compounds 1 to 7 and 9 to 13 were added in the respective amounts shown in Table 1 below to prepare nonaqueous electrolytic solutions. It is noted here that, in Table 1, "Content (% by mass)" indicates an amount contained in a total of 100% by mass of each nonaqueous electrolytic solution.

[Production of Nonaqueous Electrolytic Solution Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by covering both sides of an aluminum sheet (thickness: 40 um) with a resin layer, such that the terminals of the positive and negative electrodes protruded out of the pouch. Thereafter, the above-prepared nonaqueous electrolytic solutions were each injected into the pouch, and the pouch was subsequently vacuum-sealed, whereby laminate-type nonaqueous electrolytic solution batteries were produced.

<Evaluation of Nonaqueous Electrolytic Solution Batteries>

[Initial Conditioning]

In a 25°C thermostat chamber, each nonaqueous electrolytic solution battery produced by the above-described method was charged for 6 hours at a constant current equivalent to 0.05 C (a current value of 1 C means the current value at which charging or discharging of the battery requires one hour; the same applies below), and then discharged to 3.0 V at 0.2 C. Subsequently, the nonaqueous electrolytic solution battery was subjected to constant current-constant voltage charging (hereinafter, referred to as "CC-CV charging") up to 4.1 V at 0.2 C. The nonaqueous electrolytic solution battery was then maintained at 45°C for 72 hours to perform aging, after which the battery was discharged to 3.0 V at 0.2 C and stabilized. Thereafter, the nonaqueous electrolytic solution battery was CC-CV charged to 4.2 V at 0.2 C and then discharged to 3.0 V at 0.2 C, whereby initial conditioning was completed.

[Charged Storage Test]

After the initial conditioning, each nonaqueous electrolytic solution battery was again CC-CV charged to 4.2 V at 0.2 C and subsequently stored at a high temperature of 60°C for 2 weeks. The nonaqueous electrolytic solution battery was thoroughly cooled and then immersed in an ethanol bath to measure the volume, and the amount of generated gas was determined from the change in volume before and after the storage test and defined as "amount of gas generation during charged storage". Table 1 below shows the values of the amount of gas generation during charged storage, taking the amount of gas generation during charged storage in Comparative Example A1-1 as 100.

[Table 1]

Table 1

| | Compound | Amount wt% | Compound | Amount wt% | Amount of gas generation during charged storage |
|---|---|---|---|---|---|
| Example A1-1 | Compound 2 | 1.0 | - | - | 57 |
| Example A1-2 | Compound 3 | 0.2 | - | - | 79 |
| Example A1-3 | | 0.5 | - | - | 57 |
| Example A1-4 | | 1.0 | - | - | 37 |
| Example A1-5 | Compound 4 | 0.5 | - | - | 76 |
| Example A1-6 | | 1.0 | - | - | 65 |
| Example A1-7 | Compound 5 | 0.5 | - | - | 61 |
| Example A1-8 | | 1.0 | | | 40 |
| Example A1-9 | Compound 6 | 0.5 | - | - | 62 |
| Example A1-10 | | 1.0 | - | - | 55 |
| Example A1-11 | Compound 7 | 0.5 | - | - | 38 |
| Example A1-12 | | 1.0 | - | - | 5 |
| Example A1-13 | Compound 8 | 1.0 | - | - | 55 |
| Example A1-14 | Compound 9 | 1.0 | - | - | 40 |
| Example A1-15 | Compound 10 | 1.0 | - | - | 75 |
| Example A1-16 | Compound 11 | 1.0 | - | - | 57 |
| Example A1-17 | Compound 12 | 1.0 | - | - | 71 |
| Example A1-18 | Compound 13 | 0.5 | - | - | 60 |
| Example A1-19 | | 1.0 | - | - | 37 |
| Example A1-20 | Compound 6 | 1.0 | Compound 17 | 1.0 | 34 |

(continued)

| | Compound | Amount wt% | Compound | Amount wt% | Amount of gas generation during charged storage |
|---|---|---|---|---|---|
| Example A1-21 | Compound 6 | 1.0 | Compound 18 | 1.0 | 34 |
| Example A1-22 | Compound 8 | 1.0 | Compound 17 | 1.0 | 21 |
| Example A1-23 | Compound 10 | 1.0 | Compound 17 | 1.0 | 42 |
| Example A1-24 | Compound 10 | 1.0 | Compound 18 | 1.0 | 45 |
| Comparative Example A1-1 | - | - | - | - | 100 |
| Comparative Example A1-2 | Compound 1 | 1.0 | - | - | 91 |
| Comparative Example A1-3 | Compound 14 | 1.0 | - | - | 92 |
| Comparative Example A1-4 | Compound 16 | 1.0 | - | - | 94 |
| Comparative Example A1-5 | Compound 17 | 1.0 | - | - | 87 |
| Comparative Example A1-6 | Compound 18 | 1.0 | - | - | 99 |

From the results of Examples A1-1 to A1-24 and Comparative Examples A1-2 to A1-4, it was found possible to reduce the amount of gas generation in the nonaqueous electrolytic solution batteries produced using a nonaqueous electrolytic solution containing the polar group-containing compound according to the present embodiment than in the nonaqueous electrolytic solution batteries produced using a nonaqueous electrolytic solution containing a conventional compound.

From the results of Examples A1-1 to A1-19, it was also found that the amount of gas generation tended to be reduced as the number of SiF bonds increased in the compounds.

Further, from the results of Examples A1-9, A1-10, A1-13, A1-15, A1-20 to A1-24 and Comparative Examples A1-5 and A1-6, it was found that the amount of gas generation was reduced in those cases where the polar group-containing compound according to the present embodiment was used in combination with $LiPO_2F_2$ or $LiSO_3F$, as compared to those cases where the compound was used singly.

Moreover, from the results of Examples A1-1 to A1-19, it was found that, comparing those modes where the atoms corresponding to $Z^1$ to $Z^4$ in the respective compounds of the above-described modes were each a carbon atom, a sulfur atom, or a phosphorus atom, the amount of gas generation tended to be reduced in the modes where the atoms were carbon atoms.

<Examples B1-1 to B1-11 and Comparative Examples B1-1 to B1-4>

[Production of Positive Electrode]

The same positive electrode as that of Example A1-1 was produced.

[Production of Negative Electrode]

The same negative electrode as that of Example A1-1 was produced.

[Preparation of Nonaqueous Electrolytic Solution]

The same reference electrolytic solution 1 as that of Example A1-1 was prepared.

[Production of Nonaqueous Electrolytic Solution Batteries]

Nonaqueous electrolytic solution batteries were produced in the same manner as in Example A1-1.

<Evaluation of Nonaqueous Electrolytic Solution Batteries>

[Initial Conditioning]

In a 25°C thermostat chamber, each nonaqueous electrolytic solution battery produced by the above-described method was charged for 6 hours at a constant current equivalent to 0.05 C (a current value of 1 C means the current value at which charging or discharging of the battery requires one hour; the same applies below), and then discharged to 3.0 V at 0.2 C. Subsequently, the nonaqueous electrolytic solution battery was subjected to constant current-constant voltage charging (hereinafter, referred to as "CC-CV charging") up to 4.1 V at 0.2 C. The nonaqueous electrolytic solution battery was then maintained at 45°C for 72 hours to perform aging, after which the battery was discharged to 3.0 V at 0.2 C and stabilized. Thereafter, the nonaqueous electrolytic solution battery was CC-CV charged to 4.2 V at 0.2 C and then discharged to 3.0 V at 0.2 C, whereby initial conditioning was completed.

After the initial conditioning, the battery was CC-CV charged at 0.2 C such that the battery had a half of the initial discharge capacity. This battery was discharged at each current value of 1.0 C, 2.0 C and 3.0 C at 25°C, and the voltage was measured at a point of 5 seconds into each discharging process. An average value of the slopes of the thus obtained current-voltage straight lines at 1.0 C, 2.0 C and 3.0 C was defined as "battery internal resistance".

<Evaluation of Nonaqueous Electrolytic Solution Batteries>

[Charged Storage Test]

After the initial conditioning, each laminate-type battery was again CC-CV charged to 4.2 V at 0.2 C and subsequently stored at a high temperature of 60°C for 168 hours. The battery was thoroughly cooled, and the cell after this charged storage test was discharged to 2.5 V at 0.2 C and subsequently CC-CV charged at 0.2 C such that the cell had a half of the initial discharge capacity, and the battery internal resistance after the storage test was determined. The "internal resistance increase rate" was calculated using the following formula (X).

Internal resistance increase rate = [(Internal resistance after storage test)/(Internal resistance after initial conditioning)] × 100% (X)

Table 2 below shows the ratio of the internal resistance increase rate, taking the internal resistance increase rate in Comparative Example B1-1 as 100.

[Table 2]

Table 2

| | Compound | Amount wt% | Compound | Amount wt% | Internal resistance increase rate |
|---|---|---|---|---|---|
| Example B1-1 | Compound 2 | 1.0 | - | - | 91 |

(continued)

| | Compound | Amount wt% | Compound | Amount wt% | Internal resistance increase rate |
|---|---|---|---|---|---|
| Example B 1-2 | Compound 6 | 0.5 | - | - | 92 |
| Example B 1-3 | | 1.0 | - | - | 94 |
| Example B 1-4 | Compound 8 | 1.0 | - | - | 98 |
| Example B 1-5 | Compound 10 | 1.0 | - | - | 92 |
| Example B 1-6 | Compound 12 | 1.0 | - | - | 94 |
| Example B 1-7 | Compound 6 | 1.0 | Compound 17 | 1.0 | 84 |
| Example B 1-8 | Compound 6 | 1.0 | Compound 18 | 1.0 | 83 |
| Example B 1-9 | Compound 8 | 1.0 | Compound 17 | 1.0 | 84 |
| Example B 1-10 | Compound 10 | 1.0 | Compound 17 | 1.0 | 76 |
| Example B 1-11 | Compound 10 | 1.0 | Compound 18 | 1.0 | 83 |
| Comparative Example B 1-1 | - | - | - | - | 100 |
| Comparative Example B 1-2 | Compound 15 | 1.0 | Compound 8 | 1.0 | 111 |
| Comparative Example B 1-3 | Compound 17 | 1.0 | - | - | 96 |
| Comparative Example B 1-4 | Compound 18 | 1.0 | - | - | 92 |

From the results of Examples B1-1 to B1-11 and Comparative Example B1-2, it was found possible to inhibit an increase in the resistance during high-temperature storage in the nonaqueous electrolytic solution batteries produced using a nonaqueous electrolytic solution containing the polar group-containing compound according to the present embodiment than in the nonaqueous electrolytic solution battery produced using a nonaqueous electrolytic solution containing a conventional compound.

In addition, from the results of Examples B1-1 to B1-11, it was found that, comparing those modes where the atoms corresponding to $Z^1$ to $Z^4$ in the respective compounds of the above-described modes were each a carbon atom, a sulfur atom, or a phosphorus atom, an increase in the resistance during high-temperature storage tended to be inhibited in the modes where the atoms were carbon atoms.

Further, from the results of Examples B1-3 to B1-5 and B1-7 to B1-11 and Comparative Examples B1-3 and B1-4, it was found that an increase in the resistance during high-temperature storage was inhibited in those cases where the polar group-containing compound according to the present embodiment was used in combination with $LiPO_2F_2$ or $LiSO_3F$, as compared to those cases where the compound was used singly.

Moreover, from the results of Examples A1-1 to 1-12 shown in Table 1 and the results of Examples B1-1 to 1-3 shown in Table 2, it was found that, comparing those modes where the atoms corresponding to $Z^1$ to $Z^4$ in the respective compounds of the above-described modes were each a carbon atom, a sulfur atom, or a phosphorus atom, not only the amount of gas generation but also the internal resistance increase rate tended to be reduced in the modes where the atoms were carbon atoms.

<Examples 2-1 to 2-9 and Comparative Examples 2-1 and 2-2>

[Production of Positive Electrode]

A slurry was prepared by mixing 85% by mass of a lithium-nickel-manganese-cobalt composite oxide ($Li_{1.00}Ni_{0.34}Co_{0.33}Mn_{0.33}O_2$) as a positive electrode active material, 10% by mass of acetylene black as a conductive material, and 5% by mass of polyvinylidene fluoride (PVdF) as a binder in an N-methylpyrrolidone solvent using a disperser. This slurry was uniformly applied and dried onto both sides of a 21 um-thick aluminum foil, and this aluminum foil was subsequently pressed to produce a positive electrode.

[Production of Negative Electrode]

Si fine particles having an average particle size of 50 nm were dispersed in flake graphite having an average particle size of 35 μm, and these particles were loaded to a hybridization system (manufactured by Nara Machinery Co., Ltd.) and circulated or retained in the system for 180 seconds at a rotor rotation speed of 7,000 rpm, whereby the particles were treated to obtain a composite of Si and graphite particles. The thus obtained composite was mixed with coal-tar pitch, which was used as an organic compound yielding a carbon-based substance, such that the post-firing coverage would be 16.8%, and the resulting mixture was kneaded and dispersed using a twin-screw kneader. The thus obtained dispersion was introduced to a firing furnace and fired in a nitrogen atmosphere at 1,000°C for 3 hours. The thus obtained fired product was pulverized using a hammer mill and then passed through a sieve (45 um) to prepare a negative electrode active material. This negative electrode active material had an elemental Si content of 14.0% by mass as measured by the above-described method.

To the thus obtained negative electrode active material (negative electrode active material:graphite = 35:65, weight ratio), an aqueous dispersion of sodium carboxymethyl cellulose (concentration of sodium carboxymethyl cellulose = 1% by mass) and an aqueous dispersion of styrene-butadiene rubber (concentration of styrene-butadiene rubber = 50% by mass) were added as a thickening agent and a binder, respectively, and these materials were mixed using a disperser to prepare a slurry. This slurry was uniformly applied and dried onto one side of a 10 um-thick copper foil, which was subsequently pressed to produce a negative electrode. It is noted here that this production was carried out such that the dried negative electrode had a mass ratio (negative electrode active material:sodium carboxymethyl cellulose:styrene-butadiene rubber) of 97.5:1.5:1.

[Preparation of Nonaqueous Electrolytic Solutions]

Under a dry argon atmosphere, thoroughly-dried $LiPF_6$ was dissolved at 1.2 mol/L (in terms of the concentration in the resulting nonaqueous electrolytic solution) in a mixture of ethylene carbonate (EC), ethyl methyl carbonate (EMC), and diethyl carbonate (DEC) (volume ratio = 3:4:3), and 2.0% by mass of vinylene carbonate (VC) was further added to the resultant to prepare an electrolytic solution (hereinafter, referred to as "reference electrolytic solution 2") . In Examples 2-1 to 2-9 and Comparative Examples 2-1 to 2-3, nonaqueous electrolytic solutions were prepared by adding the respective compounds to the reference electrolytic solution 1 such that the contents thereof were as shown in Table 3 below after the preparation. It is noted here that the nonaqueous electrolytic solution of Comparative Example 2-1 is the reference electrolytic solution 2 itself. In Table 3, "Content (% by mass)" indicates the concentration in 100% by mass of each nonaqueous electrolytic solution.

[Production of Nonaqueous Electrolytic Solution Secondary Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by covering both sides of an aluminum sheet (thickness: 40 um) with a resin layer, with the terminals of the positive and negative electrodes protruding out of the pouch. Thereafter, the above-prepared nonaqueous electrolytic solutions were each injected into the pouch, and the pouch was subsequently vacuum-sealed, whereby nonaqueous electrolytic solution secondary batteries of laminate-type cell were produced.

<Evaluation of Nonaqueous Electrolytic Solution Secondary Batteries>

[Initial Conditioning]

In a 25°C thermostat chamber, each nonaqueous electrolytic solution battery produced by the above-described method was charged for 6 hours at a constant current equivalent to 0.05 C (a current value of 1 C means the current value at which charging or discharging of the battery requires one hour; the same applies below), and then discharged to 3.0 V at 0.2 C. Subsequently, the nonaqueous electrolytic solution battery was subjected to constant current-constant voltage charging (hereinafter, referred to as "CC-CV charging") up to 4.1 V at 0.2 C. The nonaqueous electrolytic solution battery was then maintained at 45°C for 72 hours to perform aging, after which the battery was discharged to 3.0 V at 0.2 C and stabilized. Thereafter, the nonaqueous electrolytic solution battery was CC-CV charged to 4.2 V at 0.2 C and then discharged to 3.0 V at 0.2 C, whereby initial conditioning was completed.

[High-Temperature Cycle Test]

After the completion of the initial conditioning, the thickness of each battery was measured using a micrometer (model: ID-C112XB, manufactured by Mitutoyo Corporation), and the cell was then subjected to 100 cycles, each of which consisted of CC-CV charging to 4.2 V at 0.5 C and subsequent discharging to 2.5 V at a constant current of 0.5 C, in a 45°C thermostat chamber. Thereafter, the thickness of the battery was measured in the same manner as in the measurement of the thickness after the completion of initial conditioning so as to determine the change in battery thickness caused by the charging-discharging cycles . It is noted here that, in Table 3 below, the ratio of the change in battery thickness in each Example is shown as "Battery Swelling", taking the change in battery thickness in Comparative Example 2-1 as 100. That is, a "Battery Swelling" value of less than 100 indicates a smaller change in battery thickness as compared to Comparative Example 2-1, whereas a "Battery Swelling" value of greater than 100 indicates a larger change in battery thickness as compared to Comparative Example 2-1.

[Table 3]

Table 3

| | Compound | Amount wt% | Battery swelling |
|---|---|---|---|
| Example 2-1 | Compound 1 | 2.0 | 39 |
| Example 2-2 | Compound 2 | 2.0 | 30 |
| Example 2-3 | Compound 3 | 2.0 | 20 |
| Example 2-4 | Compound 4 | 2.0 | 57 |
| Example 2-5 | Compound 5 | 2.0 | 60 |
| Example 2-6 | Compound 6 | 2.0 | 33 |
| Example 2-7 | Compound 7 | 2.0 | 42 |
| Example 2-8 | Compound 9 | 2.0 | 54 |
| Example 2-9 | Compound 13 | 2.0 | 69 |
| Comparative Example 2-1 | - | - | 100 |
| Comparative Example 2-2 | Compound 15 | 2.0 | 86 |

From the results of Examples 2-1 to 2-9 and Comparative Example 2-2, it was found possible to inhibit battery swelling in the nonaqueous electrolytic solution batteries produced using a nonaqueous electrolytic solution containing the polar group-containing compound according to the present embodiment than in the nonaqueous electrolytic solution battery produced using a nonaqueous electrolytic solution containing a conventional compound.

Further, from the results of Examples 2-1 to 2-7, it was found that, comparing those modes where the atoms corresponding to $Z^1$ to $Z^4$ in the respective compounds of the above-described modes were each a carbon atom, a sulfur atom, or a phosphorus atom, battery swelling tended to be inhibited in the modes where the atoms were carbon atoms.

<Examples 3-1 to 3-4 and Comparative Example 3-1>

[Production of Positive Electrode]

A slurry was prepared by mixing 95 parts by mass of a lithium-nickel-cobalt-manganese composite oxide ($Li_{1.0}Ni_{0.82}Co_{0.11}Mn_{0.07}O_2$) as a positive electrode active material, 3 parts by mass of acetylene black as a conductive material, and 2 parts by mass of polyvinylidene fluoride (PVdF) as a binder in an N-methylpyrrolidone solvent using a disperser. This slurry was uniformly applied and dried onto both sides of a 15 um-thick aluminum foil, and this aluminum foil was subsequently pressed to produce a positive electrode.

[Production of Negative Electrode]

To 97 parts by mass of natural graphite, 1 part by mass of an aqueous dispersion of sodium carboxymethyl

cellulose (concentration of sodium carboxymethyl cellulose = 1.5% by mass) and 1.5 parts by mass of an aqueous dispersion of a styrene-butadiene rubber (concentration of styrene-butadiene rubber = 50% by mass) were added as a thickening agent and a binder, respectively, and these materials were mixed using a disperser to prepare a slurry. The thus obtained slurry was applied and dried onto one side of a 10 um-thick copper foil, and this copper foil was subsequently pressed to produce a negative electrode.

[Preparation of Nonaqueous Electrolytic Solutions]

Under a dry argon atmosphere, thoroughly-dried $LiPF_6$ was dissolved as an electrolyte at 1.2 mol/L (14.8% by mass in terms of the concentration in the resulting nonaqueous electrolytic solution) in a mixture of ethylene carbonate (EC), diethyl carbonate (DEC), and ethyl methyl carbonate (EMC) (volume ratio EC:EMC:DEC = 3:4:3) . Subsequently, vinylene carbonate (VC) and fluoroethylene carbonate (FEC) were further added each in an amount of 2.0% by mass (in terms of the concentration in the resulting nonaqueous electrolytic solution) (the resultant is hereinafter referred to as "reference electrolytic solution 1") . To the thus obtained reference electrolytic solution 1, the compounds 1 to 3 were added in the respective amounts shown in Table 1 below to prepare nonaqueous electrolytic solutions. It is noted here that, in this Table, "Content (% by mass) " indicates an amount contained in a total of 100% by mass of each nonaqueous electrolytic solution.

[Production of Nonaqueous Electrolytic Solution Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by covering both sides of an aluminum sheet (thickness: 40 um) with a resin layer, such that the terminals of the positive and negative electrodes protruded out of the pouch. Thereafter, the above-prepared nonaqueous electrolytic solutions were each injected into the pouch, and the pouch was subsequently vacuum-sealed, whereby laminate-type nonaqueous electrolytic solution batteries were produced.

<Evaluation of Nonaqueous Electrolytic Solution Batteries>

[Initial Conditioning]

In a 25°C thermostat chamber, each nonaqueous electrolytic solution battery produced by the above-described method was charged for 6 hours at a constant current equivalent to 0.05 C (a current value of 1 C means the current value at which charging or discharging of the battery requires one hour; the same applies below), and then discharged to 3.0 V at 0.2 C. Subsequently, the nonaqueous electrolytic solution battery was subjected to constant current-constant voltage charging (hereinafter, referred to as "CC-CV charging") up to 4.1 V at 0.2 C. The nonaqueous electrolytic solution battery was then maintained at 45°C for 72 hours to perform aging, after which the battery was discharged to 3.0 V at 0.2 C and stabilized. Thereafter, the nonaqueous electrolytic solution battery was CC-CV charged to 4.2 V at 0.2 C and then discharged to 3.0 V at 0.2 C, whereby initial conditioning was completed.

[Charged Storage Test]

After the initial conditioning, each nonaqueous electrolytic solution battery was again CC-CV charged to 4.2 V at 0.2 C and subsequently stored at a high temperature of 60°C for 2 weeks. The nonaqueous electrolytic solution battery was thoroughly cooled and then immersed in an ethanol bath to measure the volume, and the amount of generated gas was determined from the change in volume before and after the storage test and defined as "amount of gas generation during charged storage". Table 3 below shows the values of the amount of gas generation during charged storage, taking the amount of gas generation during charged storage in Comparative Example 3-1 as 100.

[Table 4]

Table 4

| | Compound | Amount wt% | Amount of gas generation during charged storage |
|---|---|---|---|
| Example 3-1 | Compound 4 | 1.0 | 50 |

(continued)

| | Compound | Amount wt% | Amount of gas generation during charged storage |
|---|---|---|---|
| Example 3-2 | Compound 6 | 1.0 | 47 |
| Example 3-3 | Compound 7 | 1.0 | 10 |
| Example 3-4 | Compound 8 | 1.0 | 21 |
| Comparative Example 3-1 | - | - | 100 |

From the results of Examples 3-1 to 3-4 and Comparative Example 3-1, it was found possible to reduce the amount of gas generation during charged storage in the nonaqueous electrolytic solution batteries produced using a nonaqueous electrolytic solution containing the polar group-containing compound according to the present embodiment than in the nonaqueous electrolytic solution battery produced using a nonaqueous electrolytic solution containing a conventional compound.

Further, from the results of Examples 3-1 to 3-4, it was found that the compounds having a carboxylic acid ester structure tended to further reduce the amount of gas generation during charged storage.

<Examples 4-1 to 4-4 and Comparative Example 4-1>

[Production of Positive Electrode]

A slurry was prepared by mixing 95 parts by mass of a lithium-nickel-cobalt-manganese composite oxide ($Li_{1.0}Ni_{0.9}Co_{0.06}Mn_{0.04}O_2$) as a positive electrode active material, 3 parts by mass of acetylene black as a conductive material, and 2 parts by mass of polyvinylidene fluoride (PVdF) as a binder in an N-methylpyrrolidone solvent using a disperser. This slurry was uniformly applied and dried onto both sides of a 15 um-thick aluminum foil, and this aluminum foil was subsequently pressed to produce a positive electrode.

[Production of Negative Electrode]

To 97 parts by mass of natural graphite, 1 part by mass of an aqueous dispersion of sodium carboxymethyl cellulose (concentration of sodium carboxymethyl cellulose = 1.5% by mass) and 1.5 parts by mass of an aqueous dispersion of a styrene-butadiene rubber (concentration of styrene-butadiene rubber = 50% by mass) were added as a thickening agent and a binder, respectively, and these materials were mixed using a disperser to prepare a slurry. The thus obtained slurry was applied and dried onto one side of a 10 um-thick copper foil, and this copper foil was subsequently pressed to produce a negative electrode.

[Preparation of Nonaqueous Electrolytic Solutions]

Under a dry argon atmosphere, thoroughly-dried $LiPF_6$ was dissolved as an electrolyte at 1.2 mol/L (14.8% by mass in terms of the concentration in the resulting nonaqueous electrolytic solution) in a mixture of ethylene carbonate (EC), diethyl carbonate (DEC), and ethyl methyl carbonate (EMC) (volume ratio EC:EMC:DEC = 3:4:3). Subsequently, vinylene carbonate (VC) and fluoroethylene carbonate (FEC) were further added each in an amount of 2.0% by mass (in terms of the concentration in the resulting nonaqueous electrolytic solution) (the resultant is hereinafter referred to as "reference electrolytic solution 1") . To the thus obtained reference electrolytic solution 1, the compounds 1 to 3 were added in the respective amounts shown in Table 1 below to prepare nonaqueous electrolytic solutions. It is noted here that, in this Table, "Content (% by mass) " indicates an amount contained in a total of 100% by mass of each nonaqueous electrolytic solution.

[Production of Nonaqueous Electrolytic Solution Batteries]

A battery element was prepared by laminating the above-obtained positive electrode and negative electrode along with a polypropylene separator in the order of the negative electrode, the separator, and the positive electrode. This battery element was inserted into a pouch made of a laminated film obtained by covering both sides of an aluminum sheet (thickness: 40 um) with a resin layer, such that the terminals of the positive and negative electrodes protruded out of the pouch. Thereafter, the above-prepared nonaqueous electrolytic solutions were each injected into the pouch, and the pouch was subsequently vacuum-sealed, whereby laminate-type nonaqueous electrolytic solution batteries were produced.

<Evaluation of Nonaqueous Electrolytic Solution Batteries>

[Initial Conditioning]

In a 25°C thermostat chamber, each nonaqueous electrolytic solution battery produced by the above-described method was charged for 6 hours at a constant current equivalent to 0.05 C (a current value of 1 C means the current value at which charging or discharging of the battery requires one hour; the same applies below), and then discharged to 3.0 V at 0.2 C. Subsequently, the nonaqueous electrolytic solution battery was subjected to constant current-constant voltage charging (hereinafter, referred to as "CC-CV charging") up to 4.1 V at 0.2 C. The nonaqueous electrolytic solution battery was then maintained at 45°C for 72 hours to perform aging, after which the battery was discharged to 3.0 V at 0.2 C and stabilized. Thereafter, the nonaqueous electrolytic solution battery was CC-CV charged to 4.2 V at 0.2 C and then discharged to 3.0 V at 0.2 C, whereby initial conditioning was completed.

[Charged Storage Test]

After the initial conditioning, each nonaqueous electrolytic solution battery was again CC-CV charged to 4.2 V at 0.2 C and subsequently stored at a high temperature of 60°C for 2 weeks. The nonaqueous electrolytic solution battery was thoroughly cooled and then immersed in an ethanol bath to measure the volume, and the amount of generated gas was determined from the change in volume before and after the storage test and defined as "amount of gas generation during charged storage". Table 1 below shows the values of the amount of gas generation during charged storage, taking the amount of gas generation during charged storage in Comparative Example 4-1 as 100.

[Table 5]

Table 5

| | Compound | Amount wt% | Amount of gas generation during charged storage |
|---|---|---|---|
| Example 4-2 | Compound 4 | 1.0 | 59 |
| Example 4-3 | Compound 6 | 1.0 | 52 |
| Example 4-1 | Compound 7 | 1.0 | 0 |
| Example 4-4 | Compound 8 | 1.0 | 26 |
| Comparative Example 4-1 | - | - | 100 |

From the results of Examples 4-1 to 4-4 and Comparative Example 4-1, it was found possible to reduce the amount of gas generation during charged storage in the nonaqueous electrolytic solution batteries produced using a nonaqueous electrolytic solution containing the polar group-containing compound according to the present embodiment than in the nonaqueous electrolytic solution battery produced using a nonaqueous electrolytic solution containing a conventional compound.

Further, from the results of Examples 4-1 to 4-4, it was found that the compounds having a carboxylic acid ester structure tended to further reduce the amount of gas generation during charged storage.

The present invention has been described based on concrete embodiments; however, these embodiments were presented as examples and should not limit the scope of the present invention. The embodiments described herein can each be variously modified without departing from the spirit of the present invention and, where feasible, may be combined with any feature described by another embodiment.

## Claims

**1.** A nonaqueous electrolytic solution for a nonaqueous electrolytic solution battery comprising a positive electrode and a negative electrode that are capable of occluding and releasing metal ions,

wherein the nonaqueous electrolytic solution comprises a compound represented by the following Formula (1) along with an alkali metal salt and a nonaqueous solvent:

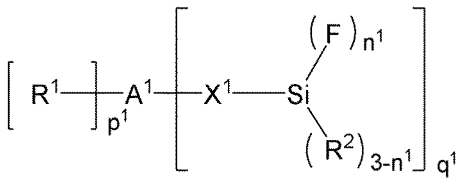

(1)

(wherein, $R^1$ represents a hydrogen atom, a halogen atom, or a monovalent hydrocarbon group optionally having a substituent; $R^2$ represents a hydrogen atom, a monovalent hydrocarbon group optionally having a substituent, or an alkoxy group optionally having a substituent; $X^1$ represents a divalent hydrocarbon group optionally having a substituent; $n^1$ represents 2 or 3; $p^1$ represents an integer of 0 to 2, $q^1$ represents an integer of 1 to 3, and $p^1 + q^1 = 2$ or 3; two of $R^1$ (s) and $X^1$ (s) are optionally bound to each other to form a ring; and $A^1$ represents a divalent or trivalent atomic group represented by the following Formula (2-1), or a trivalent atomic group represented by the following

Formula (3-1))

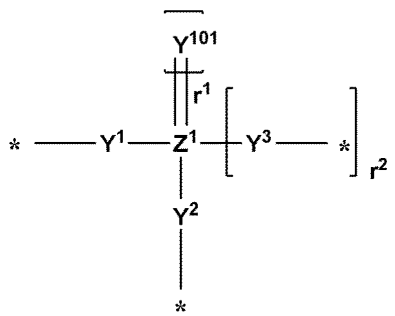

(2-1)

(wherein, $Z^1$ represents a carbon atom, a sulfur atom, a phosphorus atom, or a boron atom; $Y^{101}$ represents an oxygen atom or a sulfur atom; $Y^1$, $Y^2$, and $Y^3$ each independently represent a single bond, an oxygen atom, a sulfur atom, or an $NR^{101}$ group; $R^{101}$ represents a hydrogen atom or a monovalent hydrocarbon group; when $R^{101}$ is a monovalent hydrocarbon group, this $R^{101}$ is optionally bound to one of $R^1$ and $X^1$ in Formula (1) to form a ring;

$r^1$ is 1 when $Z^1$ is a carbon atom; 0, 1, or 2 when $Z^1$ is a sulfur atom; 0 or 1 when $Z^1$ is a phosphorus atom; or 0 when $Z^1$ is a boron atom;

$r^2$ is 0 when $Z^1$ is a carbon atom or a sulfur atom, or 1 when $Z^1$ is a phosphorus atom or a boron atom; and

* represents a binding site with $R^1$ or $X^1$ in Formula (1),

with a proviso that, when $Z^1$ is a sulfur atom and $r^1$ is 2, $Y^1$ and $Y^2$ are not single bonds simultaneously)

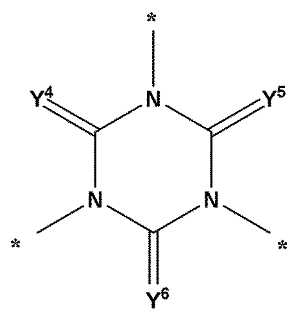

(3-1)

(wherein, $Y^4$, $Y^5$, and $Y^6$ each independently represent an oxygen atom, a sulfur atom, or $NR^{201}$; $R^{201}$ represents a hydrogen atom or a monovalent hydrocarbon group; and * represents a binding site with $R^1$ or $X^1$ in Formula (1)).

2. The nonaqueous electrolytic solution according to claim 1, wherein Formula (2-1) is the following Formula (2-2):

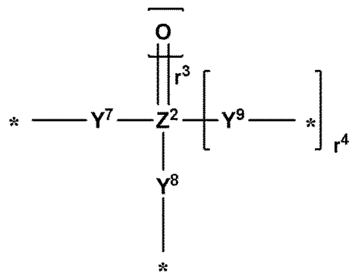

(2-2)

(wherein, $Z^2$ represents a carbon atom, a sulfur atom, or a phosphorus atom; $Y^7$, $Y^8$, and $Y^9$ each independently represent a single bond or an oxygen atom;
$r^3$ is 1 when $Z^2$ is a carbon atom; 0, 1, or 2 when $Z^2$ is a sulfur atom; or 0 or 1 when $Z^2$ is a phosphorus atom;
$r^4$ is 0 when $Z^2$ is a carbon atom or a sulfur atom, or 1 when $Z^2$ is a phosphorus atom; and
* represents a binding site with $R^1$ or $X^1$ in Formula (1),
with a proviso that, when $Z^2$ is a sulfur atom and $r^3$ is 2, $Y^7$ and $Y^8$ are not single bonds simultaneously).

**3.** The nonaqueous electrolytic solution according to claim 1 or 2, wherein Formula (3-1) is the following Formula (3-2):

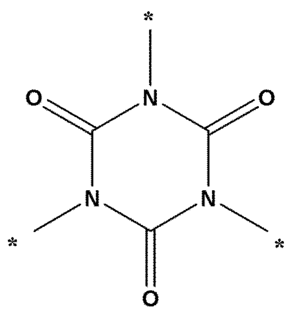

(3-2)

(wherein, * represents a binding site with $R^1$ or $X^1$ in Formula (1)).

**4.** The nonaqueous electrolytic solution according to any one of claims 1 to 3, wherein the content of the compound represented by Formula (1) is 0.001 to 10% by mass with respect to a total amount of the nonaqueous electrolytic solution.

**5.** The nonaqueous electrolytic solution according to any one of claims 1 to 4, further comprising one or more compounds selected from the group consisting of fluorophosphates, salts having an $FSO_2$ skeleton, and oxalates,
wherein a total content of the compounds is 0.001 to 5% by mass with respect to a total amount of the nonaqueous electrolytic solution.

**6.** A nonaqueous electrolytic solution battery, comprising:

a positive electrode;
a negative electrode; and
a nonaqueous electrolytic solution,
wherein the nonaqueous electrolytic solution is the nonaqueous electrolytic solution according to any one of claims 1 to 5.

**7.** The nonaqueous electrolytic solution battery according to claim 6, wherein

the positive electrode comprises a positive electrode active material, and
the positive electrode active material is a metal oxide represented by the following composition formula (13):

$$Li_{a1}Ni_{b1}M1_{c1}O_2 \qquad (13)$$

(wherein, a1, b1, and c1 represent numerical values satisfying $0.90 \leq a1 \leq 1.10$, $0.40 \leq b1 \leq 0.98$, and $0.00 \leq c1 \leq 0.50$, respectively, and satisfy $b1 + c1 = 1$; and M1 represents at least one element selected from the group

consisting of Co, Mn, Al, Mg, Zr, Fe, Ti, and Er).

**8.** The nonaqueous electrolytic solution battery according to claim 6 or 7, wherein

the negative electrode comprises a negative electrode active material capable of occluding and releasing metal ions, and
the negative electrode active material comprises a material comprising a Li-alloyable metal element and/or metalloid element.

**9.** The nonaqueous electrolytic solution battery according to claim 8, wherein the material comprising a Li-alloyable metal element and/or metalloid element is Si metal or Si oxide.

**10.** A nonaqueous electrolytic solution battery, comprising:

a positive electrode and a negative electrode that are capable of occluding and releasing metal ions; and
a nonaqueous electrolytic solution,
wherein
a negative electrode active material contained in the negative electrode comprises a material comprising a Li-alloyable metal element and/or metalloid element, and
the nonaqueous electrolytic solution comprises an alkali metal salt, a nonaqueous solvent, and a compound represented by the following Formula (4):

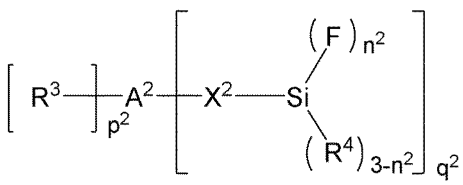

(4)

(wherein, $R^3$ represents a hydrogen atom, a halogen atom, or a monovalent hydrocarbon group optionally having a substituent; $R^4$ represents a hydrogen atom, a monovalent hydrocarbon group optionally having a substituent, or an alkoxy group optionally having a substituent; $X^2$ represents a divalent hydrocarbon group optionally having a substituent; $n^2$ represents an integer of 1 to 3; $p^2$ represents an integer of 0 to 2, $q^2$ represents an integer of 1 to 3, and $p^2 + q^2 = 2$ or 3; two of $R^3$(s) and $X^2$(s) are optionally bound to each other to form a ring; and $A^2$ represents a divalent or trivalent atomic group represented by the following Formula (5-1), or a trivalent atomic group represented by the following Formula (6-1))

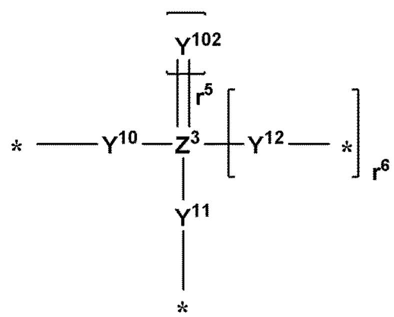

(5-1)

(wherein, $Z^3$ represents a carbon atom, a sulfur atom, a phosphorus atom, or a boron atom; $Y^{102}$ represents an oxygen atom or a sulfur atom; $Y^{10}$, $Y^{11}$, and $Y^{12}$ each independently represent a single bond, an oxygen atom, a sulfur atom, or $NR^{102}$; $R^{13}$ represents a hydrogen atom or a monovalent hydrocarbon group;
$r^5$ is 1 when $Z^3$ is a carbon atom; 0, 1, or 2 when $Z^3$ is a sulfur atom; 0 or 1 when $Z^3$ is a phosphorus atom; or 0 when $Z^3$ is a boron atom;
$r^6$ is 0 when $Z^3$ is a carbon atom or a sulfur atom, or 1 when $Z^3$ is a phosphorus atom or a boron atom; and
* represents a binding site with $R^3$ or $X^2$ in Formula (4),
with a proviso that, when $Z^1$ is a sulfur atom and $r^5$ is 2, $Y^{10}$ and $Y^{11}$ are not single bonds simultaneously)

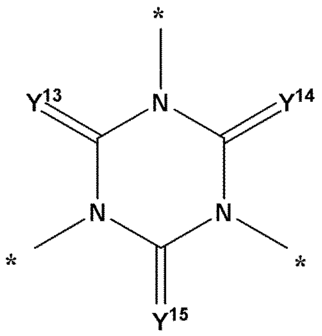

(6-1)

(wherein, $Y^{13}$, $Y^{14}$, and $Y^{15}$ each independently represent an oxygen atom, a sulfur atom, or $NR^{202}$; $R^{202}$ represents a hydrogen atom or a monovalent hydrocarbon group; and * represents a binding site with $R^3$ or $X^2$ in Formula (4)).

**11.** The nonaqueous electrolytic solution battery according to claim 10, wherein $n^2$ in Formula (4) is 2 or 3.

**12.** A compound represented by the following Formula (1-4):

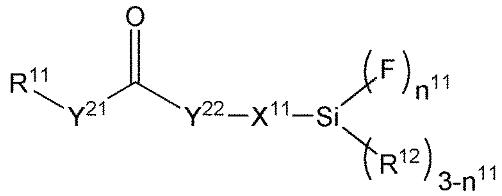

(1-4)

(wherein, $R^{11}$ represents a hydrogen atom, a halogen atom, or a monovalent hydrocarbon group optionally having a substituent; $R^{12}$ represents a hydrogen atom or a monovalent hydrocarbon group optionally having a substituent; $X^{11}$ represents a divalent hydrocarbon group having 3 or more carbon atoms and optionally having a substituent; $Y^{21}$ and $Y^{22}$ each independently represent a single bond, an oxygen atom, a sulfur atom, or $NR^{301}$; when $R^{301}$ is a monovalent hydrocarbon group, this $R^{301}$ is optionally bound to one of $R^{11}$ and $X^{11}$ to form a ring; $n^{11}$ represents 2; and two of $R^1$ and $X^{11}$ are optionally bound to each other to form a ring, with a proviso that $n^{11}$ is optionally 3 when $Y^{21}$ and $Y^{22}$ are oxygen atoms, and $R^{11}$ and $X^{11}$ are not bound to each other to form a ring) .

**13.** The compound according to claim 12, which is a compound selected from the group consisting of the following Formulae (1-4-1) to (1-4-4):

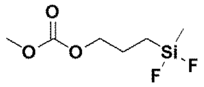

(1-4-1)

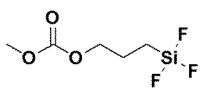

(1-4-2)

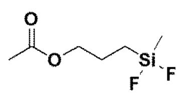

(1-4-3)

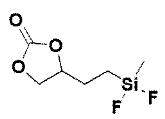

(1-4-4)

**14.** A compound represented by the following Formula (1-5):

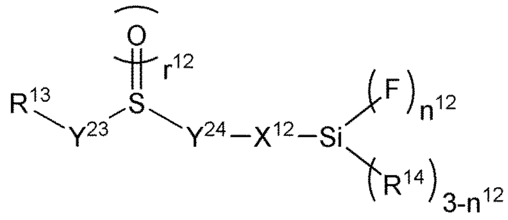

(1-5)

(wherein, $R^{13}$ represents a hydrogen atom, a halogen atom, or a monovalent hydrocarbon group optionally having a substituent; $R^{14}$ represents a hydrogen atom or a monovalent hydrocarbon group optionally having a substituent; $X^{12}$ represents a divalent hydrocarbon group having 3 or more carbon atoms and optionally having a substituent; $Y^{23}$ and $Y^{24}$ each independently represent a single bond, an oxygen atom, a sulfur atom, or $NR^{311}$; when $R^{311}$ is a monovalent hydrocarbon group, this $R^{311}$ is optionally bound to one of $R^{13}$ and $X^{12}$ to form a ring; $r^{12}$ represents 0, 1, or 2; $n^{12}$ represents 2 or 3; and two of $R^{13}$ and $X^{12}$ are optionally bound to each other to form a ring).

**15.** The compound according to claim 14, which is a compound selected from the group consisting of the following Formulae (1-5-1) and (1-5-2):

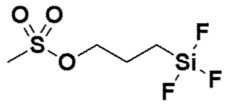

(1-5-1)

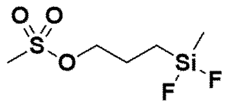

(1-5-2)

**16.** A compound represented by the following Formula (1-6):

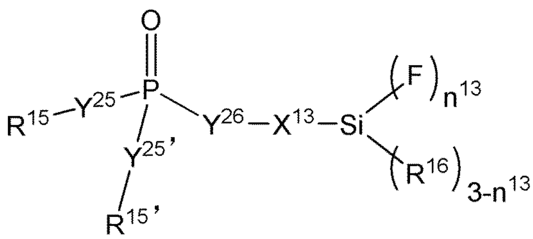

(1-6)

(wherein, $R^{15}$ and $R^{15'}$ each independently represent a hydrogen atom, a halogen atom, or a monovalent hydrocarbon group optionally having a substituent; $R^{16}$ represents a hydrogen atom or a monovalent hydrocarbon group optionally having a substituent; $X^{13}$ represents a divalent hydrocarbon group having 3 or more carbon atoms and optionally having a substituent; $Y^{25}$, $Y^{25'}$, and $Y^{26}$ each independently represent a single bond, an oxygen atom, a sulfur atom, or $NR^{321}$; $R^{321}$ represents a hydrogen atom or a monovalent hydrocarbon group; when $R^{321}$ is a monovalent hydrocarbon group, this $R^{321}$ is optionally bound to any one of $R^{15}$, $R^{15'}$, and $X^{13}$ to form a ring; $n^{13}$ represents 2 or 3; and two of $R^{15}$ and $X^{13}$ are optionally bound to each other to form a ring) .

**17.** The compound according to claim 16, which is a compound selected from the group consisting of the following Formulae (1-6-1) to (1-6-3):

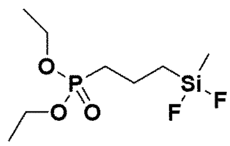

(1-6-1)

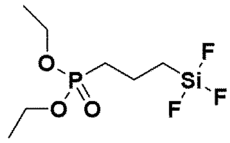

(1-6-2)

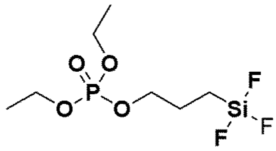

(1-6-3)

## INTERNATIONAL SEARCH REPORT

International application No.
PCT/JP2021/019078

A. CLASSIFICATION OF SUBJECT MATTER
H01M 10/0567(2010.01)i; C07F 7/12(2006.01)i; H01M 4/36(2006.01)i; H01M 4/38(2006.01)i; H01M 4/48(2010.01)i; H01M 4/505(2010.01)i; H01M 4/525(2010.01)i; H01M 10/052(2010.01)i; H01M 10/0568(2010.01)i
FI: H01M10/0567; H01M10/0568; H01M10/052; H01M4/525; H01M4/505; H01M4/36 E; H01M4/38 Z; H01M4/48; C07F7/12 N; C07F7/12 Q; C07F7/12 G CSP

According to International Patent Classification (IPC) or to both national classification and IPC

B. FIELDS SEARCHED

Minimum documentation searched (classification system followed by classification symbols)
H01M10/0567; C07F7/12; H01M4/36; H01M4/38; H01M4/48; H01M4/505; H01M4/525; H01M10/052; H01M10/0568

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | US 2015/0270574 A1 (GUANGZHOU INSTITUTE OF ENERGY CONVERSION, CHINESE ACADEMY OF SCIENCES) 24 September 2015 (2015-09-24) claims, paragraphs [0034], [0050]-[0059], embodiments | 1-12 |
| X | WO 2018/220997 A1 (HITACHI CHEMICAL CO., LTD.) 06 December 2018 (2018-12-06) example 1 | 10 |
| X | MATSUHASHI, H. et al, "Palladium Catalyzed Cross-Coupling Reaction of Functionalized Alkyltrifluorosilanes with Aryl Halides", Tetrahedron Letters, 1994, vol. 35, no. 35, pp. 6507-6510 pp. 6507-6510 | 12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 July 2021 (16.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/019078

C (Continuation). DOCUMENTS CONSIDERED TO BE RELEVANT

| Category* | Citation of document, with indication, where appropriate, of the relevant passages | Relevant to claim No. |
|---|---|---|
| A | DORONINA, E. P. et al., "(PO->Si) Chelates of Silylmethyl Derivatives of Phosphoric Acids R2P(O)ZCH2SiMe3-nHaIn (n = 1-3; Z = 0, NMe, CH2, S)", Organometallics, 2010, vol. 29, pp. 3327-3340 pp. 3327-3340 | 1-17 |

Form PCT/ISA/210 (continuation of second sheet) (January 2015)

**INTERNATIONAL SEARCH REPORT**
Information on patent family members

International application No.
PCT/JP2021/019078

| Patent Documents referred in the Report | Publication Date | Patent Family | Publication Date |
|---|---|---|---|
| US 2015/0270574 A1 | 24 Sep. 2015 | WO 2014/043981 A1<br>CN 102964372 A | |
| WO 2018/220997 A1 | 06 Dec. 2018 | US 2020/0119399 A1<br>example 1<br>EP 3637528 A1<br>CN 110679030 A<br>KR 10-2020-0012886 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017538667 W
- WO 2018220997 A
- JP 2016520647 W
- JP 2018046021 A
- JP 2009004352 A